# EUROPEAN PATENT APPLICATION

(11) **EP 4 056 749 A1**
(43) Date of publication of application: **14.09.2022**
(21) Application number: 22160962.1
(22) Date of filing: 09.03.2022
(51) Int. Cl.: D06F 39/12, D06F 58/06, D06F 58/08, D06F 37/20, D06F 37/04, D06F 58/20

(54) **LAUNDRY TREATING APPARATUS**

(30) Priority: 09.03.2021 KR 20210030675
(71) Applicant: LG Electronics Inc., SEOUL 07336 (KR)
(72) Inventor: YOON, Juhan, 08592 Seoul (KR); LEE, Manseok, 08592 Seoul (KR)
(74) Representative: Vossius & Partner Patentanwälte Rechtsanwälte mbB

(57) **Abstract**

A laundry treating apparatus includes: a cabinet (100) including a rear plate (110) at a rear surface, a drum (200) rotatably disposed inside the cabinet and configured to receive laundry, the drum including a drum rear surface (210) facing the rear plate (110), and a driver (400) coupled to the rear plate (110) and connected to the drum (200). The rear plate (110) comprises a driver mounting portion (120) coupled to the driver (400), the driver mounting portion (120) is coupled to (i) the driver (400) from a rear side of the driver mounting portion (120) and (ii) a mounting bracket (126) to cover at least a portion of the driver mounting portion (120) from a front side of the driver mounting portion, and the driver (400), the driver mounting portion (120), and the mounting bracket (126) are at least partially stacked to be coupled to each other.

## Description

### Technical Field

The present disclosure relates to a laundry treating apparatus, and more particularly, to a laundry treating apparatus including a driver connected to a drum for accommodating laundry to rotate the drum.

### Background

A laundry treating apparatus, which is an apparatus for performing various treating processes on laundry, such as washing, drying, or the like of the laundry, includes a washing machine, a dryer, a refresher (a styler), and the like.

The washing machine is constructed to perform a washing process for separating and removing foreign matters of the laundry by supplying water and detergent to the laundry. The dryers may be divided into exhaust-type dryers and circulation-type dryers. Both of the exhaust-type dryers and the circulation-type dryers are constructed to perform a drying process to remove moisture contained in the laundry by heating air and providing hot air to the laundry.

The laundry treating apparatus may include the driver for rotating a drum, and the driver may be connected to the drum in various schemes to provide a rotation force.

A conventional laundry treating apparatus can include a driver that is disposed inside and a lower portion of a cabinet and that is connected using a drum belt.

The conventional laundry treating apparatus corresponds to the dryer for drying the laundry, and includes a circulation flow channel that receives air from the drum and provides the air to the drum again, and a heat pump that is connected to the circulation flow channel to heat the air.

In the laundry treating apparatus, because a driving shaft of the driver and a rotation shaft of the drum are not located on the same line, power of the driver is provided to the drum using a separate power transmission medium such as a belt and the like.

When the driver is placed on a bottom surface of the cabinet and provides the rotation force to the drum using the belt, because a diameter difference between the driving shaft and the drum is large, a separate transmission for increasing torque, such as a reducer, may be omitted.

However, when the rotation force is provided from the driver to the drum using the belt, slip easily occurs between the belt and the driver or between the belt and the drum by a rotation speed of the driving shaft or an inertia of the drum.

Therefore, the laundry treating apparatus may be disadvantageous in terms of efficiency by the slip and the like, and is disadvantageous to apply an efficient drum rotation strategy because there may be restrictions in changing the rotation speed or a rotation direction of the driving shaft.

Furthermore, the laundry treating apparatus may be disadvantageous because there is a constraint on an arrangement of the components and there is a restriction on a space that may be allocated to each component because the driver is disposed at the same time as an air circulator and the heat pump are disposed on a base disposed at a lower portion of the cabinet, for example, at a bottom surface of the cabinet.

In one example, unlike the laundry treating apparatus, the driver may be disposed at the rear of the drum rather than at the lower portion of the cabinet and connected to the drum. In this case, a component such as the belt for connecting the driver and the drum to each other may be omitted.

A conventional laundry treating apparatus can also include the driver fixed to a rear surface of the cabinet.

The conventional laundry treating apparatus may be constructed such that the driver is disposed at the rear of the drum to rotate the drum. Therefore, the driving shaft of the driver and the rotation shaft of the drum may be positioned on the same line, so that the driver may directly rotate the drum without using the belt or the like.

Accordingly, the slip phenomenon occurring in the belt or the like may be solved and the rotation of the driving shaft may be directly transmitted to the drum, which may be advantageous in establishing the rotation strategy of the drum.

However, the laundry treating apparatus corresponds to the dryer, and unlike the washing machine, there is no tub in which the drum is embedded and water is accommodated. Thus, the driver is coupled to a rear panel of the cabinet at the rear of the drum.

Furthermore, the laundry treating apparatus may include a flow portion of air for supplying air into the drum at the rear of the drum to supply the air into the drum to dry the laundry and to supply the air smoothly into the rotating drum.

Accordingly, in the laundry treating apparatus, the air flow portion is disposed at the rear of the drum together with the driver, and it is an important task to design the rear surface of the cabinet including the driver and the air flow portion.

A conventional laundry treating apparatus can also include the driver coupled to the rear surface of the cabinet located at the rear of the drum, and the flow portion of the air that faces a rear surface of the drum and flows the air toward the rear surface of the drum is disposed.

In the conventional laundry treating apparatus, the driver is coupled onto the rear surface of the cabinet facing a center of the rear surface of the drum, and the flow portion through which the air flows is disposed around the driver.

The flow portion is constructed as a duct in which a space through which air flows is defined is coupled onto the rear surface of the cabinet, and the rear surface of the cabinet includes a plurality of holes defined forwardly of the duct to allow the air in the duct to be supplied to the rear surface of the drum.

However, because a separate duct member protruding rearwards from the rear surface of the cabinet is coupled to define the flow portion, the laundry treating apparatus is disadvantageous as additional fastening for the coupling of the duct member may be needed and air leakage between the duct member and the rear surface of the cabinet may occur.

In addition, because the plurality of holes are defined in the rear surface of the cabinet in the front of the duct member, a punching process of the cabinet must be added. Furthermore, a flow of air in a forward direction is obstructed in a region other than the hole, so that it is disadvantageous in supplying air to the rear surface of the drum.

In one example, when the driver coupled to the cabinet is disposed on the cabinet and the driver is disposed inside the cabinet, because the driver occupies the space inside the cabinet, it may be disadvantageous in securing the space inside the cabinet and using the space. When the driver is disposed outside the cabinet, an overall length from the drum to the driver is increased, which may unnecessarily increase a volume of the cabinet, and may cause problems in stable fixing, protection, and heat dissipation of the driver.

Furthermore, the driver may be coupled onto a rear plate of the cabinet located at the rear of the drum, and the rear plate may be formed in a shape of a metal panel to allow the driver to be coupled thereto and support the driver.

However, the driver may have a high load and may cause vibration. When a driving shaft of the driver and a rotation shaft of the drum are not aligned, the drum and the driver may be damaged.

Therefore, it is an important task in the present technical field to develop an air flow portion of an efficient structure for supplying air from the rear plate to the drum, effectively secure and utilize a space inside the cabinet, stably fix and protect the driver and implement a compact design, and effectively secure rigidity of a structure coupled with the driver in the rear plate and improve coupling stability of the driver.

### SUMMARY

The present disclosure is directed to a laundry treating apparatus in which a driver and a drum are directly connected to each other to effectively transmit power of the driver and to which an efficient rotation scheme of the drum can be applied.

The present disclosure is also directed to a laundry treating apparatus including an air flow portion of an efficient structure for supplying air from a rear plate into a drum.

The present disclosure is also directed to a laundry treating apparatus that effectively increases a capacity of a drum and that is implemented with a compact design including a driver disposed at the rear of the drum.

The present disclosure is also directed to a laundry treating apparatus that can stably and strongly couple a driver for rotating a drum and that can effectively protect the driver from an impact or the like.

The present disclosure is also directed to a laundry treating apparatus capable of effectively improving rigidity of a driver mounting portion in a rear plate to which a driver is coupled through a mounting bracket.

The present disclosure is also directed to a laundry treating apparatus capable of implementing an efficient coupling structure between a mounting bracket and a driver mounting portion, and effectively improving coupling stability of a driver using the mounting bracket.

According to one aspect of the subject matter described in this application, a laundry treating apparatus can include a cabinet including a rear plate at a rear surface, a drum rotatably disposed inside the cabinet and configured to receive laundry, the drum including a drum rear surface facing the rear plate, and a driver coupled to the rear plate and connected to the drum. The rear plate can comprise a driver mounting portion coupled to the driver, the driver mounting portion can be coupled to (i) the driver from a rear side of the driver mounting portion and (ii) a mounting bracket to cover at least a portion of the driver mounting portion from a front side of the driver mounting portion, and the driver, the driver mounting portion, and the mounting bracket can be at least partially stacked to be coupled to each other.

Implementations according to this aspect can include one or more of the following features. For example, the mounting bracket can comprise an integrated fastening portion coupled to the driver mounting portion and the driver, and a mounting fastening portion coupled to the driver mounting portion without being coupled to the driver.

In some implementations, the laundry treating apparatus can further comprise an integrated fastening member passing through the integrated fastening portion, the driver mounting portion, and the driver to couple the integrated fastening portion, the driver mounting portion, and the driver to each other, and a mounting fastening member spaced apart from the driver and passing through the mounting fastening portion and the driver mounting portion to couple the mounting fastening portion and the driver mounting portion to each other. In some examples, the driver can comprise a driver fastening portion coupled to the driver mounting portion by the integrated fastening member, and the integrated fastening member can pass through the driver fastening portion, the driver mounting portion, and the integrated fastening portion that are stacked on each other.

In some implementations, a distance between the mounting fastening portion and a center of the driver mounting portion can be greater than a distance between the mounting fastening portion and the integrated fastening portion. In some examples, the driver mounting portion can protrude frontward from the rear plate to define a space, and at least a portion of the driver can be inserted into the driver mounting portion from a rear side to couple to the driver mounting portion.

In some examples, the drum rear surface can comprise a driver connection portion facing the driver mounting portion and connected to the driver, the driver connection portion can protrude frontward from the drum rear surface such that a space is defined therein, and at least a portion of the driver mounting portion can be inserted into the driver connection portion from a rear side of the driver connection portion. In some implementations, the driver mounting portion can comprise a mounting side surface extending frontward from the rear plate and extending along a circumference of the driver mounting portion, and a mounting front surface connected to the mounting side surface from the front side of the driver mounting portion and coupled to the mounting bracket from the front side of the driver mounting portion and coupled to the driver from the rear side of the driver mounting portion.

In some examples, the rear plate can comprise a rear protrusion protruding rearward to define a space and configured to receive at least a portion of the drum rear surface inserted from a front side, and the driver mounting portion can protrude frontward from the rear protrusion. In some examples, the rear protrusion can comprise a rear outer circumferential surface extending rearward from the rear plate and extending along a circumference of the rear protrusion, and a rearwardly protruding surface connected to the rear outer circumferential surface from a rear side of the rear protrusion, where the mounting side surface extends frontward from the rearwardly protruding surface, and the mounting front surface is positioned in front of the rearwardly protruding surface.

In some implementations, the driver mounting portion can further comprise a mounting reinforcement portion protruding rearward from the driver mounting portion to define a space and extending along a circumferential direction of the driver mounting portion. In some examples, the mounting bracket can further comprise a mounting guide protruding toward the mounting reinforcement portion, having a shape corresponding to the mounting reinforcement portion, and inserted into the mounting reinforcement portion from a front side of the mounting reinforcement portion. In some examples, each of the mounting reinforcement portion and the mounting guide can extend in a shape of an arc with a first end and a second end spaced apart from each other.

In some examples, the driver mounting portion can include a power port connected to the driver in a spaced region between the first end and the second end of the mounting reinforcement portion. In some implementations, the mounting bracket can further comprise a bracket reinforcement portion protruding frontward from the mounting bracket and extending along a circumferential direction of the mounting bracket. In some examples, the mounting reinforcement portion can comprise a first mounting reinforcement portion and a second mounting reinforcement portion having different diameters and spaced apart from each other along a radial direction of the driver mounting portion, the mounting guide can face the first mounting reinforcement portion and can be inserted into the first mounting reinforcement portion, and the bracket reinforcement portion can face the second mounting reinforcement portion to define a space between the bracket reinforcement portion and the second mounting reinforcement portion.

In some implementations, the mounting bracket can comprise an integrated fastening portion coupled to the driver mounting portion and the driver, and the integrated fastening portion can be positioned inwardly of the bracket reinforcement portion with respect to a radial direction of the mounting bracket. In some examples, the mounting bracket can comprise a mounting fastening portion coupled to the driver mounting portion without being coupled to the driver, and the mounting fastening portion can be positioned outwardly of the bracket reinforcement portion with respect to the radial direction of the mounting bracket. In some examples, the mounting guide can be disposed outwardly of the bracket reinforcement portion, and the mounting fastening portion can be positioned inwardly of the mounting guide.

In some implementations, the drum rear surface can comprise a driver connection portion facing the driver mounting portion and connected to the driver. The driver can comprise a driving shaft extending through the driver mounting portion and the mounting bracket toward the driver connection portion, and a bearing extension surrounding the driving shaft, extending toward the driver connection portion, and including a bearing that supports the driving shaft, where the bearing extension can pass through the driver mounting portion and the mounting bracket. In some implementations, the drum rear surface can comprise a driver connection portion facing the driver mounting portion and connected to the driver, the rear plate can further comprise an air flow portion surrounding the driver mounting portion, defining a flow space configured to receive air, and defining an opening at a front surface to allow air in the flow space to move toward the drum rear surface, and the drum rear surface can further comprise an air passage surrounding the driver connection portion and configured to receive air from the air flow portion.

According to another aspect of the subject matter described in this application, a laundry treating apparatus can include a cabinet including a rear plate at a rear surface, a drum rotatably disposed inside the cabinet and configured to receive laundry, the drum including a drum rear surface facing the rear plate, and a driver coupled to the rear plate and connected to the drum. The rear plate can include a driver mounting portion coupled to the driver, the driver mounting portion can be coupled to (i) the driver from a rear side of the driver mounting portion and (ii) a mounting bracket to cover at least a portion of the driver mounting portion from a front side of the driver mounting portion, and the mounting bracket, the driver mounting portion, and the driver can receive an integrated fastening member and can be coupled with each other.

### BRIEF DESCRIPTION OF THE DRAWINGS

FIG. 1 is a diagram illustrating an exemplary laundry treating apparatus.
FIG. 2 is a diagram illustrating an internal cross-section of an exemplary laundry treating apparatus.
FIG. 3 is a diagram illustrating an exploded state of an exemplary laundry treating apparatus.
FIG. 4 is a diagram illustrating an example of a base and a rear plate.
FIG. 5 is a diagram illustrating a cross-section of an air supply in an exemplary laundry treating apparatus.
FIG. 6 is a diagram illustrating an exploded view of an example of a drum and a rear plate.
FIG. 7 is a diagram illustrating a drum in an exemplary laundry treating apparatus.
FIG. 8 is a diagram illustrating a view of a shaft cap separated from a drum rear surface.
FIG. 9 is a diagram illustrating a view of a bushing separated from a drum rear surface in FIG. 8.
FIG. 10 is a diagram illustrating a bushing in an exemplary laundry treating apparatus.
FIG. 11 is a diagram illustrating a view of a bushing coupled to a drum rear surface from the rear.
FIG. 12 is a diagram illustrating an interior of a shaft cap in an exemplary laundry treating apparatus.
FIG. 13 is a diagram illustrating a view of an air passage defined in a drum rear surface.
FIG. 14 is a diagram illustrating a view of a drum rear surface of an exemplary laundry treating apparatus from the rear.
FIG. 15 is a diagram illustrating a cross-section of a drum rear surface of an exemplary laundry treating apparatus.
FIG. 16 is a diagram illustrating an exemplary arrangement relationship of a drum, a rear plate, and a driver.
FIG. 17 is a diagram illustrating an exploded view of a rear portion of a cabinet in an exemplary laundry treating apparatus.
FIG. 18 is a diagram illustrating a rear plate in an exemplary laundry treating apparatus.
FIG. 19 is a diagram illustrating a view of a rear plate of an exemplary laundry treating apparatus from the rear.
FIG. 20 is a diagram illustrating a cross-section of a rear plate in an exemplary laundry treating apparatus.
FIG. 21 is a diagram illustrating a cross-section of rear portion of a cabinet viewed from a lateral direction in an exemplary laundry treating apparatus.
FIG. 22 is a diagram illustrating an enlarged view of an air passage and an air flow portion in FIG. 21.
FIG. 23 is a diagram illustrating an example of a rear cover coupled to a rear plate.
FIG. 24 is a diagram illustrating a view of a rear cover in an exemplary laundry treating apparatus from the rear.
FIG. 25 is a diagram illustrating a view of a rear cover in an exemplary laundry treating apparatus from the front.
FIG. 26 is a diagram illustrating an expanded circumference region of a rear protrusion of a rear plate.
FIG. 27 is a diagram illustrating an example of an air flow portion and an inlet extension of a rear plate.
FIG. 28 is a diagram illustrating an example of a fan duct coupled to a rear plate.
FIG. 29 is a diagram illustrating an example of a rear plate from which a fan duct is removed in FIG. 28.
FIG. 30 is a diagram illustrating an example of a blower inserted into an inlet extension.
FIG. 31 is a diagram illustrating a view of a blower in an exemplary laundry treating apparatus from the rear.
FIG. 32 is a diagram illustrating an example of a support insertion portion into which a blower fan support is inserted.
FIG. 33 is a diagram illustrating a view of a support insertion portion from the front.
FIG. 34 is a diagram illustrating an example of an air guide disposed in an air flow portion.
FIG. 35 is a diagram illustrating an example of an inflow guide of an air flow portion.
FIG. 36 is a diagram illustrating an example of a first outflow guide of an air flow portion.
FIG. 37 is a diagram illustrating an example of a second outflow guide of an air flow portion.
FIG. 38 is a diagram illustrating an example of a mounting bracket separated from a driver mounting portion.
FIG. 39 is a diagram illustrating a mounting bracket in an exemplary laundry treating apparatus.
FIG. 40 is a diagram illustrating an example of a bracket seating portion of a driver mounting portion.
FIG. 41 is a diagram illustrating a view of a mounting front surface of a driver mounting portion from the rear.
FIG. 42 is a diagram illustrating an example of a cross-section of a driver connection portion, a driver mounting portion, and a driver viewed from a lateral direction.
FIG. 43 is a diagram illustrating a driver in an exemplary laundry treating apparatus.
FIG. 44 is a diagram illustrating an example of a rear sealer disposed on a rear plate.
FIG. 45 is a diagram illustrating a cross-sectional view of a sealer body and a drum contact portion of a rear sealer.
FIG. 46 is a diagram illustrating an example of an inclined body providing an obtuse angle inwardly of a fixed body.
FIG. 47 is a diagram illustrating an example of an inclined body providing an obtuse angle outwardly of a fixed body.
FIG. 48 is a diagram illustrating an example of an inclined body providing an acute angle outwardly of a fixed body.
FIG. 49 is a diagram illustrating an example of a sealer penetrating portion disposed in a rear sealer.
FIG. 50 is a diagram illustrating an example of an outer sealer fixing portion disposed on a rear plate.

### DETAILED DESCRIPTION

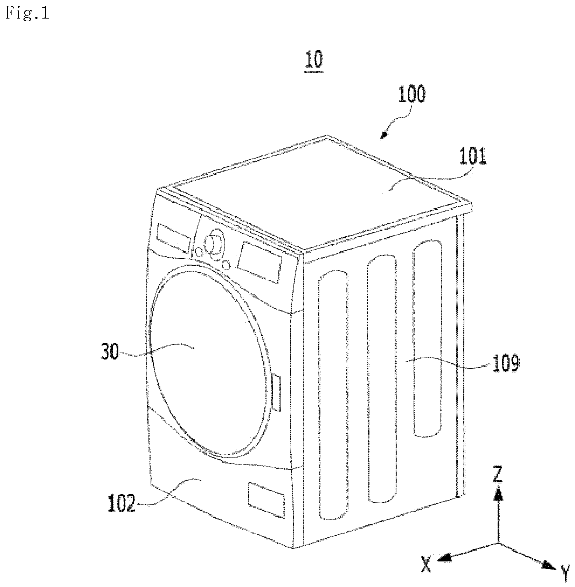

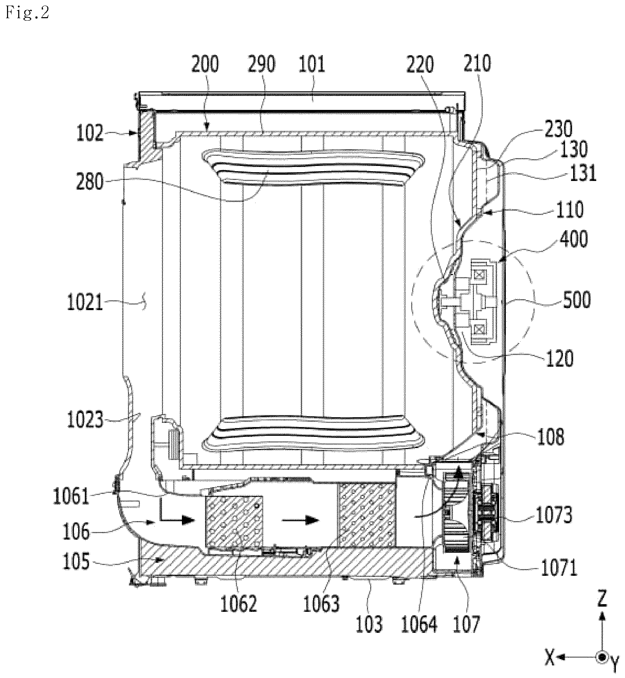

Referring to FIGS. 1 and 2, a laundry treating apparatus 10 can include a cabinet 100 that defines an appearance of the laundry treating apparatus 10.

The cabinet 100 can have a front plate 102 at a front surface thereof, side plates 109 at both surfaces in a lateral direction, respectively, a top plate 101 at a top surface thereof, a bottom plate 103 at a bottom surface thereof, and a rear plate 110 at a rear surface thereof.

The front plate 102, the side plates 109, and the rear plate 110 can be provided in a shape extending upward from the ground or the bottom plate 103 in a vertical direction.

The plates can provide a connection relationship with each other, and together provide the cabinet 100. The plates can be connected together to define a space in which a drum 200 and similar components of the laundry treating apparatus 10 are disposed.

The front plate 102 can form the front surface of the cabinet 100, and can be formed with a laundry inlet 1021 for putting laundry into the apparatus. The laundry inlet 1021 can be defined at a central portion of the front plate 102, and a laundry door 30 for opening and closing the laundry inlet can be disposed on the front plate 102.

The front plate 102 can include a control panel, and the control panel can include a manipulation unit to which a manipulation signal can be input by a user, a display capable of displaying a treating process of the laundry, and the like.

However, the control panel is not necessarily disposed on the front plate 102, and is able to be disposed on the top plate 101 or the like. In addition, a plurality of control panels can be respectively disposed on the front plate 102, the top plate 101, and the like.

The laundry treating apparatus 10 can perform a drying process of the laundry, and the manipulation unit can be configured to receive a command to perform the drying process from the user.

In some implementations, the laundry treating apparatus 10 can include a controller. The controller can be spaced apart from an interior of the control panel or from the control panel and signally connected to the control panel. The controller can be signally connected to the control panel and a driver 400 to perform the drying process of the laundry while controlling the driver 400.

The top plate 101 can define the top surface of the cabinet 100 and can shield an interior of the cabinet 100 from the top of the cabinet 100. The side plates 109 can define the both side surfaces of the cabinet 100 in the lateral direction, respectively. For example, the side plates 109 can include a first side plate defining one side surface in the lateral direction Y of the cabinet 100 and a second side plate defining the other side surface in the lateral direction of the cabinet 100.

The bottom plate 103 can define the bottom surface of the cabinet 100, and an air supply 106 and a heat pump can be disposed on the bottom plate 103. The rear plate 110 can define the rear surface of the cabinet 100, and an airflow portion 130, a driver mounting portion 120, and the like can be disposed on the rear plate 110.

In some implementations, referring to FIG. 2, the drum 200 can have a drum front surface at a front surface thereof, and a drum inlet for putting the laundry into the drum can be defined in the drum front surface.

The laundry put into the cabinet 100 through the laundry inlet 1021 defined in the front plate 102 can be put into the drum 200 through the drum inlet. The drum 200 can be formed in a shape in which an entirety of the drum front surface is opened to define the drum inlet.

A drum circumferential surface 290 surrounding an inner space of the drum 200 can be disposed at the rear of the drum front surface, and a drum rear surface 210 can be disposed at the rear of the drum circumferential surface 290. The drum rear surface 210 can have an edge coupled to the drum circumferential surface 290.

A space defined by the drum circumferential surface 290 and the drum rear surface 210 can be defined in the drum 200. The space inside the drum 200 can communicate with the outside through the drum inlet, can be surrounded by the drum circumferential surface 290, and can be shielded from the rear by the drum rear surface 210.

In some implementations, the drum 200 can be of a front loader type in which a rotation shaft extending along a front and rear direction is included and the laundry is put into the drum 200 from the front. It can be relatively easy to put and withdraw the laundry into and from the drum 200 in the front loader type compared to a top loader type.

In some implementations, the front plate 102 can rotatably support the drum 200. That is, the front plate 102 can rotatably support a front end of the drum 200. The front end of the drum 200 can be accommodated in and supported by the front plate 102.

For example, the front plate 102 can support the front end of the drum 200 from a circumference of the laundry inlet 1021 to the rear. Accordingly, the laundry inlet 1021 and the drum inlet are disposed to face each other, and the laundry inlet 1021 and the interior of the drum 200 can be in communication with each other.

In some implementations, the front plate 102 can include a gasket surrounding at least a portion of the laundry inlet 1021 by extending along a circumference of the laundry inlet 1021.

The gasket can rotatably support the front end of the drum 200, and can block or suppress air leakage to the outside between the front plate 102 and the drum inlet or between the laundry inlet 1021 and the drum inlet.

The gasket can be made of a plastic resin-based material or an elastic material, and a separate sealing member can be additionally coupled to an inner circumferential surface of the gasket.

In some implementations, a front wheel in contact with the front end of the drum 200 to rotatably support the drum 200 can be installed on the front plate 102. The front wheel can be constructed to support an outer circumferential surface of the drum inlet, and a plurality of front wheels can be disposed spaced apart from each other along the circumference of the laundry inlet 1021.

The front wheel can support the drum 200 upward from a lower portion of the front end of the drum 200, and can rotate together by rotation of the drum 200 to minimize friction.

In some implementations, air for the drying of the laundry put into the drum 200, for example, hot air heated to increase in a temperature can be supplied into the drum 200, and the air supplied into the drum 200 can be discharged out of the drum 200 again while containing moisture of the laundry.

In some implementations, the laundry treating apparatus 10 can correspond to the circulation-type laundry treating apparatus in which, after the air that is supplied into the drum 200 in the drying process of the laundry is discharged, the air is dehumidified and heated again and then is supplied into the drum 200.

For example, the laundry treating apparatus 10 can include a circulation flow channel from which the air is supplied into the drum 200, and from which the air discharged from the interior the drum 200 is and re-supplied to the drum 200 after being dehumidified and heated. The drum 200 and air supply 106 can be included on the circulation flow channel, so that the air can be circulated. The air supply 106 can be constructed to dehumidify and heat the air discharged from the drum 200 and supply the air back to the drum 200.

In some implementations, the air can be introduced into the drum 200 through the drum rear surface 210, and the air inside the drum 200 can be discharged out of the drum 200 again through the drum inlet of the drum front surface.

In some implementations, the front plate 102 can include a front duct 1023. The front duct 1023 can be disposed on the front plate 102 to deliver air discharged from the drum 200 to the air supply 106.

The front duct 1023 can be constructed to be in communication with the drum inlet or the laundry inlet 1021, and can be disposed inside the front plate 102 or can be in communication with the laundry inlet 1021 through the gasket from the outside of the front plate 102.

FIG. 2 shows the front duct 1023 disposed inside the front plate 102.

Referring to FIG. 2, the drum 200 can be connected to the drum inlet and the laundry inlet 1021 to maintain airtightness through the above-described gasket, sealing member, and the like. The front duct 1023 can be constructed to be in communication with the laundry inlet 1021 and the drum inlet such that the air discharged from the drum 200 is introduced.

The front duct 1023 can extend inside the front plate 102 to discharge air out of the front plate 102, that is, into the cabinet 100. In some implementations, the air supply 106 can be disposed inside the cabinet 100, and the air supply 106 can be connected to the front duct 1023 to receive the air discharged from the front duct 1023.

Referring to FIG. 2, the air supply 106 can be disposed inside the cabinet 100, and can be disposed on the bottom plate 103 where securing a space is relatively easy. A base 105 on which the air supply 106 or the heat pump is disposed can be disposed on top of the bottom plate 103.

The air supply 106, the heat pump, and the like can be seated on the base 105, and the base 105 can be coupled to the bottom plate 103 or formed integrally with the bottom plate 103. For example, the base 105 can correspond to the bottom plate 103 to define the bottom surface of the cabinet 100.

The air supply 106 can include an inlet duct 1061. The inlet duct 1061 can be connected to the front duct 1023 to receive the air of the front duct 1023. The inlet duct 1061 and the front duct 1023 can be separately manufactured and coupled to each other, or can be formed integrally with each other as one body.

Air introduced into the air supply 106 through the inlet duct 1061 from the front duct 1023 can be dehumidified and heated and discharged from the air supply. The air supply 106 can have some of components of the heat pump embedded therein for the dehumidification and the heating of the air.

The air introduced through the inlet duct 1061 can flow inside the air supply 106 and be discharged from the air supply 106 through an outlet duct 1064. The air supply 106 can further include a blower 107 connected to the outlet duct 1064.

The blower 107 can discharge the air to the outside of the air supply 106 while forming a flow of the air in an entirety of the circulation flow channel described above through a blower fan 1071 rotated by a blower motor 1073.

For example, the air may be introduced into the air supply 106 through the inlet duct 1061 connected to the front duct 1023, and the air passing through the interior of the air supply 106 can be dehumidified and heated, and the dehumidified and heated air can be discharged to the outside of the air supply 106 through the outlet duct 1064 and the blower 107.

In some implementations, the rear plate 110 can include the air flow portion 130 for supplying air discharged from the blower 107 to the drum rear surface 210. For example, the air supply 106 can provide the air to the drum rear surface 210 through the air flow portion 130 by discharging the air to the air flow portion 130.

The air supply 106 can further include a fan duct 108 connected to the blower 107, and the fan duct 108 can connect the blower 107 and the air flow portion 130 to each other. For example, the air discharged through the blower 107 can be supplied to the air flow portion 130 via the fan duct 108.

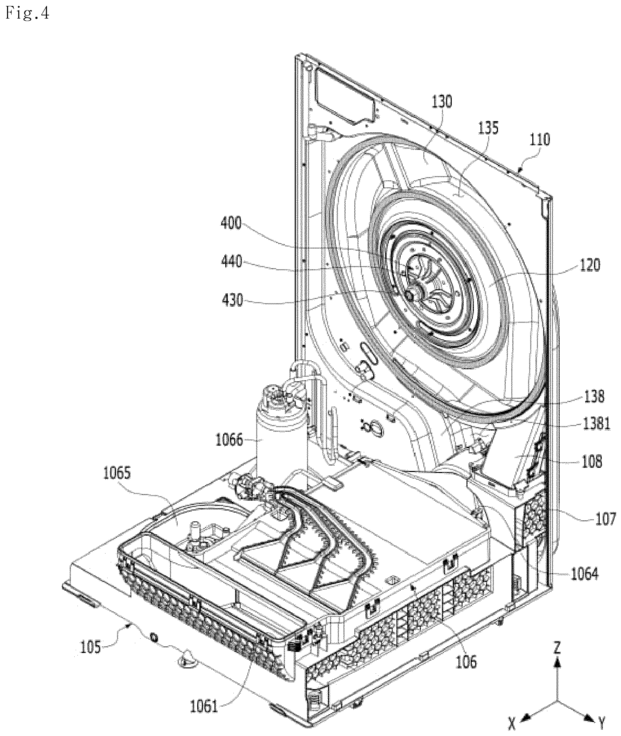

The rear plate 110 can further include an inlet extension 138 extending from the air flow portion 130 (see FIG. 4), and the air supply 106 can be connected to the inlet extension 138 to provide the air to the air flow portion 130.

In the air flow portion 130, the air supplied from the air supply 106 can flow inside and flow out toward the drum rear surface 210. The air flow portion 130 can have an open front surface 131 to allow the air to flow out frontwards. The drum rear surface 210 can have an air passage 230 to which the air flowed out from the air flow portion 130 is introduced. The air passage 230 can be constructed such that the air flowed out from the air flow portion 130 flows into and passes through the air passage 230 to be supplied into the drum 200.

Referring to FIG. 2, a circulation process of the air through the circulation flow channel will be described as follows.

When the drying process of the laundry is performed, the air flowed out from the air flow portion 130 can be supplied into the drum 200 through the air passage 230.

The air supplied into the drum 200 can be dehumidified and heated hot air, and the hot air can dry the laundry by evaporating the moisture present in the laundry inside the drum 200.

The air with increased humidity inside the drum 200 can be discharged to the outside of the drum 200 through the drum inlet, and the air flowing out of the drum 200 can be supplied to the air supply 106 through the front duct 1023.

The air supply 106 can receive the air through the inlet duct 1061 connected to the front duct 1023, and dehumidify and heat the air delivered from the drum 200 using the heat pump or similar devices.

The dehumidified and heated air of the air supply 106 flows into the fan duct 108 via the blower 107 through the outlet duct 1064, and the air flow portion 130 supplies the air introduced through the fan duct 108 back into the drum 200 through the air passage 230 of the drum 200.

The air circulation process as above can be performed continuously, low-humidity and high-temperature air can be continuously provided into the drum 200 through such process, and the moisture present in the laundry can be evaporated by the low-humidity and high-temperature air and be discharged to the outside of the drum 200 together with the air, so that the dry of the laundry can be performed.

Structures of the rear plate 110 and the drum rear surface 210 will be schematically described with reference to FIG. 2 as follows.

The rear plate 110 can include the driver mounting portion 120 and the air flow portion 130. The driver 400 can be coupled to the driver mounting portion 120, and a shape of the driver mounting portion 120 and a coupling form of the driver 400 may vary.

For example, as shown in FIG. 2, the driver mounting portion 120 can include a space open rearwards, and the driver 400 can be at least partially inserted into the driver mounting portion 120 from the rear of the driver mounting portion 120 and can be coupled to the driver mounting portion 120.

The air flow portion 130 can supply air into the drum 200 by providing the air to the drum rear surface 210. A shape of the air flow portion 130 or a providing scheme of air can vary.

For example, the air flow portion 130 can include a flow space 135 through which the air flows (see FIG. 4). As the front surface 131 is opened, the air in the flow space 135 can flow out toward the drum rear surface 210 through the open front surface 131.

In some implementations, the drum rear surface 210 can include a driver connection portion 220 and an air passage 230. The driver connection portion 220 can be connected to the driver 400 coupled to the driver mounting portion 120, so that a rotational force can be supplied from the driver 400.

A shape or a form of connection with the driver 400 of the driver connection portion 220 can vary. For example, as shown in FIG. 2, the driver connection portion 220 can be connected to the driving shaft 430 of the driver 400 to receive power from the driving shaft 430.

The driver connection portion 220 can be positioned to face the driver mounting portion 120 from the front of the driver mounting portion 120, and can be connected with the driving shaft 430 of the driver 400 extending through the driver mounting portion 120.

The air passage 230 can receive the air flowing out from the air flow portion 130. The air flowing out from the air flow portion 130 can flow through the air passage 230 and into the drum 200.

A shape of the air passage 230 or an air inflow scheme can vary. For example, as shown in FIG. 2, the air passage 230 can have a shape corresponding to at least a portion of the air flow portion 130 and can be disposed to face the air flow portion 130 from the front.

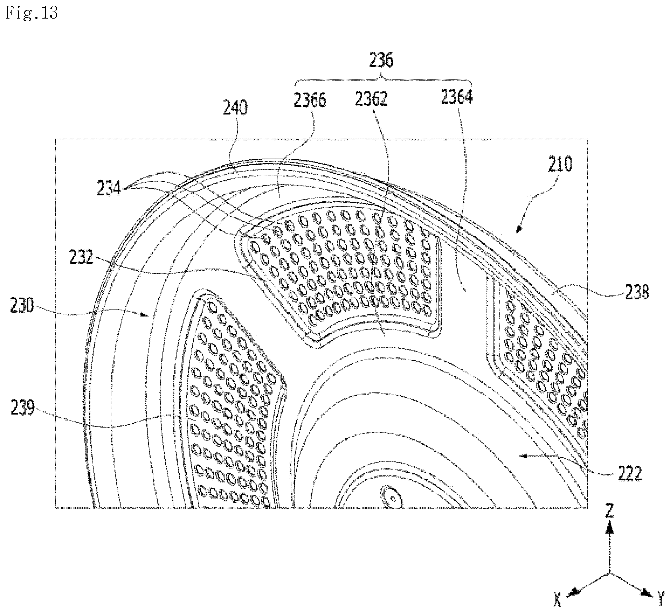

The air passage 230 can include a plurality of ventilation holes 234 for the air to pass through, and the air flowing out from the open front surface 131 of the air flow portion 130 can be supplied into the drum 200 through the ventilation holes 234 of the air passage 230 (see FIG. 13).

In some implementations, as the driver 400 rotating the drum 200 is coupled to the driver mounting portion 120 of the rear plate 110, the rotation shaft of the drum 200 and the driving shaft 430 of the driver 400 can be disposed on the same line.

Therefore, the driver 400 can rotate the drum 200 without using a connecting member such as a belt or the like, so that it is possible to actively and effectively adjust a rotation speed and a rotation direction of the drum 200 without an occurrence of a slip resulted from the belt.

In some implementations, a portion of the rear plate 110 itself can form the air flow portion 130, so that the air flow portion 130 can be effectively formed without adding a separate component for forming the air flow portion 130.

For example, the air flow portion 130 can block the air from leaking from a coupling portion between the components because the separate component is not coupled to the rear plate 110, and coupling between the components for forming the air flow portion 130 may not be required, which may be advantageous in the manufacturing process.

In some implementations, the front surface 131 of the air flow portion 130 can be formed in the open shape. Accordingly, it is possible to effectively improve flow of air from the interior of the air flow portion 130 toward the drum rear surface 210.

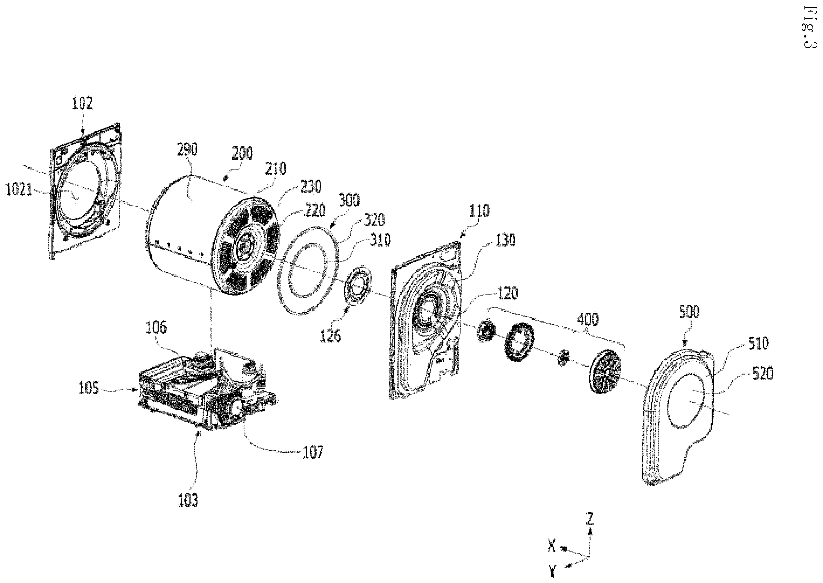

FIG. 3 is a diagram illustrating an exploded view of the laundry treating apparatus 10. With reference to FIG. 3, the components that may be included in the laundry treating apparatus 10 will be schematically described as follows.

The front plate 102 can include the laundry inlet 1021 defined at the front surface of the cabinet 100 to form a front appearance of the cabinet 100 and through which the laundry can be put into the cabinet 100.

The drum 200 can be disposed at the rear of the front plate 102, the drum 200 can rotate around a rotation shaft disposed in the front and rear direction and can have the open front surface to define the drum inlet, and the laundry put into the cabinet 100 through the laundry inlet 1021 can be put into the drum 200 through the drum inlet.

The drum 200 can include an inlet circumference surrounding the drum inlet, the drum circumferential surface 290 surrounding the interior of the drum 200 at the rear of the inlet circumference, and the drum rear surface 210 coupled to the drum circumferential surface 290 at the rear of the drum circumferential surface 290.

The rear plate 110 can be disposed at the rear of the drum 200. The rear plate 110 can be located at a rear portion of the cabinet 100 to form at least a portion of a rear appearance of the cabinet 100.

The rear plate 110 can include the air flow portion 130 for providing the air into the drum 200, and a rear sealer 300 for blocking or suppressing air leakage can be disposed between the drum rear surface 210 and the air flow portion 130.

In some implementations, the air flow portion 130 can be formed in an approximately annular shape, and the rear sealer 300 can include an inner sealer 310 and an outer sealer 320.

The inner sealer 310 can block air from leaking from an inner circumference of the air flow portion 130 to the outside of the air passage 230, and the outer sealer 320 can block air from leaking to the outside of the air passage 230 while surrounding an outer circumference of the air flow portion 130.

In some implementations, the rear plate 110 can include the driver mounting portion 120 on which the driver 400 is mounted, and a mounting bracket 126 can be coupled to the driver mounting portion 120 from the front, and the driver 400 can be coupled to the driver mounting portion 120 from the rear.

The mounting bracket 126 can be coupled to the front surface of the driver mounting portion 120 to reinforce rigidity of the driver mounting portion 120 to which the driver 400 is coupled, and can strengthen a coupling force of the driver 400 and suppress vibrations or the like that may occur from the driver 400.

When the driver 400 is directly connected to the drum 200 by being coupled to the rear plate 110, it is important that the driver 400 is stably fixed, so that the driving shaft 430 of the driver 400 and the rotation shaft of the drum 200 are aligned. Therefore, in some implementations, the mounting bracket 126 can be coupled to the front surface of the driver mounting portion 120 to reinforce the driver mounting portion 120 and to enhance the coupling force of the driver 400.

The driver 400 coupled to the driver mounting portion 120 from the rear of the driver mounting portion 120 can also form a coupling relationship with the mounting bracket 126 through the driver mounting portion 120. For example, the mounting bracket 126, the driver mounting portion 120, and the mounting bracket 126 can form a mutually fastening relationship.

The driving shaft 430 of the driver 400 can pass through the driver mounting portion 120 to be connected to the driver connection portion 220 of the drum rear surface 210. The driver 400 can include a first driving part 410 directly coupled to the driver mounting portion 120, and a second driving part 420 coupled to the first driving part 410, and the driving shaft 430 can extend forward from the first driving part 410.

In some implementations, a rear cover 500 can be disposed at the rear of the rear plate 110. The rear cover 500 can be constructed to cover at least a portion of the rear plate 110 from the rear, and can be coupled to the rear plate 110.

The rear cover 500 can form an entirety of the rear surface of the laundry treating apparatus 10, or can form the rear surface of the laundry treating apparatus 10 together with the rear plate 110 while exposing a portion of the rear plate 110.

In some implementations, the air flow portion 130 of the rear plate 110 or the driver 400 can be at least partially exposed rearwardly from the rear plate 110, and the rear cover 500 can be coupled onto the rear surface of the rear plate 110 to shield or cover the air flow portion 130 and the driver 400 from the outside.

Accordingly, in some implementations, the laundry treating apparatus 10 can suppress an occurrence of heat loss of the air resulted from heat transfer from the air flow portion 130 to the outside through the rear cover 500, and can protect or cover the air flow portion 130 from the outside. In addition, the driver 400 can be shielded or covered from the outside by the rear cover 500 and can be protected or covered from impacts or foreign matters that can be transmitted from the outside.

In some implementations, the base 105 can be disposed below the drum 200 inside the cabinet 100, and the air supply 106, the heat pump, and similar components can be disposed on the base 105.

The air supply 106 can dehumidify and heat the air discharged from the drum 200 and supply the air back into the drum 200 through the air flow portion 130. At least a portion of the heat pump can be disposed inside the air supply 106 to dehumidify and heat the air flowing through the air supply 106.

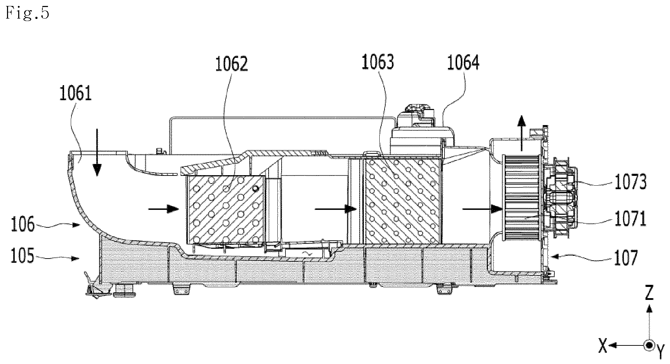

FIG. 4 is a diagram illustrating the air supply 106 of the base 105 and the air flow portion 130 of the rear plate 110 connected to each other, and FIG. 5 is a diagram illustrating a cross-section of the air supply 106.

The air supply 106 and the heat pump will be described in detail with reference to FIGS. 4 to 6 as follows.

FIG. 4 shows the base 105 disposed at the bottom surface of the cabinet 100, and shows the inlet duct 1061 connected to the front duct 1023 of the front plate 102 from the air supply 106 (see FIG. 2).

The inlet duct 1061 can be at least partially inserted into the front plate 102 or can be connected to the front duct 1023 from the outside of the front plate 102. The inlet duct 1061 can be formed integrally with the front duct 1023 or can be manufactured separately from and coupled to the front duct 1023.

The air supply 106 can be disposed on the base 105 and can have a shape extending along the front and rear direction. For example, the air supply 106 can extend from the front plate 102 to the rear plate 110 because of characteristics of the circulation flow channel.

The air supply 106 can be located on the base 105 close to one side in the lateral direction of the cabinet 100. For example, the air supply 106 can be disposed adjacent to the first side plate 109 positioned on one side in the lateral direction of the cabinet 100. The air supply 106 can be in close contact with the first side plate 109.

In some implementations, as the air supply 106 is disposed close to one side in the lateral direction, even without increasing an overall height of the cabinet 100, structural interference with the bottom of the drum 200 can be avoided and the space inside the cabinet 100 can be effectively utilized.

The air introduced into the air supply 106 can flow from the front portion to the rear portion of the cabinet 100 along the extension direction of the air supply 106. For example, the air of the air supply 106 can flow from the front plate 102 to the rear plate 110, and can flow from the front duct 1023 toward the air flow portion 130.

The air supply 106 can have the outlet duct 1064 at a rear portion thereof facing the rear plate 110, and the outlet duct 1064 can be connected to the blower 107. A shape and a form of connection with the blower 107 of the outlet duct 1064 can vary.

The blower 107 can include a blower fan housing in which the blower fan 1071 is embedded, and the blower motor 1073 connected to the blower fan 1071 to provide the rotational force. The blower fan housing can be formed in various shapes, and the blower motor 1073 can be coupled to the blower fan housing and positioned at the rear of the blower fan housing.

A motor shaft of the blower motor 1073 can be parallel to the rotation shaft of the blower fan 1071, and can be located at a center of a cross-section of an air flow channel defined inside the air supply 106. The blower fan 1071 can form a flow in which the air of the laundry treating apparatus 10 is circulated.

In some implementations, the blower motor 1073 can be inserted into the rear plate 110 from the front of the rear plate 110 and fixed inside the rear plate 110. Accordingly, a plurality of power generators for generating the rotation force, like the driver 400 and the blower motor 1073, can be disposed on the rear plate 110. For example, in some implementations, the driver 400 and the blower motor 1073 can be disposed on the rear plate 110 together.

In some implementations, the blower 107 can be connected to the outlet duct 1064 from one side, and connected to the fan duct 108 from the other side. The blower 107 can flow the air of the air supply 106 into the fan duct 108 through the blower fan 1071.

The fan duct 108 can connect the blower 107 and the air flow portion 130 to each other. The air flow portion 130 can be disposed at the rear of the drum rear surface 210 and the blower 107 can be located below the drum 200, so that the fan duct 108 can extend upwards from the blower 107 and be connected to the air flow portion 130.

In some implementations, the rear plate 110 can include the inlet extension 138 extending from the air flow portion 130, and the inlet extension 138 can include an extension space 1381 extending from a flow space 135 defined inside the air flow portion 130.

The inlet extension 138 can extend on the rear plate 110 from the air flow portion 130 toward the air supply 106. The inlet extension 138 can be opened frontwards, so that at least a portion of the blower 107 can be inserted into the extension space 1381.

For example, at least a portion of the fan duct 108 and at least a portion of the blower 107 can be located in the extension space 1381. In some implementations, at least a portion of the fan duct 108 and the blower motor 1073 can be inserted into the extension space 1381.

In some implementations, the air flow portion 130 can include the flow space 135 opened frontwards as depicted in FIG. 4. The driver mounting portion 120 can be disposed at a central portion of the air flow portion 130 formed in an annular shape.

In some implementations, the annular shape may mean a continuously extending closed curve, and a shape of a ring forming a closed cross-section inwardly. In some implementations, the annular shape may be a shape corresponding to a circumference of a polygon as well as a circle.

The driver mounting portion 120 can be penetrated by the driver 400 coupled thereto from the rear. The driver 400 can include the driving shaft 430 and a bearing extension 440 surrounding the driving shaft 430, and the driving shaft 430 and the bearing extension 440 together can extend through the driver mounting portion 120.

In some implementations, the heat pump can be disposed on the base 105. The heat pump can include a plurality of heat exchangers and a compressor 1066, so that a fluid compressed through the compressor 1066 passes through the plurality of heat exchangers to exchange heat with the outside.

Specifically, the heat pump can include a first heat exchanger 1062, a second heat exchanger 1063, and the compressor 1066 (see FIG. 5). The heat pump can contain the fluid circulating in the first heat exchanger 1062, the second heat exchanger 1063, and the compressor 1066.

FIG. 5 is a diagram illustrating the first heat exchanger 1062 and the second heat exchanger 1063 of the heat pump embedded in the air supply 106. FIG. 4 shows the compressor 1066 located outside the air supply 106.

The first heat exchanger 1062 can correspond to an evaporator in which the fluid absorbs heat from the outside, and the second heat exchanger 1063 can correspond to a condenser in which the fluid discharges heat to the outside.

The first heat exchanger 1062 and the second heat exchanger 1063 can be disposed on a flow channel along which the air flows in the air supply 106 to dehumidify and heat the air. The first heat exchanger 1062 can condense the moisture present in the air by cooling the air and remove the condensed moisture from the air, and the second heat exchanger 1063 can heat the air by providing the air with the heat released from the fluid.

In some implementations, the first heat exchanger 1062 on the air flow channel of the air supply 106 can be located upstream of the second heat exchanger 1063. For example, the first heat exchanger 1062 can be positioned in front of the second heat exchanger 1063, and the first heat exchanger 1062 can be positioned to face the inlet duct 1061.

The air introduced through the inlet duct 1061 can flow to pass through the first heat exchanger 1062. The air discharged from the interior of the drum 200 and introduced through the inlet duct 1061 can contain a large amount of moisture evaporated from the laundry.

The air introduced through the inlet duct 1061 can pass through the first heat exchanger 1062, and water vapor in the air deprived of heat by the first heat exchanger 1062 can be condensed in the first heat exchanger 1062 and changed to a form of water droplets and can be removed from the air.

The air supply 106 can deliver condensed water condensed in the first heat exchanger 1062 to a water collector 1065 disposed outside the air supply 106. For example, the water collector 1065 can store the condensed water generated in the first heat exchanger 1062 of the air supply 106.

In some implementations, the second heat exchanger 1063 can be located downstream of the first heat exchanger 1062 in the air supply 106. For example, the second heat exchanger 1063 can be located at the rear of the first heat exchanger 1062, and can be disposed to face the blower 107 or the outlet duct 1064.

The second heat exchanger 1063 can correspond to the condenser from which the heat of the fluid is discharged to the outside, and the air passing through the second heat exchanger 1063 can be heated by the second heat exchanger 1063 and flow to the blower 107.

In some implementations, as the second heat exchanger 1063 is located downstream of the first heat exchanger 1062, the air cooled and dehumidified by the first heat exchanger 1062 can be discharged from the air supply 106 in a state of being heated again through the second heat exchanger 1063.

FIG. 5 shows the blower fan 1071 of the blower 107 for discharging the air that has passed through the second heat exchanger 1063 to the outside, and shows the blower motor 1073 connected to the blower fan 1071 from the rear of the blower fan 1071. At least a portion of each of the blower fan 1071 and the blower motor 1073 can be disposed within the extension space 1381 of the inlet extension 138 described above.

Referring back to FIG. 4, the water collector 1065 in which the condensed water removed from the air through the first heat exchanger 1062 is stored according to an embodiment of the present disclosure is shown. As described above, the air supply 106 can be located on one side in the lateral direction of the base 105, and the water collector 1065 and the compressor 1066 can be disposed on the other side in the lateral direction of the base 105.

In some implementations, as the driver 400 for rotating the drum 200 is placed on the rear plate 110, compared to a case in which the driver 400 is disposed on the base 105, a space on the base 105 can be effectively secured, and a size and a capacity of the water collector 1065 can be effectively increased.

In some implementations, the compressor 1066 can be located at the rear of the water collector 1065. Accordingly, it is possible to minimize transmission of noise and vibration generated by an operation of the compressor 1066 to the user who uses the laundry treating apparatus 10 in front of the laundry treating apparatus 10.

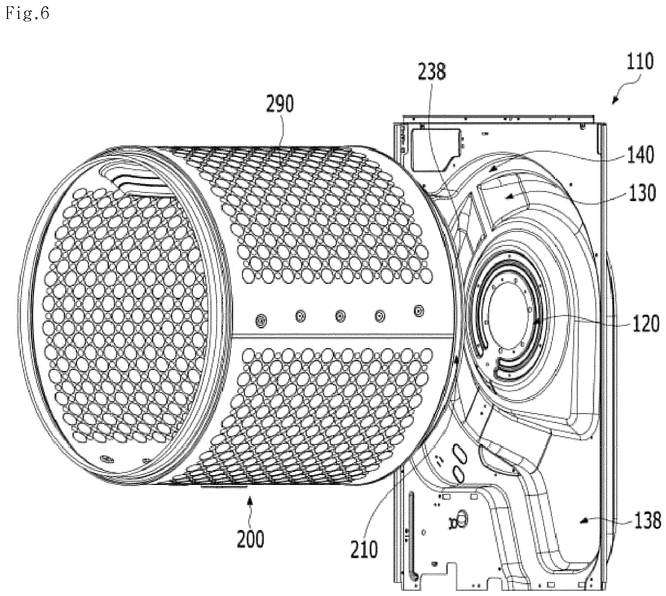

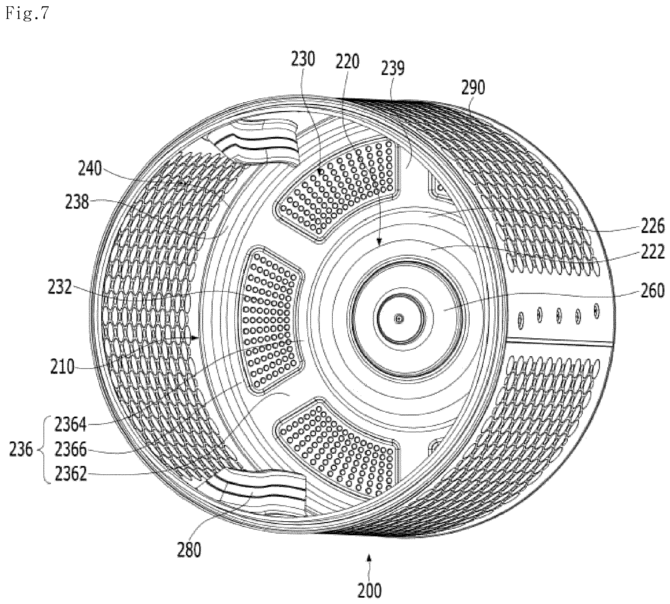

In some implementations, the drum 200 positioned in front of the rear plate 110 as depicted in FIG. 6, and FIG. 7 is a diagram illustrating a view of an interior of the drum 200 from the front.

In some implementations, the drum 200 can be located in front of the rear plate 110, and the air discharged from the air flow portion 130 of the rear plate 110 can pass through the drum rear surface 210 and be provided into the drum 200, as depicted in FIG. 6.

The drum 200 can have the drum inlet defined in the front surface thereof, and include an inlet circumference surrounding the drum inlet, and the inlet circumference can be supported by the front plate 102.

A drum circumferential surface 290 surrounding an inner space of the drum 200 can be disposed at the rear of the inlet circumference. The drum circumferential surface 290 can be formed in a cylindrical shape extending along the circumferential direction of the drum 200, and have a front end coupled to the inlet circumference, or have the front end integrally formed with the inlet circumference.

In the inner space of the drum 200 surrounded by the drum circumferential surface 290, the laundry input through the laundry inlet 1021 of the front plate 102 can be accommodated.

In some implementations, the drum rear surface 210 can be disposed at the rear of the drum circumferential surface 290. The drum rear surface 210 can be integrally formed with the drum circumferential surface 290 or manufactured separately and coupled to the drum circumferential surface 290.

The drum rear surface 210 can be constructed to shield or cover the space inside the drum 200 from the rear. The drum rear surface 210 can include the air passage 230 through which the air flowing out from the air flow portion 130 and toward the interior of the drum 200 passes, and can include the driver connection portion 220 connected to the driver 400.

In some implementations, a laundry lifter 280 for churning or lifting the laundry can be disposed inside the drum 200, as depicted in FIG. 7. The laundry lifter 280 can be disposed on an inner surface of the drum circumferential surface 290 facing toward the inside of the drum 200.

The drum 200 can extend along the front and rear direction of the cabinet 100, and the laundry lifter 280 can extend approximately parallel to the extended longitudinal direction of the drum 200. The laundry lifter 280 can include a plurality of laundry lifters disposed spaced apart from each other along the circumferential direction of the drum 200.

In some implementations, when the drum 200 rotates, an amount of movement of the laundry accommodated in the drum 200 can be increased by the laundry lifter 280, and a drying efficiency of the laundry can be effectively improved.

The drum circumferential surface 290 can have a convex portion and/or a concave portion to increase friction with the laundry. The convex portion or the concave portion can include a plurality of convex portions or concave portions and can be entirely distributed on the drum circumferential surface 290.

The air passage 230 can be formed in an annular shape and be positioned between the circumference connecting portion 240 and the driver connection portion 220 of the drum rear surface 210. The air passage 230 can include a plurality of ventilation holes 234, and have a ventilation portion 232 corresponding to a region including the ventilation holes 234. The plurality of ventilation portions 232 can be spaced apart from each other in a circumferential direction of the drum rear surface 210.

The drum rear surface 210 can have a reinforcing rib 236 for securing rigidity of the air passage 230 in which the ventilation portion 232 is formed. The reinforcing rib 236 can be formed in a protruding shape when viewed from the front, and can include a rear surface reinforcing rib 2362, an inner reinforcing rib 2364, and an outer reinforcing rib 2366.

The rear surface reinforcing rib 2362 can be disposed between adjacent two of the plurality of ventilation portions 232 and can protrude in a radial direction of the drum rear surface 210. The inner reinforcing rib 2364 can be located between the ventilation portion 232 and the rear surface central portion 220. The outer reinforcing rib 2366 can be positioned between the ventilation portion 232 and the circumference connecting portion 240 of the drum rear surface 210.

The inner reinforcing rib 2364 can be formed in an annular shape and can extend along the circumference of the driver connection portion 220 or an inner circumference of the air passage 230 facing toward the driver connection portion 220. The outer reinforcing rib 2366 can be formed in an annular shape and extend along the circumference connecting portion 240 or an outer circumference of the air passage 230 facing toward the circumference connecting portion 240.

In some implementations, the air passage 230 can be formed in a rearwardly recessed shape when viewed from the interior of the drum 200, and the driver connection portion 220 can be formed in a shape protruding toward the interior of the drum 200.

The driver connection portion 220 can be at least partially penetrated by the driving shaft 430 and be connected to the driving shaft 430. A shaft cap 260 for shielding or covering the driving shaft 430 from the interior of the drum 200 can be disposed in front of the driver connection portion 220.

The high-temperature air supplied from the air flow portion 130 can exist inside the drum 200, and the transfer of the heat inside the drum 200 to the driving shaft 430 and the driver 400 may be disadvantageous in terms of a thermal damage of components around the driver 400 and an operating efficiency of the driver 400.

In addition, the inner circumference of the air passage 230 is located outwardly of the driver 400 based on the radial direction of the drum 200, so that the air passing through the air passage 230 can flow in front of the driver 400 and inhibit the transfer of heat to the driver 400.

Thus, in some implementations, the driver connection portion 220 can be disposed in front of the driver 400 to overlap the driver 400 to suppress or block the heat inside the drum 200 from being transferred toward the driver 400.

Furthermore, the shaft cap 260 disposed inside the drum 200 in front of the driver connection portion 220 can shield or cover the driving shaft 430 from the interior of the drum 200, thereby suppressing or blocking the transfer of heat from the air to the driving shaft 430, and suppress or block the transfer of heat from the interior of the drum 200 to the driver 400 together with the driver connection portion 220.

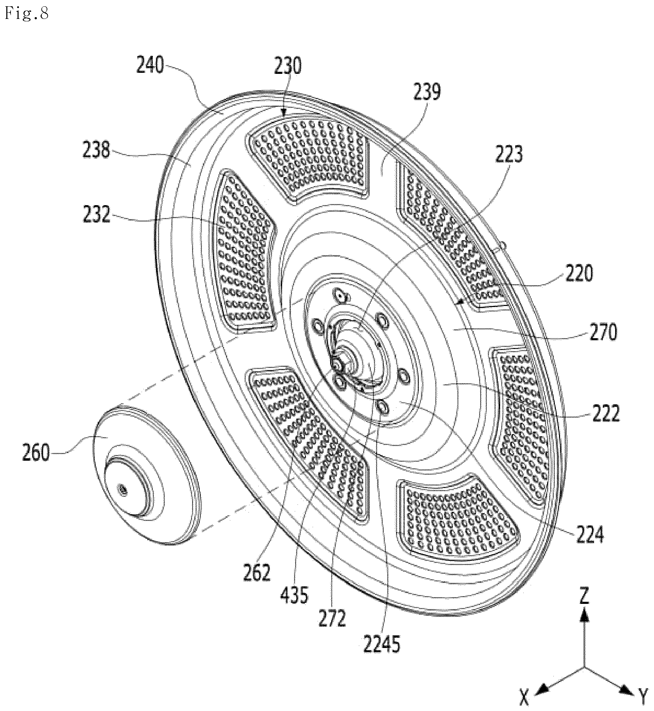

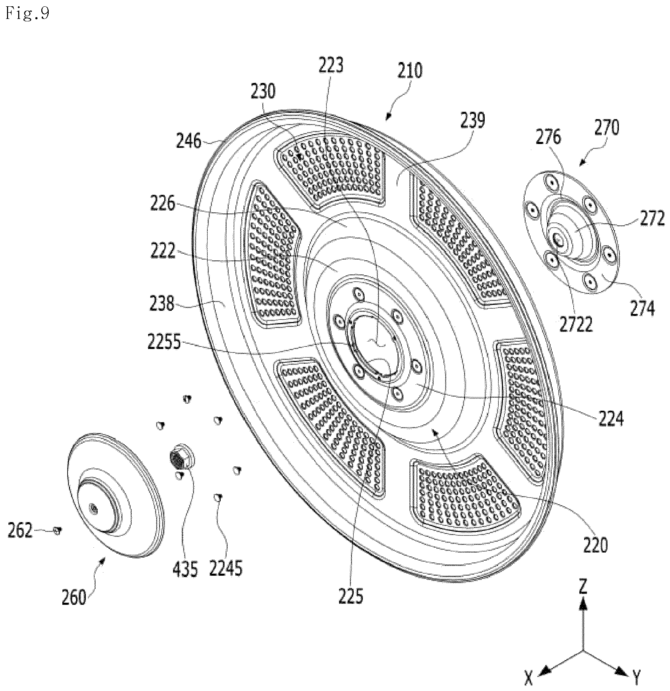

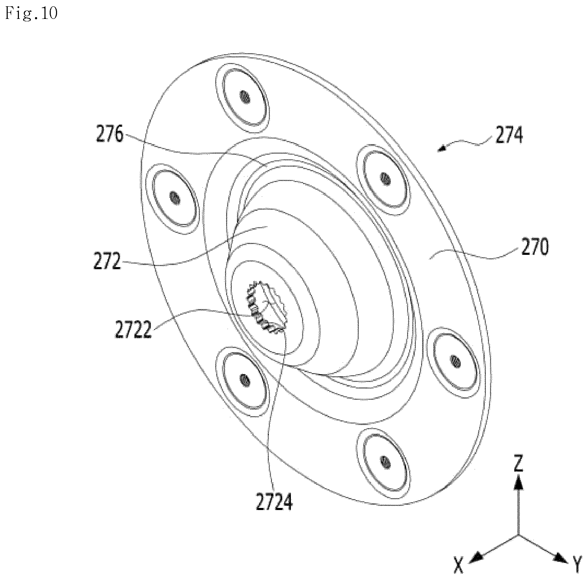

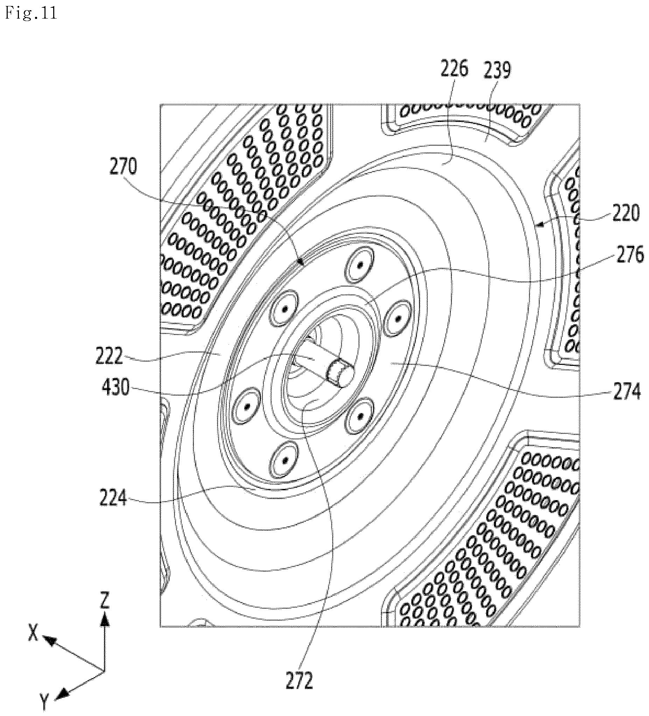

In some implementations, the shaft cap 260 is separated from the drum rear surface 210 as depicted in FIG. 8, FIG. 9 is a diagram illustrating the drum rear surface 210 from which the bushing 270 is separated in FIG. 8, FIG. 10 is a diagram illustrating the bushing 270, and FIG. 11 is a diagram illustrating a view of the bushing 270 coupled to the driver connection portion 220 from the rear.

As described above, the drum 200 can include the drum rear surface 210 facing the rear plate 110, and the drum rear surface 210 can include the driver connection portion 220 connected to the driver 400. The driver connection portion 220 can be coupled to the shaft cap 260 from the front, and can be coupled to the bushing 270 from the rear.

The driver connection portion 220 can form a coupling relationship with the driving shaft 430 of the driver 400 through the bushing 270. For example, the bushing 270 can be coupled together with the driving shaft 430 of the driver 400 and the driver connection portion 220 to connect the driving shaft 430 and the driver connection portion 220 to each other.

At least a portion of the bushing 270 can protrude frontwards while passing through the driver connection portion 220, and the front end of the driving shaft 430 passing through the bushing 270 can be located inside the drum 200. The shaft cap 260 can shield or cover the bushing 270 and the driving shaft 430 from the interior of the drum 200.

The bushing 270 can form a coupling relationship with the driving shaft 430 as at least a portion of the driving shaft 430 is inserted thereinto or passes therethrough, and can be coupled to the driver connection portion 220 at a circumference thereof to rotate together with the driver connection portion 220.

Compared with a case in which the driving shaft 430 is directly coupled to the driver connection portion 220, the bushing 270 can effectively increase a coupling area with the driver connection portion 220 and provide a stronger coupling force, thereby implementing a stable coupling structure.

In some implementations, the driver connection portion 220 can include a shaft through-hole 223 defined therein through which the bushing 270 passes, and the bushing 270 can include a shaft coupling portion 272 protruding forwardly of the driver connection portion 220 through the shaft through-hole 223 and into which the driving shaft 430 is inserted.

For example, the driver connection portion 220 can include the shaft through-hole 223 penetrated by the bushing 270. The shaft through-hole 223 can be defined in the connecting front surface 222 of the driver connection portion 220, and the shaft coupling portion 272 of the bushing 270 can pass through the shaft through-hole 223.

The shaft coupling portion 272 of the bushing 270 can extend to protrude forwardly of the driver connection portion 220 through the shaft through-hole 223. The shaft coupling portion 272 can be coupled to the driving shaft 430 as the driving shaft 430 is inserted thereinto from the rear.

For example, the driver connection portion 220 can include a connecting side surface 226 extending along an inner circumference of the air passage 230 and a connecting front surface 222 connected to the connecting side surface 226 from the front, the shaft through-hole 223 can be defined in the connecting front surface 222, and the shaft coupling portion 272 can pass through the connecting front surface 222.

In some implementations, the driver 400 can be coupled to the driver mounting portion 120 and the driving shaft 430 can extend frontwards, and at least a portion of each of the driver mounting portion 120 and the driver 400 can be inserted into the driver connection portion 220 from the rear.

However, the driver 400 may include the bearing extension 440 or the like protruding frontwards to support the driving shaft 430 extending frontwards, so that a minimum length for the driving shaft 430 to be mechanically stably disposed may be required in the driver 400.

That is, the bushing 270 may have the shaft coupling portion 272 protruding frontwards, and the driving shaft 430 extending frontwards may be inserted into and accommodated in the shaft coupling portion 272, so that stability of coupling with the driving shaft 430 can be ensured, and an overall length of the coupling structure between the drum rear surface 210 and the driver 400 can be reduced.

In addition, in the driver connection portion 220, the shaft through-hole 223 can be defined in the connecting front surface 222 such that the shaft coupling portion 272 can protrude frontwards, so that the shaft coupling portion 272 and the driving shaft 430 can be stably coupled to each other, and a rearwardly protruding distance of the driver 400 from the drum rear surface 210 can be effectively reduced.

In some implementations, the driver 400 can include the aforementioned bearing extension 440. The bearing extension 440 can extend toward the drum rear surface 210 through the driver mounting portion 120.

The bearing extension 440 can surround a portion of the driving shaft 430 and stably support the driving shaft 430 to secure mechanical rigidity of the driving shaft 430, and the bearing 442 on which the driving shaft 430 is rotatably supported can be disposed inside the bearing extension 440.

In some implementations, the bushing 270 can accommodate the bearing extension 440 inside the shaft coupling portion 272, so that an increase in an overall length of the coupling structure of the driver 400 with respect to a shaft direction of the driver 400 can be effectively prevented, and a mechanically stable structure can be implemented.

At least a portion of the shaft coupling portion 272 can increase in diameter as it approaches the rear plate 110, and can have a space into which the bearing extension 440 is inserted defined therein.

The bearing extension 440 can have the smaller length than the driving shaft 430, and can surround the rear end of the driving shaft 430. Accordingly, in the shaft coupling portion 272, there is a need to secure a space with a large diameter at the rear end thereof facing the driver 400.

Therefore, in some implementations, in the shaft coupling portion 272, a space whose diameter increases in a direction toward the driver 400 can be defined, and the driver 400 and the bearing extension 440 can be effectively inserted into and disposed in the space.

In some implementations, the shaft coupling portion 272 can include teeth 2724, and the driving shaft 430 can include a meshing portion 432. FIG. 11 shows a meshing portion 432 disposed on the shaft coupling portion 272.

The teeth 2724 can include gear teeth protruding toward the driving shaft 430, and the meshing portion 432 of the driving shaft 430 can be inserted into the teeth 2724, and can have gear teeth on an outer circumferential surface thereof to be meshed with the teeth 2724.

The teeth 2724 can be constructed to be meshed with the driving shaft 430. To this end, the gear teeth protruding toward the driving shaft 430 can be disposed on one surface of the teeth 2724 facing the driving shaft 430.

The meshing portion 432 of the driving shaft 430 can be inserted into the teeth 2724 to form a meshing relationship with the teeth 2724. The meshing portion 432 of the driving shaft 430 can include the plurality of gear teeth formed along the outer circumferential surface of the driving shaft 430.

In some implementations, as the driving shaft 430 and the shaft coupling portion 272 of the bushing 270, which correspond to a rotating body, are meshed with each other to be coupled to each other, a coupling relationship thereof in which rotations thereof are mutually restricted can be effectively formed only by inserting the driving shaft 430 into the shaft coupling portion 272 along the longitudinal direction.

In some implementations, the shaft coupling portion 272 can include a shaft coupling hole 2722 through which the driving shaft 430 passes, the teeth 2724 can be disposed on an inner circumferential surface of the shaft coupling hole 2722, a shaft fixing member 435 can be coupled to the front end of the driving shaft 430 positioned in front of the shaft coupling hole 2722, and the shaft fixing member 435 can be supported forward by the shaft coupling portion 272.

The shaft coupling hole 2722 through which the driving shaft 430 passes can be defined at the front end of the shaft coupling portion 272. For example, the driving shaft 430 can be inserted into the shaft coupling portion 272, so that the front end thereof can pass through the shaft coupling hole 2722 and be positioned in front of the shaft coupling portion 272. The driving shaft 430 can have the shaft fixing member 435 coupled to the front end thereof positioned in front of the meshing portion 432.

The shaft fixing member 435 can be supported forward by the shaft coupling portion 272. That is, the shaft fixing member 435 can have a diameter equal to or greater than that of the shaft coupling hole 2722. Accordingly, the shaft fixing member 435 can be positioned on a front end of the shaft coupling portion 272 and supported forward by the shaft coupling portion 272.

In some implementations, the shaft fixing member 435 can be coupled to the front end of the driving shaft 430 passing through the shaft coupling portion 272, and the shaft fixing member 435 can be supported forward by the shaft coupling portion 272, so that the coupling and the fixing between the driving shaft 430 and the bushing 270 become possible along the longitudinal direction of the driving shaft 430.

In addition, as the shaft fixing member 435 is coupled to the front end of the driving shaft 430 and supported forward by the shaft coupling portion 272, an influence of the thrust generated on the driving shaft 430 can be effectively offset.

In some implementations, the bushing 270 can include a drum coupling portion 274, and the drum coupling portion 274 can extend along the circumference of the shaft coupling portion 272 and be coupled to the rear surface central portion 220 at the rear of the rear surface central portion 220.

The drum coupling portion 274 can surround the shaft coupling portion 272. That is, the drum coupling portion 274 can be formed in the annular shape to surround the shaft coupling portion 272, and the shaft coupling portion 272 can be formed in a shape protruding frontwards from the drum coupling portion 274.

In some implementations, as the driving shaft 430 and the drum rear surface 210 are connected to each other through the drum coupling portion 274 of the bushing 270, the bushing 270 can provide a larger coupling area than the driving shaft 430 or the shaft coupling portion 272 through the drum coupling portion 274, so that it is possible to effectively increase the coupling force and improve the structural stability.

In some implementations, the rear surface central portion 220 can include a bushing coupling portion 224 surrounding the shaft through-hole 223 and to which the drum coupling portion 274 is coupled. The bushing coupling portion 224 can protrude frontwards from the rear surface central portion 220, and the drum coupling portion 274 can be inserted into the bushing coupling portion 224 from the rear.

The bushing coupling portion 224 can be constructed such that the drum coupling portion 274 is seated on a rear surface thereof. The bushing coupling portion 224 can be disposed on the connecting front surface 222 of the rear surface central portion 220. The bushing coupling portion 224 can surround the shaft through-hole 223 defined in the connecting front surface 222.

A shape of the bushing coupling portion 224 can correspond to that of the drum coupling portion 274. For example, the bushing coupling portion 224 can be formed in the annular shape corresponding to the drum coupling portion 274, so that the drum coupling portion 274 can be seated thereon from the rear.

The bushing coupling portion 224 can protrude frontwards from the connecting front surface 222. That is, the bushing coupling portion 224 can be formed in a shape recessed frontwards from the connecting front surface 222 when viewed from the rear. FIG. 11 shows the bushing coupling portion 224 recessed frontwards from the connecting front surface 222 viewed from the rear.

In some implementations, as the bushing coupling portion 224 protruding frontwards from the connecting front surface 222 is disposed, the drum coupling portion 274 of the bushing 270 can be stably seated on the connecting front surface 222, and the coupling force can be improved, which can be advantageous.

A coupling scheme of the drum coupling portion 274 and the bushing coupling portion 224 can be varied. For example, the drum coupling portion 274 can include a hook and can be coupled to the bushing coupling portion 224 in a hook scheme, or can be coupled to the bushing coupling portion 224 through a bushing fastening member 2245.

In some implementations, the shaft cap 260 can shield or cover at least a portion of the driver connection portion 220 from the front of the driver connection portion 220 as described above.

For example, the shaft cap 260 can be constructed to shield or cover an entirety of the rear surface central portion 220 from the interior of the drum 200, to shield or cover an entirety of the connecting front surface 222, or to shield or cover a portion of the connecting front surface 222.

For example, the shaft cap 260 can cover the shaft coupling portion 272 and the bushing coupling portion 224 to shield the shaft coupling portion 272 of the bushing 270 protruding through the shaft through-hole 223 and the bushing coupling portion 224 disposed on the connecting front surface 222 from the interior of the drum 200.

As described above, in some implementations, the high-temperature air may be supplied from the interior of the drum 200, and the rear surface central portion 220 and the driver mounting portion 120 can be positioned in front of the driver 400 to block the heat inside the drum 200 from being transferred to the driver 400.

Further, in some implementations, the front end of the driving shaft 430 or the shaft coupling portion 272 of the bushing 270 can be located inside the drum 200, and thus, there is room for direct exposure to the high-temperature air inside the drum 200. The shaft cap 260 can shield the rear surface central portion 220 from the front of the rear surface central portion 220 to effectively suppress or block the heating of the driving shaft 430 or the shaft coupling portion 272 by the high-temperature air.

In some implementations, the shaft cap 260 can be disposed in front of the rear surface central portion 220 to shield the shaft coupling portion 272 from the interior of the drum 200.

That is, the shaft cap 260 can cover the shaft coupling portion 272 inside the drum 200 to block the high-temperature air inside the drum 200 from directly being in contact with the shaft coupling portion 272.

In some implementations, the shaft coupling portion 272 and the shaft fixing member 435 may be located inside the drum 200, so that there is a possibility to cause damage to the laundry when in contact with the laundry accommodated inside the drum 200. Therefore, in some implementations, the shaft coupling portion 272 is separated from the interior of the drum 200 using the shaft cap 260, so that it is possible to effectively reduce the damage to laundry and the like resulted from the contact between the laundry and the shaft coupling portion 272.

In some implementations, the laundry treating apparatus 10 can include the bushing fastening member 2245 for fastening the bushing coupling portion 224 and the drum coupling portion 274 to each other by penetrating both the bushing coupling portion 224 and the drum coupling portion 274. The shaft cap 260 can shield or cover the bushing fastening member 2245 from the interior of the drum 200.

The bushing fastening member 2245 can penetrate both the bushing coupling portion 224 and the drum coupling portion 274 together to couple both to each other. For example, the bushing fastening member 2245 can be formed in a shape of a bolt or the like and penetrate at least one of the bushing coupling portion 224 and the drum coupling portion 274.

A portion of the bushing fastening member 2245 can be exposed forwardly of the drum coupling portion 274 and can be supported on the front surface of the drum coupling portion 274. A portion of the bushing fastening member 2245 disposed inside the drum 200 may cause the damage to the laundry when being in contact with the laundry accommodated inside the drum 200.

Accordingly, in some implementations, the shaft cap 260 covers not only the shaft coupling portion 272, but also the bushing fastening member 2245, thereby blocking the contact between the laundry and the bushing fastening member 2245 inside the drum 200 and reducing the damage to the laundry.

In some implementations, the laundry treating apparatus 10 can include a cap fastening member 262. The cap fastening member 262 can pass through the shaft cap 260 and be inserted into the driving shaft 430 to fasten the shaft cap 260 to the driving shaft 430.

The front end of the driving shaft 430 can be located at a center of the shaft cap 260, and the cap fastening member 262 can be inserted into and coupled to the front end of the driving shaft 430 through the center of the shaft cap 260. The cap fastening member 262 can be formed in the shape of the bolt or the like and can be screwed to the front end of the driving shaft 430 through the shaft cap 260.

In some implementations, the shaft cap 260 is coupled to the driving shaft 430 through the cap fastening member 262, so that the driving shaft 430 that provides the rotational force based on the drum 200 and the shaft cap 260 can be directly coupled to each other, and the rotations of the shaft cap 260, the drum 200, and the driving shaft 430 are mutually restricted when the drum 200 rotates to block the relative rotation of the shaft cap 260.

In some implementations, the rear surface central portion 220 can have a hook fastening portion 2255 on a shaft circumference 225 surrounding the shaft through-hole 223, and the shaft cap 260 can include a cap hook 264 inserted into the shaft through-hole 223 and coupled to the hook fastening portion 2255.

The hook fastening portion 2255 can be disposed on the shaft circumference 225 of the shaft through-hole 223. That is, the hook fastening portion 2255 can be disposed on the inner circumferential surface of the shaft through-hole 223, and the hook fastening portion 2255 can be disposed on the shaft circumference 225 surrounding the shaft through-hole 223 in the connecting front surface 222. The hook fastening portion 2255 can be disposed on the inner circumferential surface of the bushing coupling portion 224 surrounding the shaft through-hole 223.

The cap hook 264 can extend from the shaft cap 260 toward the hook fastening portion 2255 to be coupled to the hook fastening portion 2255. The cap hook 264 can be disposed on the circumference of the shaft cap 260 or can be disposed on the inner surface of the shaft cap 260 facing the driving shaft 430 to extend toward the hook fastening portion 2255.

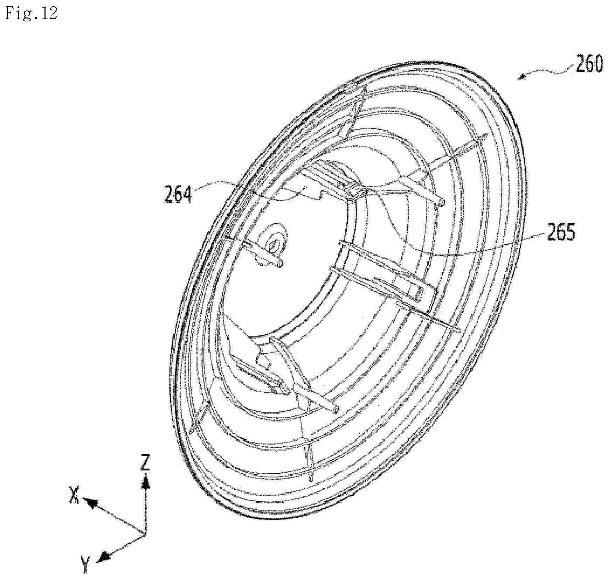

FIG. 12 is a diagram illustrating the cap hook 264 that extends rearwards from the inner surface of the shaft cap 260 and that is fastened to the hook fastening portion 2255. The cap hook 264 can extend from the interior of the shaft cap 260 toward the hook fastening portion 2255, and a hook protrusion 265 protruding radially outward of the shaft cap 260 or the shaft circumference 225 can be disposed at an end of the cap hook 264 facing the hook fastening portion 2255.

In some implementations, the bushing 270 can include the bushing recessed portion 276 that is recessed rearwards between the shaft coupling portion 272 and the drum coupling portion 274. The bushing recessed portion 276 can be formed on the drum coupling portion 274, and can be formed in the annular shape.

The bushing recessed portion 276 can be recessed rearward than the drum coupling portion 274 to define a space that is open forwardly. In addition, the shaft circumference 225 can protrude frontwards from the bushing coupling portion 224 to define a space rearwardly.

The bushing recessed portion 276 can be defined at a position forwardly facing the shaft circumference 225. That is, the bushing recessed portion 276 and shaft circumference 225 can define a space therebetween together, and the hook protrusion 265 of the cap hook 264 can be placed within the space defined by the bushing recessed portion 276 and the shaft circumference 225.

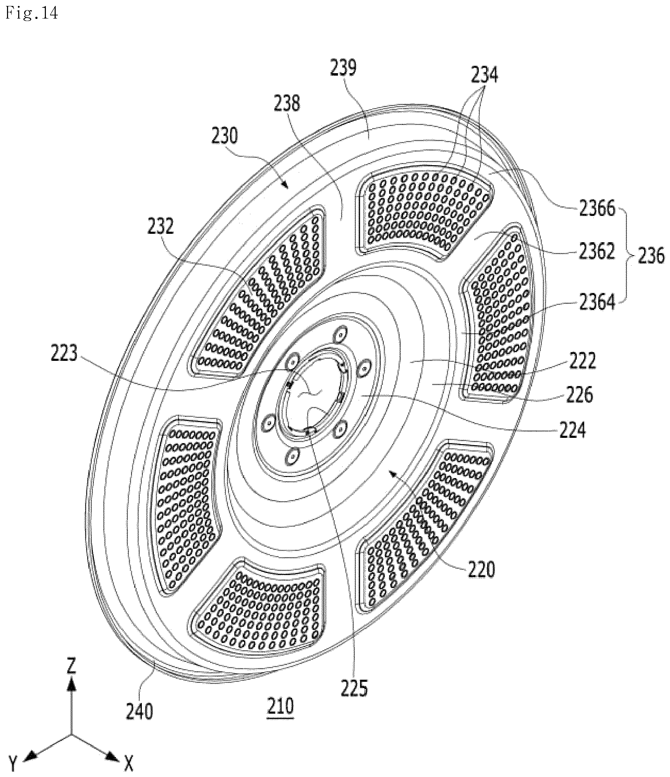

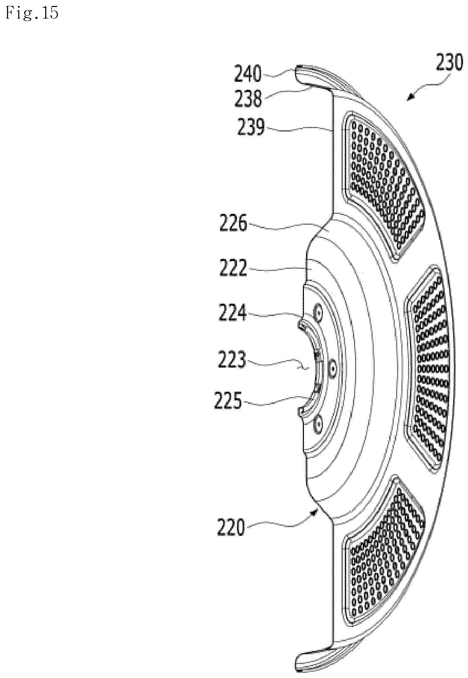

FIG. 13 is a diagram illustrating the air passage 230, FIG. 14 is a diagram illustrating a view of the drum rear surface 210 viewed from the rear, and FIG. 15 is a diagram illustrating a cross-section of the drum rear surface 210.

With reference to FIGS. 13 to 15, the drum rear surface 210 of the drum 200 in will be described in detail as follows.

Referring to FIG. 13, in some implementations, the air passage 230 can protrude rearwards from the drum rear surface 210, the ventilation portion 232 can protrude rearwards from the air passage 230, and the driver connection portion 220 can protrude frontwards from the drum rear surface 210.

When viewing the drum rear surface 210 from the front, the air passage 230 can be defined in a form recessed rearwards from the front surface of the drum rear surface 210, and the ventilation portion 232 can be defined in a shape recessed rearwards from the front surface 131 of the air passage 230.

In some implementations, as the air passage 230 protrudes rearwards from the drum rear surface 210, the inner space of the drum 200 can be effectively increased, and a separation distance from the open front surface 131 of the air flow portion 130 can be effectively reduced, so that it may be advantageous to receive air from the air flow portion 130.

In addition, the ventilation portion 232 can protrude rearwards from the air passage 230 to be positioned closer to the open front surface 131 of the air flow portion 130, which may be advantageous in the introduction of the air from the air flow portion 130.

FIG. 14 shows that, in some implementations, the air passage 230 protrudes rearwards from the drum rear surface 210, the ventilation portion 232 protrudes rearwards from the air passage 230, and the driver connection portion 220 is recessed forwardly of the drum rear surface 210 to define a space therein.

In some implementations, as described above, the air passage 230 can include the reinforcing rib 236, and the reinforcing rib 236 can be disposed to surround the ventilation portion 232 to reinforce the rigidity of the air passage 230.

The reinforcing rib 236 can have a shape protruding frontwards in a relationship with the ventilation portion 232. That is, the reinforcing rib 236 can protrude frontwards in a relative relationship with the ventilation portion 232. The reinforcing rib 236 can be formed in a shape relatively protruding frontwards as the ventilation portion 232 is recessed rearwards from the air passage 230, or can be formed in a shape protruding frontwards from the air passage 230 separately from the ventilation portion 232.

In some implementations, as described above, the reinforcing rib 236 can include the inner reinforcing rib 2364, the rear surface reinforcing rib 2362, and the outer reinforcing rib 2366. Each of the plurality of ventilation portions 232 defined in the air passage 230 can be surrounded by inner reinforcing ribs 2364, the rear surface reinforcing ribs 2362, and the outer reinforcing ribs 2366.

FIG. 13 shows that the inner reinforcing rib 2364, the rear surface reinforcing rib 2362, and the outer reinforcing rib 2366 are connected to each other to surround the ventilation portion 232. However, the shape of the reinforcing rib 236 may not be necessarily limited thereto, and a protrusion height, an arrangement, and a connection relationship may vary as needed.

The structure of the drum rear surface 210 will be described in detail with reference to FIG. 15 as follows.

As described above, the drum rear surface 210 can include the circumference connecting portion 240 connected to the drum circumferential surface 290, and the air passage 230 can extend rearwards from the circumference connecting portion 240. That is, the air passage 230 can be located at the rear of the circumference connecting portion 240.

The air passage 230 can protrude rearwards from the circumference connecting portion 240. The air passage 230 can include a passage outer circumferential surface 238 extending rearwards from the circumference connecting portion 240 and extending along a circumferential direction of the drum 200, and can include an air passage surface 239 connected to the passage outer circumferential surface 238 from the rear.

The passage outer circumferential surface 238 can extend from the circumference connecting portion 240 toward the rear plate 110, and at least a portion thereof can be inserted into the rear plate 110. At least a portion of the air passage surface 239 can face the open front surface 131 of the air flow portion 130 from the front, and the air can be transferred from the air flow portion 130.

The air passage surface 239 can be located at the rear of the circumferential surface of the drum 200 to shield or cover the open front surface 131 of the air flow portion 130. The passage outer circumferential surface 238 and the air passage surface 239 can extend from the circumference connecting portion 240 to be integrally formed together as one body.

The air passage 230 can be defined as a portion of the drum rear surface 210 is bent or curved rearwards. For example, the air passage 230 can be defined by molding the drum rear surface 210 such that a circumference thereof protrudes rearwards through a pressing method or the like.

In some implementations, the air passage 230 is defined as a portion of the drum rear surface 210, which is advantageous in terms of a manufacturing process because the air passage 230 is not separately manufactured, and is advantageous in terms of airtightness because there is no coupling line through which the air leaks from the air passage 230.

In some implementations, the ventilation portion 232 can protrude rearwards from the air passage surface 239 when viewed from the rear, and can be recessed rearwards from the air passage surface 239 when viewed from the front. Because the ventilation portion 232 can be located closer to the flow recessed surface 132 than to the air passage surface 239, it may be advantageous for the air flowing through the flow space 135 of the air flow portion 130 to be introduced into the ventilation portion 232.

The ventilation portion 232 can be defined as at least a portion of the air passage surface 239 is bent or curved to protrude rearwards. That is, the ventilation portion 232 can be molded integrally with the air passage surface 239, which is advantageous in terms of a manufacturing process and is advantageous because there is no coupling line.

In some implementations, as described above, the air passage 230 can be formed in an annular shape and can protrude rearwards from the drum rear surface 210. Therefore, the air passage 230 can include an outer circumferential surface that protrude rearwards from the drum rear surface 210 and an inner circumferential surface.

The air passage 230 can have an outer circumference formed by the aforementioned passage outer circumferential surface 238, and can have an inner circumference formed by the connecting side surface 226 of the driver connection portion 220. That is, the inner circumference of the air passage surface 239 can be connected to the connecting side surface 226 of the driver connection portion 220.

The connecting side surface 226 of the driver connection portion 220 can extend frontwards from the inner circumference of the air passage surface 239, and can extend along the circumference of the driver connection portion 220. That is, the connecting side surface 226 can form the inner circumferential surface of the air passage 230, and can be formed in an annular shape to surround the space inside the driver connection portion 220.

The connecting front surface 222 can be connected to the connecting side surface 226 from the front. The connecting front surface 222 and the air passage surface 239 can be formed in a flat plate shape and can be disposed in parallel with each other. However, the specific shapes of the connecting front surface 222 and the air passage surface 239 may vary as needed.

The driver connection portion 220 can be formed to protrude frontwards from the air passage 230. The driver connection portion 220 can be formed as a center of the drum rear surface 210 is bent or curved. The driver connection portion 220, the air passage 230, and the circumference connecting portion 240 can be formed integrally.

In some implementations, the driver connection portion 220 can extend frontwards from the air passage surface 239. Therefore, the connecting side surface 226 of the driver connection portion 220 can form the inner circumferential surface of the air passage 230, and the connecting front surface 222 of the driver connection portion 220 can be located relatively rearward than the circumference connecting portion 240.

In some implementations, as the air passage 230 protrudes rearwards from the drum rear surface 210, it is possible to effectively increase an internal capacity of the drum 200 in the limited inner space of the cabinet 100.

In addition, because the driver connection portion 220 protrudes frontwards, a length at which the driver 400 protrudes rearwards from the drum rear surface 210 can be effectively reduced, so that a compact coupling structure can be implemented.

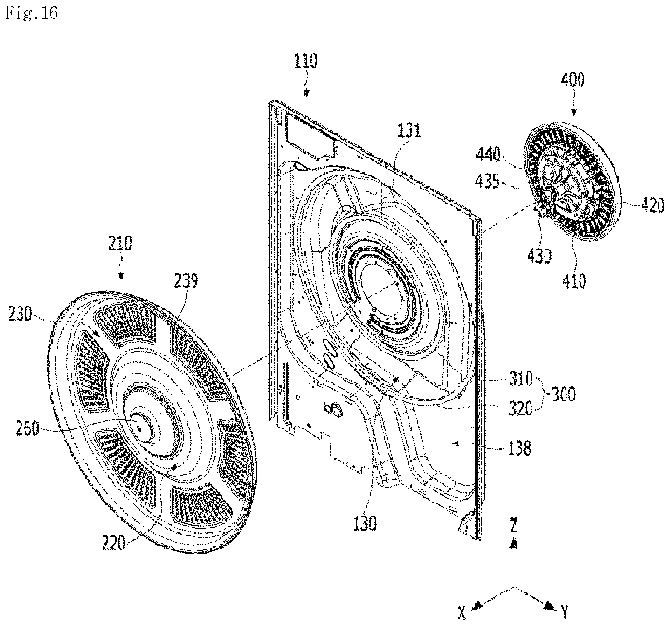

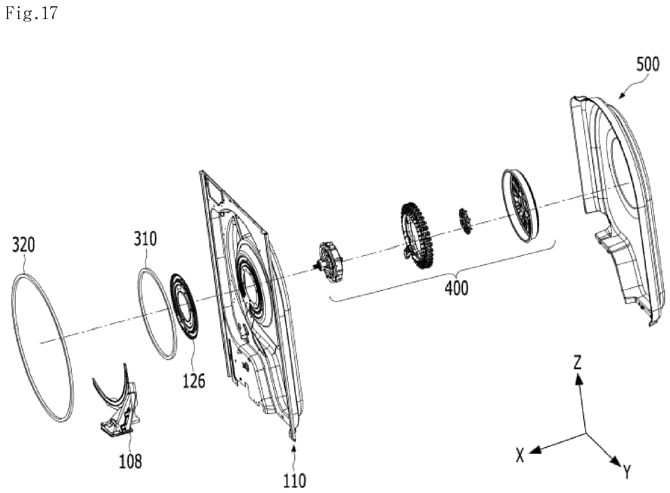

FIG. 16 shows that the drum rear surface 210, the rear plate 110, and the driver 400 are aligned, and FIG. 17 shows an exploded view of a plurality of components coupled to the rear plate 110.

Each component related to the rear plate 110 will be schematically described based on the rear plate 110 with reference to FIGS. 16 and 17.

As the drum rear surface 210 can be located in front of the rear plate 110, the open front surface 131 of the air flow portion can be shielded or covered from the front by the air passage 230 of the drum rear surface 210. In addition, in the rear plate 110, the driver 400 can be coupled to the driver mounting portion 120 from the rear, and the driving shaft 430 of the driver 400 can be positioned on the same line as the rotation shaft of the drum 200.

That is, in the rear plate 110, the driver 400 can be coupled to the driver mounting portion 120 from the rear, and the air flow portion 130 can be shielded or covered by the air passage 230 from the front. The driver 400 can pass through the driver mounting portion 120 to be connected to the driver connection portion 220 of the drum rear surface 210.

In some implementations, the aforementioned rear sealer 300 can be disposed between the drum rear surface 210 and the rear plate 110, and the rear sealer 300 can include an inner sealer surrounding the inner circumference of the air flow portion 130 and an outer sealer 320 surrounding the outer circumference of the air flow portion 130.

The rear plate 110 can be connected to the air supply 106, and the air supply 106 can include a fan duct 108 for connecting the blower 107 and the air flow portion 130 to each other. The rear plate 110 can include an inlet extension 138 extending from the air flow portion 130, and the fan duct 108 can be connected to the air flow portion 130 through the inlet extension 138.

At the same time when the driver 400 is coupled to the driver mounting portion 120 of the rear plate 110 from the rear, the mounting bracket 126 can be coupled to the driver mounting portion 120 from the front.

The driver mounting portion 120 can include a mounting side surface 124 extending in an annular shape, and a mounting front surface 122 connected to the mounting side surface 124 from the front to shield or cover the driver 400 from the front. A bracket seating portion 128 for coupling the mounting bracket 126 can be disposed on a front surface of the mounting front surface 122.

The mounting bracket 126 can be disposed at a front portion of the driver mounting portion 120 to form a coupling relationship with the driver 400 through the driver mounting portion 120, thereby effectively improving coupling stability of the driver 400 while increasing the rigidity of the driver mounting portion 120.

In some implementations, the rear plate 110 can be coupled with the rear cover 500 from the rear. Because the rear plate 110 can protrude rearwards from the rear surface of the air flow portion 130 and the driver 400 can be exposed rearwards, the rear cover 500 can be coupled to the rear plate 110 from the rear to shield or cover the air flow portion 130 and the driver 400 from the outside.

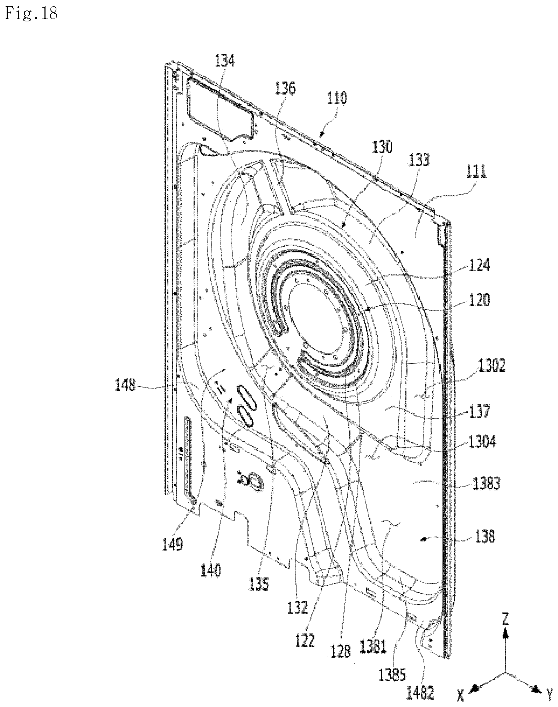

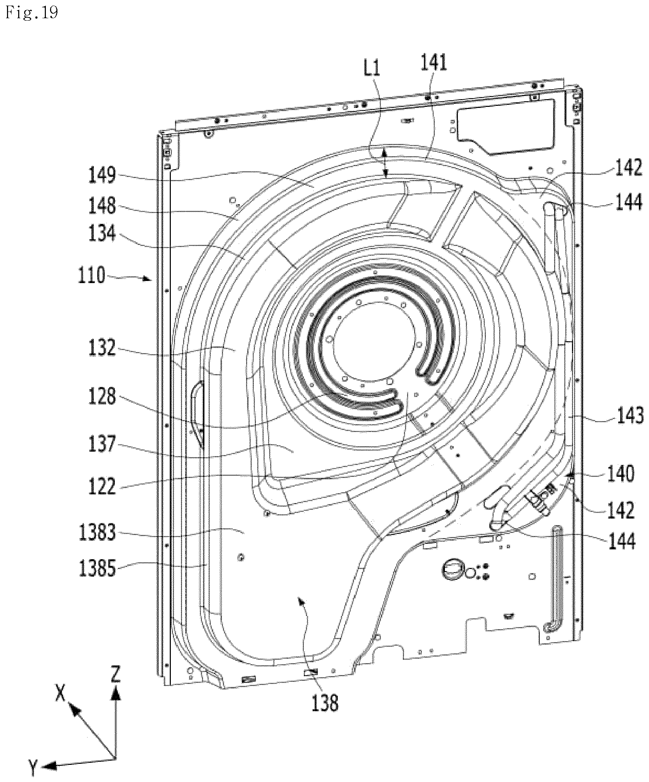

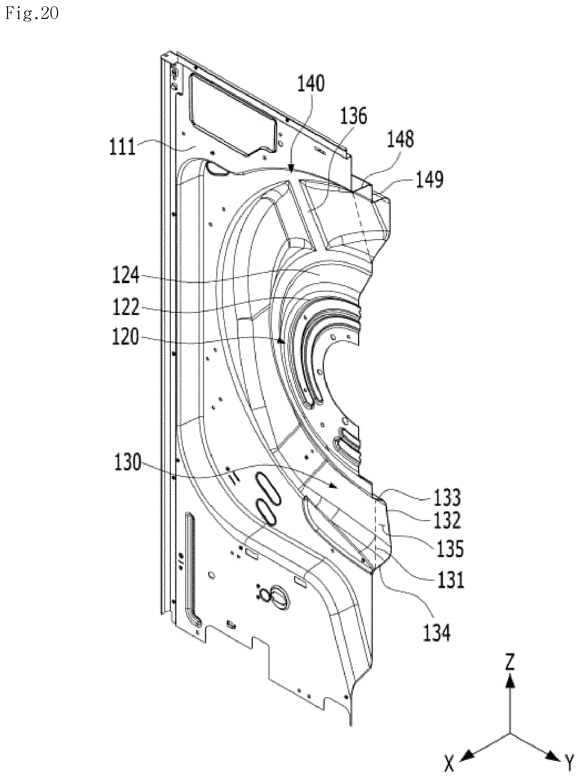

FIG. 18 is a diagram illustrating a view of a front surface of the rear plate 110, FIG. 19 is a diagram illustrating a view of a rear surface of the rear plate 110, and FIG. 20 is a diagram illustrating a cross-section of the rear plate 110 viewed from the lateral direction.

Hereinafter, the rear plate 110 will be described in detail with reference to FIGS. 18 to 20. Each component of the laundry treating apparatus 10 will be schematically summarized as follows prior to the description of the rear plate 110.

The drum 200 can be rotatably disposed inside the cabinet 100, can accommodate the laundry therein, and can have the drum rear surface 210 facing the rear plate 110. The driver 400 can be coupled to the rear plate 110 to be connected to the drum 200.

The rear plate 110 can include the driver mounting portion 120 and the air flow portion 130, the driver mounting portion 120 can be coupled to the driver 400, and the air flow portion 130 can surround the driver mounting portion 120 and can provide the air to the drum 200.

The drum rear surface 210 can include the driver connection portion 220 and the air passage 230. The driver connection portion 220 can face the driver mounting portion 120 and can be connected to the driver 400. The air passage 230 can surround the driver connection portion 220, and the air provided from the air flow portion 130 can pass through the air passage 230 and can be introduced into the drum 200.

In some implementations, the air flow portion 130 can protrude rearwards from the rear plate 110 to define therein the flow space 135 through which the air flows, and the flow space 135 can be opened frontwards and can be shielded or covered by the air passage 230.

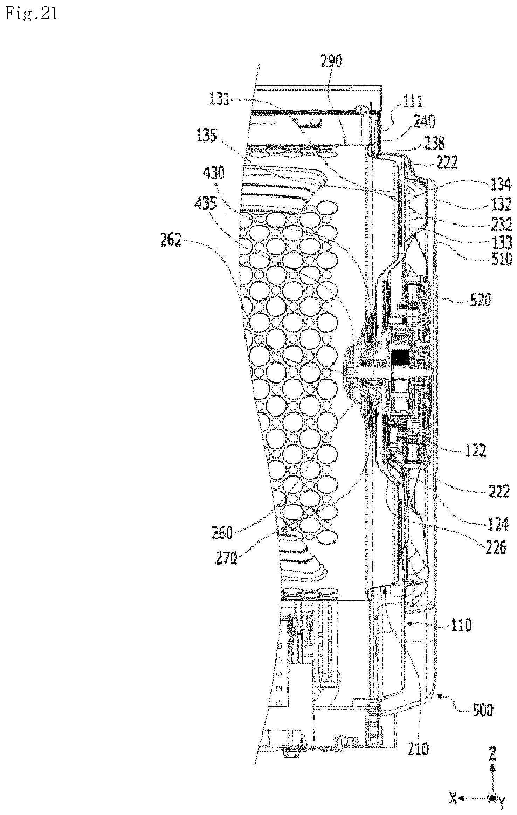

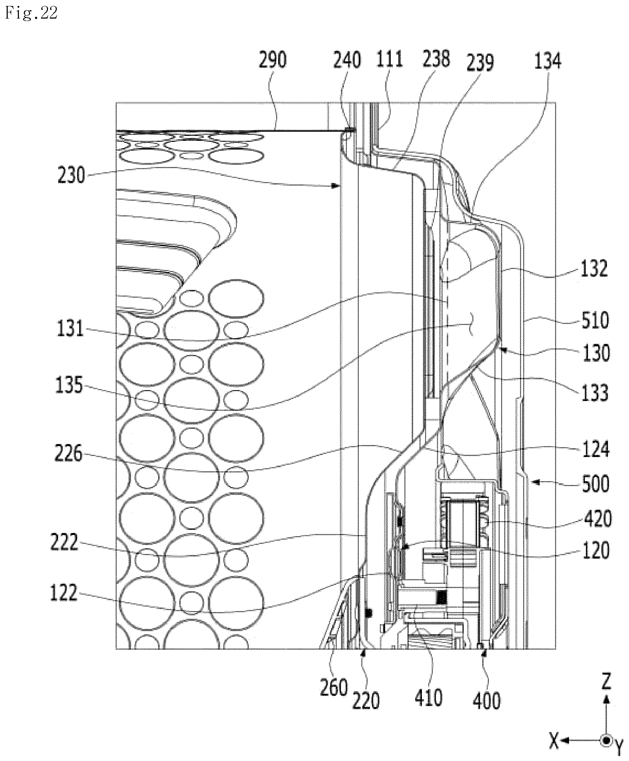

FIG. 21 is a diagram illustrating a cross-section of the rear plate 110 and the drum 200 positioned in front of the rear plate 110, and FIG. 22 is a diagram illustrating an enlarged view of the air flow portion 130 in which the front surface 131 is shielded by the air passage 230 in FIG. 21.

In some implementations, the air flow portion 130 can be defined in the rear plate 110 to discharge the air to the drum rear surface 210, and can protrude rearwards from the rear plate 110. The air flow portion 130 can have the flow space 135 defined therein through which the air flows, and the flow space 135 can be exposed frontwards through the open front surface 131.

The air flowing through the flow space 135 can be discharged frontwards through the open front surface 131 of the air flow portion 130. In the drum rear surface 210, the air can be transferred into the drum 200 through the aforementioned air passage 230.

In some implementations, in the rear plate 110, as the air flow portion 130 protrudes rearwards, the flow space 135 can be defined rearwardly of the rear plate 110. Therefore, it is possible to effectively secure a space from the drum rear surface 210 for increasing the capacity of the drum 200.

Further, in some implementations, as the air flow portion 130 is defined such that the front surface 131 is open, a flow resistance of the air flowing out from the flow space 135 toward the drum rear surface 210 can be effectively reduced and fluidity can be improved, so that the air can be effectively supplied into the drum 200.

For example, when the front surface 131 of the air flow portion 130 is formed as a grill surface or the like having a plurality of holes, the air in the flow space 135 can flow frontwards through the holes in the grill surface, but a flow resistance resulted from the grill can occur, and thus, a flow rate or a flow velocity of the air flowing toward the drum rear surface 210 can be reduced.

Furthermore, in order to form the grill surface, a punching process for defining the plurality of holes or a process for coupling the grill surface is involved, which is disadvantageous in manufacturing the rear plate 110.

However, in some implementations, as an entirety of the front surface 131 of the air flow portion 130 is formed in an open shape, the flow resistance of the air flowing out frontwards from the flow space 135 can be improved, and effective supply of the air toward the drum rear surface 210 can become possible.

Further, in some implementations, the open front surface 131 of the air flow portion 130 can be directly shielded or covered by the air passage 230 supplied with the air, so that the distance between the flow space 135 and the air passage 230 can be minimized, and an effective structure for the air transfer can be implemented.

In some implementations, the air flow portion 130 can be defined as the rear plate 110 is bent or curved. The air flow portion 130 can provide the air while directly facing the air passage 230 with the front surface 131 facing the air passage 230 being opened.

FIG. 18 shows that a state in which the air flow portion 130 is defined as a portion of the rear plate 110 is bent or curved.

In some implementations, the air flow portion 130 can be integrally molded with the rear plate 110. For example, the air flow portion 130 can be defined as at least a portion of the rear plate 110 is bent or curved through the pressing method or the like.

The air flow portion 130 can be defined to protrude rearwards from the rear plate 110, Accordingly, the air flow portion 130 can be defined as the rear plate 110 is bent or curved such that a portion thereof protrudes rearwardly of the remaining portion.

The air flow portion 130 can be recessed rearwards when viewed from the front of the rear plate 110 to define the flow space 135 therein, and can protrude rearwards from the rear plate 110 when viewed from the rear of the rear plate 110.

In some implementations, as the air flow portion 130 is molded as a portion of the rear plate 110, a separate member for defining the air flow portion 130 is not coupled to the rear plate 110, which is advantageous in manufacturing.

Furthermore, because there is no coupling line with the rear plate 110 on the air flow portion 130, the leakage of the air flowing through the flow space 135 can be effectively blocked. In some implementations, the coupling line may refer to a boundary region formed as different components are coupled to each other.

In some implementations, the driver 400 can be coupled to the driver mounting portion 120 from the rear of the driver mounting portion 120, and the air flow portion 130 can be defined in an annular shape to surround the driver 400.

FIG. 19 shows the air flow portion 130 protruding rearwards from the rear plate 110 to surround the driver mounting portion 120, and FIG. 21 is a cross-sectional view of the driver 400 coupled to the driver mounting portion 120 from the rear of the driver mounting portion 120.

The driver 400 can be coupled to the driver mounting portion 120 at the rear of the rear plate 110. That is, the driver 400 can be coupled to the rear surface of the driver mounting portion 120. The rear surface of the driver mounting portion 120 can be forwardly concave to define a space therein, and the driver 400 can be inserted into the space and coupled to the driver mounting portion 120.

At least a portion of the driver 400 coupled to the driver mounting portion 120 from the rear can protrude rearwards, and can be exposed to external impact. In some implementations, as the air flow portion 130 protrudes rearwards from the rear plate 110 and surrounds the driver 400, it is possible to protect the driver 400 from external impact.

In some implementations, the rear plate 110 can include a rear protrusion 140 protruding rearwards to define a space therein, and the air flow portion 130 can protrude rearwards from the rear protrusion 140.

The air passage 230 can protrude rearwards from the drum rear surface 210 to be inserted into the rear protrusion 140 and can shield or cover the open front surface 131 of the air flow portion 130.

FIGS. 18 to 22 show the rear protrusion 140 that protrudes rearwards from the rear plate 110 according to an embodiment of the present disclosure, and FIGS. 21 and 22 show the air passage 230 inserted into the rear protrusion 140.

Specifically, the rear protrusion 140 can protrude rearwards from the rear plate 110, and can have a space defined therein forwardly. The rear protrusion 140 can be formed as a portion of the rear plate 110 is bent or curved.

The air flow portion 130 can protrude rearwards from the rear protrusion 140. Therefore, the rear plate 110 can have the front surface recessed rearwards by the rear protrusion 140 and the air flow portion 130 to define a space therein, and have the rear surface having a shape that protrudes rearwards in a multi-step form.

In some implementations, as described above, in the drum rear surface 210, the air passage 230 can protrude rearwards, and the air passage 230 can be inserted into the space defined by the rear protrusion 140 from the front of the rear protrusion 140. In addition, the air passage 230 can be inserted into the rear protrusion 140 to directly face the open front surface 131 of the air flow portion 130 and shield or cover the front surface 131.

In some implementations, in the drum rear surface 210, the air passage 230 can protrude rearwards to effectively expand the space inside the drum 200, and the rear plate 110 can provide the space in which the air passage 230 is accommodated by forming the rear protrusion 140.

Accordingly, in some implementations, the space utilization can be improved because the air passage 230 protruding rearwards from the drum 200 can be accommodated inside the cabinet 100 without the entire rear plate 110 being further rearwardly separated from the drum 200.

Furthermore, the air passage 230 supplied with the air from the air flow portion 130 protrudes rearwards from the drum rear surface 210, and the air flow portion 130 protrudes rearwards from the rear protrusion 140, so that the air passage 230 can be at least partially accommodated in the rear protrusion 140, and at the same time, can effectively shield the open front surface 131 of the air flow portion 130 and receive the air.

In some implementations, the rear protrusion 140 can include a rear circumference region 141 expanded from the air flow portion 130 radially outward of the air flow portion 130 by a reference distance LI, and an expanded circumference region 142 that is expanded from the air flow portion 130 radially outward of the air flow portion 130 by a distance greater than the reference distance L1.

In addition, the expanded circumference region 142 can include an extension hole 144 through which an extension member 143 withdrawn out from the interior of the cabinet 100 passes. FIG. 19 shows the expanded circumference region 142 of the rear protrusion 140.

As described above, in some implementations, as the rear protrusion 140 is formed on the rear plate 110, it is possible to effectively increase the space inside the cabinet 100 without increasing an overall volume of the cabinet 100.

The space defined inside the cabinet 100 by the rear protrusion 140 can accommodate the air passage 230 of the drum rear surface 210, and at the same time, further accommodate various components inside the cabinet 100, thereby improving the utilization of the space inside the cabinet 100.

In some implementations, because the air passage 230 accommodated inside the rear protrusion 140 rotates with the drum 200 as a portion of the drum rear surface 210, the rear outer circumferential surface 148 corresponding to the outer circumferential surface of the rear protrusion 140 needs to be spaced apart from the passage outer circumferential surface 238 of the air passage 230 by a certain distance along the circumferential direction of the drum 200.

However, in some implementations, to prevent unnecessary increase in an area of the rear protrusion 140, the rear circumference region 141 of the rear protrusion 140 can expand from the air flow portion 130 or the air passage 230 radially outward of the air flow portion 130 by the reference distance LI, and the expanded circumference region 142 can expand from the air flow portion 130 or the air passage 230 radially outward of the air flow portion 130 by the distance equal to or greater than the reference distance LI, so that an additional space can be secured between the rear outer circumferential surface 148 and the passage outer circumferential surface 238.

The reference distance L1 can correspond to a separation distance at which the rear outer circumferential surface 148 and the like may not interfere with the rotating air passage 230, which may be variously determined in terms of design.

In some implementations, the expanded circumference region 142 can have various shapes and can be disposed at various positions. The specific shape and the position of the expanded circumference region 142 may be variously determined depending on the arrangement of the components inside the cabinet 100.

Referring to FIG. 19, in some implementations, the expanded circumference region 142 can be defined in a portion of the rear protrusion 140 or can include a plurality of expanded circumference regions. FIG. 19 shows a state in which a portion of the rear circumference region 141 facing the side plates 109 extends toward the side plate 109 to define the expanded circumference region 142.

In some implementations, the expanded circumference region 142 can have the extension hole 144 through which the extension member 143 withdrawn out from the interior of the cabinet 100 passes. That is, in some implementations, the extension member 143 extending from the interior of the cabinet 100 can be withdrawn to the outside through the space defined by being spaced apart from the drum 200 by the expanded circumference region 142.

The extension member 143 can be of various types. For example, the extension member 143 can correspond to a drain pipe or the like extending outwardly from the water collector 1065 described above. After the extension member 143 is withdrawn to the outside through the expanded circumference region 142 from the inner lower portion of the cabinet 100, the extension member 143 can extend along the rear surface of the rear plate 110 and can be retracted into the inner upper portion of the cabinet 100 again through the expanded circumference region 142.

In some implementations, as the extension member 143 can extend outside the cabinet 100 to connect the different components inside the cabinet 100 to each other, it is possible to effectively improve the capacity of the drum 200 while preventing structural interference between the drum 200 and the extension member 143.

Furthermore, in some implementations, by the expanded circumference region 142, a space in which the extension member 143 extends while being spaced apart from the drum 200 inside the cabinet 100 can be effectively secured, and the rear circumference region 141 and the expanded circumference region 142 are separately defined in the rear protrusion 140, so that unnecessary increase in the area of the rear protrusion 140 can be prevented.

In some implementations, the rear plate 110 can include the rear reference surface 111 positioned at the rear of the drum 200, the rear protrusion 140 can protrude rearwards from the rear reference surface 111, the air flow portion 130 can protrude rearwards from the rear protrusion 140, and the driver mounting portion 120 can protrude frontwards from the rear protrusion 140.

Referring to FIG. 20, in some implementations, a portion of the rear plate 110 excluding the rear protrusion 140 can correspond to the rear reference surface 111. That is, the rear reference surface 111 can be a portion that does not protrude from the rear plate by the rear protrusion 140. The rear reference surface 111 can be formed in an approximately flat plate shape.

In the rear plate 110, the rear reference surface 111 can be a reference for identifying an extent to which the rear protrusion 140 and the air flow portion 130 protrude rearwards. That is, in some implementations, at least a portion of the rear protrusion 140 and the air flow portion 130 can be located at the rear of the rear reference surface 111.

The rear protrusion 140 can protrude rearwards from the rear reference surface 111 and can be formed to be stepped from the rear reference surface 111. The air flow portion 130 can protrude rearwards from the rear protrusion 140 and can be formed to be stepped from the rear protrusion 140.

Specifically, the rear protrusion 140 can include the rear outer circumferential surface 148 extending rearwards from the rear reference surface 111 and extending along the circumference of the rear protrusion 140, and can include the rearwardly protruding surface 149 that is connected to the rear outer circumferential surface 148 to shield or cover the interior of the cabinet 100.

The rearwardly protruding surface 149 can be in a plate shape approximately parallel to the rear reference surface 111, and the rear outer circumferential surface 148 can surround the rearwardly protruding surface 149 and can be connected to a circumference of the rearwardly protruding surface 149.

The air flow portion 130 can include a flow outer circumferential surface 134 extending rearwards from the rearwardly protruding surface 149 and surrounding an outer circumference of the flow space 135, a flow inner circumferential surface 133 extending rearwards from the rearwardly protruding surface 149 and surrounding an inner circumference of the flow space 135, and a flow recessed surface 132 positioned at the rear of the rearwardly protruding surface 149 to shield or cover the flow space 135 from the rear and connected to the flow outer circumferential surface 134 and the flow inner circumferential surface 133.

The air flow portion 130 can be formed in an annular shape, the flow inner circumferential surface 133 can be formed to surround the driver mounting portion 120 and the driver 400, and the flow outer circumferential surface 134 can be formed to surround the flow inner circumferential surface 133 and the flow space 135.

Based on the radial direction of the air flow portion 130, the flow outer circumferential surface 134 can be located outward of the flow inner circumferential surface 133 and the flow space 135. The flow recessed surface 132 can be disposed in a space where the flow outer circumferential surface 134 and the flow inner circumferential surface 133 are spaced apart from each other. The flow recessed surface 132 can have an inner circumference connected to the flow inner circumferential surface 133 and an outer circumference connected to the flow outer circumferential surface 134.

The air flow portion 130 can be located in the rearwardly protruding surface 149, and the rear protrusion 140 can be located in the rear reference surface 111. That is, at least a portion of the circumference of the air flow portion 130 can be surrounded by the rear protrusion 140, and at least a portion of the circumference of the rear protrusion 140 can be surrounded by the rear reference surface 111.

The rearwardly protruding surface 149 can be located at the rear of the rear reference surface 111, and the flow recessed surface 132 can be located at the rear of the rearwardly protruding surface 149. In the rear plate 110, the rear reference surface 111, the rear protrusion 140, and the air flow portion 130 can be formed to be stepped from each other.

In some implementations, the rear plate 110 includes the rear protrusion 140 protruding rearwards within the rear reference surface 111, and includes the air flow portion 130 protruding rearwards within the rear protrusion 140, thereby effectively expanding the inner space of the cabinet 100 while minimizing an unnecessarily outwardly protruding portion.

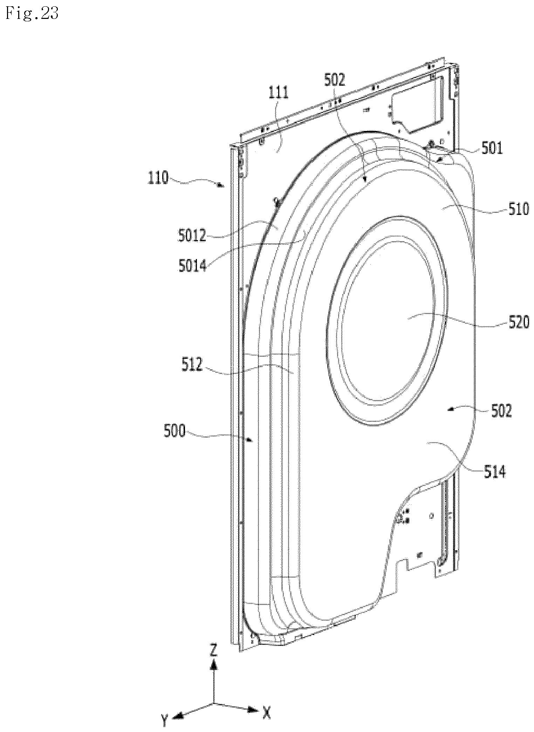

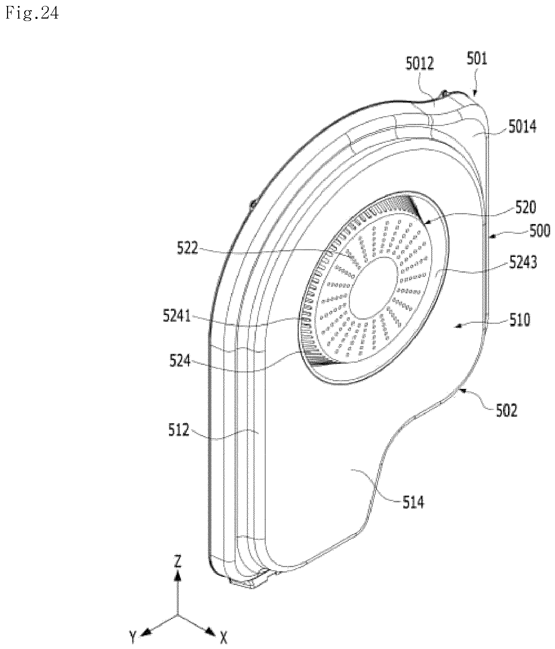

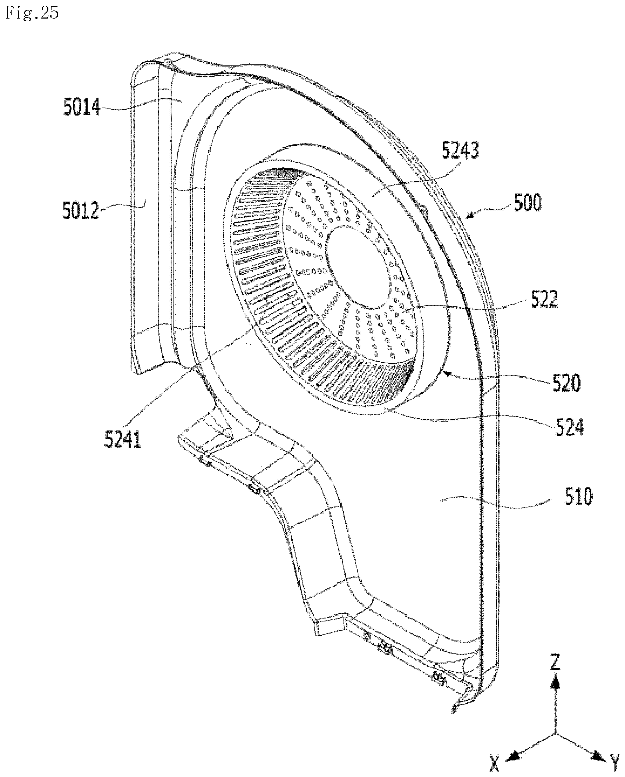

FIG. 23 is a diagram illustrating the rear cover 500 coupled to the rear surface of the rear plate 110, FIG. 24 is a diagram illustrating the rear surface of the rear cover 500, and FIG. 25 is a diagram illustrating the front surface of the rear cover 500.

In some implementations, the rear cover 500 can be coupled to the rear plate 110 to cover the rear protrusion 140, the air flow portion 130, and the inlet extension 138. In FIG. 23, a portion of the rear plate 110 exposed to the outside without being covered by the rear cover 500 can correspond to the rear reference surface 111.

Referring to FIG. 23, the driver 400 can be shielded or covered from the outside by the rear cover 500. That is, the driver mounting portion 120 can be located in front of the driver 400, the rear cover 500 can be located at the rear of the driver 400, and the air flow portion 130 can be located at the circumference of the driver 400, so that the driver 400 can be protected from external impact or the like.

The rear cover 500 can be formed in a shape corresponding to the rear protrusion 140, the air flow portion 130, and the inlet extension 138 of the rear plate 110. In other words, the rear cover 500 can include a protruding cover portion 501 having a shape corresponding to the rear protrusion 140 and protruding rearwards to define a space therein, and a flow cover portion 502 protruding rearwards from the protruding cover portion 501 to define a space therein.

Again, the flow cover portion 502 can include a cover circumference 510 located at the rear of the air flow portion 130, and a central cover disposed at a central portion of the cover circumference 510 and positioned at the rear of the driver 400.

Referring to FIG. 24, the protruding cover portion 501 can include a protruding cover outer circumferential surface 5012 surrounding the rear outer circumferential surface 148 of the rear protrusion 140, and can include a protruding cover rear surface 5014 that shields or covers the rearwardly protruding surface 149 from the rear.

The protruding cover portion can be formed in a shape corresponding to the rear protrusion 140 of the rear plate 110 such that the rear protrusion 140 is inserted thereinto from the front, and can be fixed and supported by a structural relationship with the rear protrusion 140.

The flow cover portion 502 can protrude rearwards from the protruding cover rear surface 5014 of the protruding cover portion 501, and can have the air flow portion 130 and the driver 400 inserted thereinto.

The cover circumference of the flow cover portion 502 can be positioned outwardly of the driver 400 and can cover the air flow portion 130 and the inlet extension 138. The cover circumference can include a flow cover outer circumferential surface 512 extending rearwardly from the protruding cover rear surface 5014 and extending along a circumference of the flow cover portion 502, and can include a flow cover rear surface 514 for shielding or covering the air flow portion 130 from the rear.

The central cover 520 of the flow cover portion 502 can be formed in a shape surrounded by the cover circumference, and the driver 400 can be positioned in front of the central cover 520. The central cover 520 can include a driving cover surface 522 that shields or covers the driver 400 from the rear, and a driving circumference 524 extending along a circumference of the driving cover surface 522 between the driving cover surface 522 and the flow cover rear surface 514.

Referring to FIG. 25, the driving circumference 524 can protrude frontwards from the central cover 520. The driving circumference 524 can divide the driver 400 and the mounting side surface 124 from each other. At least a portion of the driving circumference 524 can be inserted into the driver mounting portion 120.

The driving circumference 524 can be formed in a shape of a rib that protrudes frontwards from the central cover 520 and extends along the circumference of the driver 400. The driving circumference 524 can be formed in an annular shape and can surround an outer surface of the driver 400.

The driving circumference 524 can protrude frontwards from the flow cover portion 502 to define a space therein, and the space can be opened rearwardly. That is, the driving circumference 524 can be formed in the shape in which the space is defined therein and the rear surface is opened.

The driving circumference 524 can include a driving inner circumferential surface 5241 extending forwardly from the circumference of the driving cover surface 522, and a driving outer circumferential surface 5243 extending forwardly from the flow cover rear surface 514. The driving inner circumferential surface 5241 and the driving outer circumferential surface 5243 can be connected to each other at front ends thereof.

That is, the driving circumference 524 can define a rearwardly open space between the driving inner circumferential surface 5241 and the driving outer circumferential surface 5243. The driving inner circumferential surface 5241 can inwardly face the driver 400, and the driving outer circumferential surface 5243 can outwardly face the mounting side surface 124 or the air flow portion 130.

The driving inner circumferential surface 5241 can be spaced apart from the driver 400 to block interference with the operation of the driver 400, such as the rotation of the driver 400. An opening can be defined in the driving inner circumferential surface 5241, and the space in which the driver 400 is positioned and the space inside the driving circumference 524 can be in communication with each other by the opening.

The opening of the driving inner circumferential surface 5241 can have a shape extending from the driving cover surface 522 toward the driver mounting portion 120, and there can be a plurality of openings spaced apart from each other along the circumferential direction of the driving circumference 524.

Because the space inside the driver mounting portion 120 where the driver 400 is located is in communication with the interior of the driving circumference 524 through the opening of the driving inner circumferential surface 5241, and the space inside the driving circumference 524 is opened rearwards to be in communication with the outside, the space inside the driver mounting portion 120 can be in communication with the outside through the driving circumference 524.

The driver 400 can generate the heat during the operation, and the heat can be transferred from the interior of the air flow portion 130 and the drum 200. The laundry treating apparatus 10 can improve a heat dissipation effect of the driver 400 by allowing the heat exchange between the driver 400 and the outside to be performed effectively through the driving circumference 524.

In some implementations, a plurality of openings can be defined in the driving cover surface 522 positioned at the rear of the driver 400 such that the air heated by the driver 400 is discharged from the driver mounting portion 120 to the outside to facilitate the heat dissipation of the driver 400.

In some implementations, the driving outer circumferential surface 5243 can surround the space inside the driving circumference 524 from the outside, and can divide the space in which the air flow portion 130 is positioned and the space in which the driver mounting portion 120 is positioned from each other.

In the air flow portion 130, the air heated from the air supply 106 flows. When heat loss occurs from the air flowing through the air flow portion 130, it may be disadvantageous in the drying process of the laundry.

Accordingly, the laundry treating apparatus 10 can reduce the heat loss of the air flow portion 130 by dividing the air flow portion 130 and the driver 400 from each other through the driving outer circumferential surface 5243, and can suppress or block the transfer of the heat from the air flow portion 130 to the driver 400.

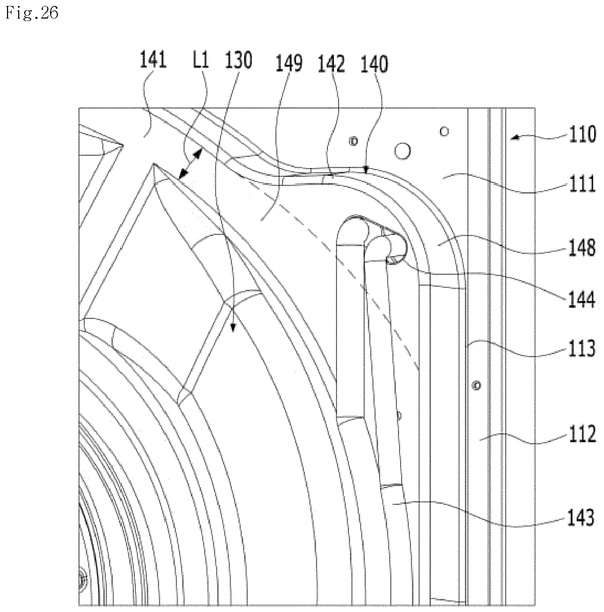

FIG. 26 is a diagram illustrating a side surface coupling portion 112 and a cover seating portion 113 of the rear plate 110. In some implementations, the protruding cover outer circumferential surface 5012 of the rear cover 500 can extend along the circumference of the rear protrusion 140 and be supported by the rear reference surface 111, and the rear plate 110 can further include the side surface coupling portion 112 and the cover seating portion 113.

The side surface coupling portions 112 can be disposed on both sides in the lateral direction of the rear plate 110, respectively, can protrude rearwards than the rear reference surface 111, and can be coupled with the side plates 109 disposed on the both sides in the lateral direction of the cabinet 100 from the front, respectively.

The cover seating portion 113 can be disposed between the side surface coupling portion 112 and the rear protrusion 140 on the rear reference surface 111, and at least a portion of the protruding cover outer circumferential surface 5012 can be seated in the cover seating portion 113.

Specifically, a length of the protruding cover outer circumferential surface 5012 of the rear cover 500 in the front and rear direction is equal to or greater than a length of the rear outer circumferential surface 148 of the rear protrusion 140, so that a front end of the protruding cover outer circumferential surface 5012 can be supported on the rear reference surface 111.

The side surface coupling portion 112 of the rear plate 110 can be coupled to the side plate. The side surface coupling portion 112 can define a groove therein that protrudes rearwards when viewed from the rear and is recessed rearwards when viewed from the front.

A rear end of the side plate 109 can be inserted into and fixed in the groove. That is, the rear plate 110 can be coupled to the side plates 109 on the both sides in the lateral direction through the side surface coupling portions 112.

The cover seating portion 113 can be positioned between the side surface coupling portion 112 and the rear protrusion 140 on the rear reference surface 111. That is, the rear outer circumferential surface 148 of the rear protrusion 140 can be spaced apart from the side surface coupling portion 112, so that the cover seating portion 113 can be disposed between the rear outer circumferential surface 148 and the side surface coupling portion 112.

When viewed from the rear of the rear plate 110, the cover seating portion 113 can be in a shape in parallel with the rear reference surface 111 or recessed frontwards than the rear reference surface 111. A front end of the rearwardly protruding outer circumferential surface of the rear cover 500 can be seated and fixed on the cover seating portion 113.

In some implementations, as the cover seating portion 113 is disposed between the side surface coupling portion 112 and the rear outer circumferential surface 148 in the rear plate 110, the rear cover 500 coupled to the rear surface of the rear plate 110 can be stably supported while covering an entirety of the rear protrusion 140.

In some implementations, the rear protrusion 140 can include the rear outer circumferential surface 148 and the rearwardly protruding surface 149 described above, and the rearwardly protruding surface 149 can be located at the rear of the rear reference surface 111. The air passage 230 can be positioned inside the rear protrusion 140 to be surrounded by the rear outer circumferential surface 148.

The air flow portion 130 can include the flow outer circumferential surface 134 extending rearwards from the rearwardly protruding surface 149 and extending along the outer circumference of the flow space 135, the flow inner circumferential surface 133 extending rearwards from the rearwardly protruding surface 149 and extending along the inner circumference of the flow space 135, and the flow recessed surface 132 positioned at the rear of the rearwardly protruding surface 149, connected to the flow outer circumferential surface 134 and the flow inner circumferential surface 133, and formed in the annular shape to shield or cover the flow space 135 from the rear.

In some implementations, the driver mounting portion 120 can include the mounting side surface 124 extending forwardly from the rearwardly protruding surface 149 and extending along the circumference of the driver mounting portion 120, and the mounting front surface 122 positioned forwardly of the rearwardly protruding surface 149 and connected to the mounting side surface 124. The driver 400 can be coupled to the mounting front surface 122 from the rear of the mounting front surface 122, and can be at least partially surrounded by the mounting side surface 124.

Accordingly, the driver 400 can be circumferentially protected and covered by the mounting side surface 124, can be stably fixed, and can be at least partially inserted into the driver mounting portion 120, so that a portion of the driver 400 protruding rearwards from the driver mounting portion 120 can be effectively reduced.

In some implementations, the driver connection portion 220 can be recessed in the drum rear surface 210 forwardly of the air passage 230, so that the mounting front surface 122 can be inserted into the driver connection portion 220 from the rear. FIG. 21 shows the mounting front surface 122 inserted into the driver connection portion 220.

As described above, the driver connection portion 220 can protrude frontwards from the drum rear surface 210, so that a space open rearwards can be defined in the driver connection portion 220. The driver connection portion 220 can have a shape that protrudes frontwards in a relationship with the air passage 230.

The driver connection portion 220 can have a shape corresponding to the driver mounting portion 120. That is, the connecting front surface 222 of the driver connection portion 220 can be disposed in front of the mounting front surface 122 of the driver mounting portion 120 and have a shape corresponding to the mounting front surface 122, and the connecting side surface 226 of the driver connection portion 220 can be disposed in front of the mounting side surface 124 of the driver mounting portion 120 and have a shape corresponding to the mounting side surface 124.

In some implementations, the driver connection portion 220 is recessed frontwards when viewed from the rear of the drum 200, so that at least a portion of the driver mounting portion 120 and the driver 400 can be inserted into the driver connection portion 220, and a length at which the driver 400 protrudes rearwards from the drum 200 can be effectively reduced.

In some implementations, the mounting front surface 122 can be positioned forwardly of the rearwardly protruding surface 149 and positioned rearwardly of the rear reference surface 111. FIG. 21 shows the mounting front surface 122 positioned rearwardly of the rear reference surface 111.

The mounting front surface 122 can be located relatively rearward than the rear reference surface 111, so that the driver connection portion 220 of the drum rear surface 210 does not protrude frontwards too much. However, the present disclosure may not be necessarily limited thereto, and when necessary, the mounting front surface 122 can be located forwardly of the rear reference surface 111.

In some implementations, the laundry treating apparatus 10 can include the aforementioned mounting bracket 126, and the mounting bracket 126 can be seated on the mounting front surface 122 from the front of the mounting front surface 122. In addition, in some implementations, the laundry treating apparatus 10 can further include an integrated fastening member 1263, and the integrated fastening member 1263 can pass through the mounting front surface 122 and can fasten the mounting bracket 126 and the driver 400 to each other.

The mounting front surface 122 can have the bracket seating portion 128 into which the mounting bracket 126 is seated from the front and through which the integrated fastening member 1263 passes. The mounting bracket 126, the bracket seating portion 128, and the integrated fastening member 1263 will be described in detail below.

In some implementations, the above-described inner sealer 310 can be disposed on the rear plate 110, and the inner sealer 310 can be formed in the annular shape and surround the inner circumference of the air flow portion 130 to suppress or block the air leakage.

The rear protrusion 140 can have a seating portion 1492 of the inner sealer 310 into which the inner sealer 310 is seated from the front defined as the mounting side surface 124 and the flow inner circumferential surface 133 are spaced apart from each other.

In some implementations, the laundry treating apparatus 10 can include the air supply 106 as described above, and the air supply 106 can be disposed inside the cabinet 100 and can receive the air discharged from the drum 200 and supply the air to the air flow portion 130.

The rear plate 110 can include the inlet extension 138 extending from the air flow portion 130 toward the air supply 106 to be connected to the air supply 106. FIGS. 18 to 19 show the inlet extension 138 of the rear plate 110.

The inlet extension 138 can extend from the air flow portion 130 on the rear plate 110, and the inlet extension 138 can connect the air supply 106 and the air flow portion 130 to each other. The inlet extension 138 and the air flow portion 130 can be integrally formed.

When the air supply 106 directly discharges the air in the air flow portion 130, at least a portion of the air supply 106, for example, the fan duct 108 described above, can block the air from flowing out forwardly of the air flow portion 130.

Accordingly, in some implementations, the rear plate 110 can form the inlet extension 138 extending from the air flow portion 130, and the air supply 106 can supply the air to the flow space 135 while being spaced apart from the open front surface 131 or the flow space 135 of the air flow portion 130.

In some implementations, the air supply 106 can be located below the drum 200 on one side in the lateral direction of the cabinet 100, and the inlet extension 138 can extend downwards from one side positioned above the air supply 106 in the air flow portion 130 to be connected to the air supply 106.

As described above, the air supply 106 can be disposed on the base 105, and can be located on one side in the lateral direction, for example, close to the first side plate 109 to avoid physical interference with a lowermost end of the drum 200.

Accordingly, in the air flow portion 130, a portion of the flow outer circumferential surface 134 located above the air supply 106, that is, a portion corresponding to one side in the lateral direction of the lower portion of the flow outer circumferential surface 134 can be opened, and the inlet extension 138 can extend downwards toward the air supply 106 from the portion where the flow outer circumferential surface 134 is open.

In some implementations, the air supply 106 is biased to one side in the lateral direction of the base 105, thereby effectively blocking structural interference with the drum 200.

In addition, as the inlet extension 138 extends downwards from one side positioned above the air supply 106, it is possible to reduce the extension distance of the inlet extension 138. In addition, as an extending shape of the inlet extension 138 is approximately similar to a tangent line of the air flow portion 130, so that it is possible to effectively set an air discharge direction of the air supply 106 and improve the flow of the air in the flow space 135.

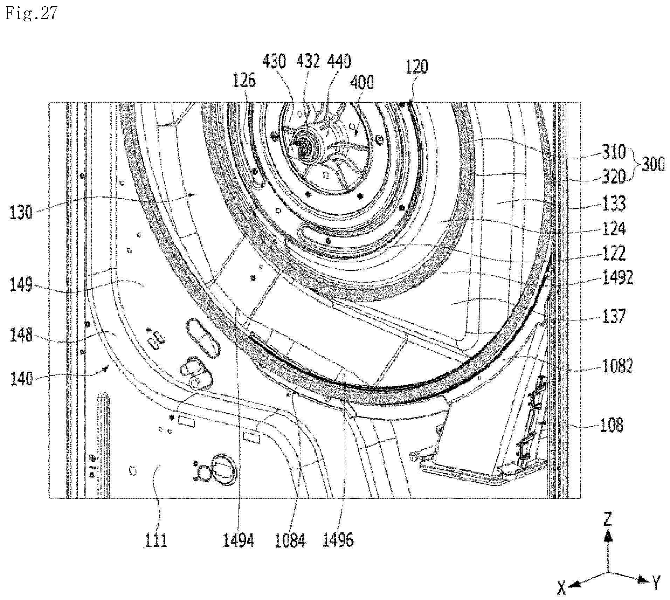

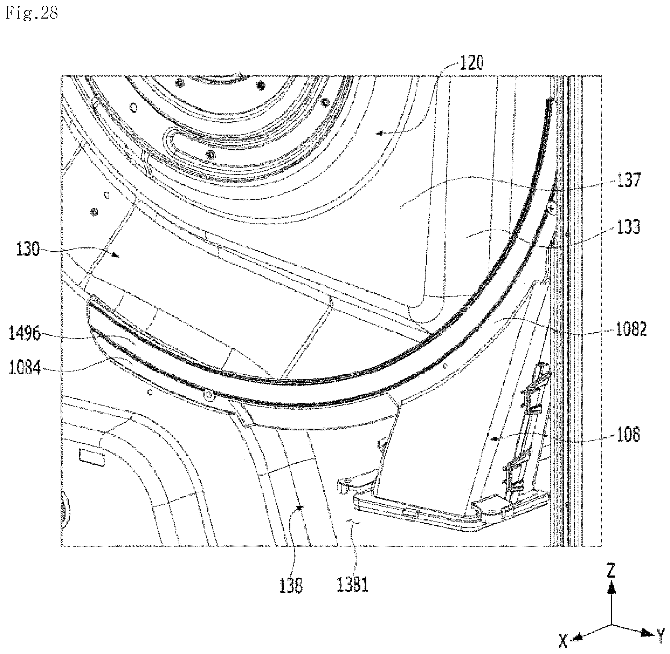

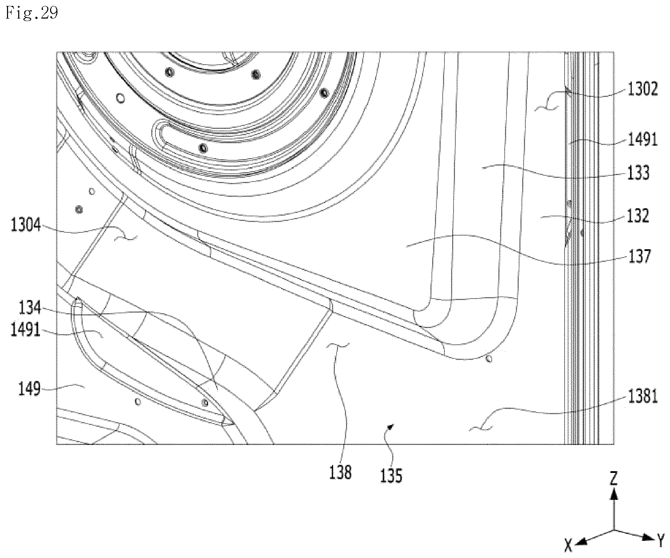

FIG. 27 is a diagram illustrating the inlet extension 138 extending from the air flow portion 130 and coupled with the fan duct 108, FIG. 28 is a diagram illustrating the fan duct 108 inserted into the flow space 135, and FIG. 29 is a diagram illustrating the flow space 135 of the inlet extension 138 from which the fan duct 108 is removed in FIG. 28.

Referring to FIGS. 27 to 29, in some implementations, the inlet extension 138 can include an extension space 1381 that extends from the flow space 135 toward the air supply 106 and opens frontwards.

The air supply 106 can include the fan duct 108 described above, and at least a portion of the fan duct 108 can be inserted into the extension space 1381 to discharge the air into the flow space 135.

In addition, the fan duct 108 can include an air discharge portion 1082 inserted into the extension space 1381 to divide the flow space 135 and the extension space 1381 from each other and discharge the air into the flow space 135.

As described above, the inlet extension 138 can extend from the air flow portion 130 and be connected with the air supply 106. The inlet extension 138 can include the extension space 1381 extending from the flow space 135, and can have a front surface that is opened such that the fan duct 108 can be inserted thereinto from the front.

The inlet extension 138 can include an extended circumferential surface 1385 surrounding the extension space 1381, and can form an extended recessed surface 1383 for shielding the extension space 1381 from the rear. The inlet extension 138 can be integrally formed with the air flow portion 130 to protrude rearwards from the rear reference surface 111 or the rear protrusion 140 of the rear plate 110.

The extended circumferential surface 1385 can protrude rearwards from the rearwardly protruding surface 149. The extension space 1381 can be connected to the flow space 135, and the extended circumferential surface 1385 can surround the extension space 1381 in the remaining region except for a connection region between the extension space 1381 and the flow space 135.

That is, the flow outer circumferential surface 134 extending along the outer circumference of the flow space 135 can be formed in an annular shape opened by the extension space 1381, and an extended outer circumferential surface can connect one end and the other end of the flow outer circumferential surface 134 to each other while surrounding the extension space 1381.

The flow outer circumferential surface 134 and the extended outer circumferential surface can together form one closed cross-section. The flow outer circumferential surface 134 and the outer circumferential surface can together surround the outer circumferences of the flow space 135 and the extension space 1381, and the extended outer circumferential surface can be formed as a portion of the flow outer circumferential surface 134.

The extended recessed surface 1383 can be positioned at the rear of the rearwardly protruding surface 149 and can extend from the flow recessed surface 132. That is, the extended recessed surface 1383 can form a single surface positioned at the rear of the rearwardly protruding surface 149 together with the flow recessed surface 132.

In some implementations, the fan duct 108 can extend from the air supply 106 as described above, can have an end facing the flow space 135 or the extension space 1381 inserted into the extension space 1381, and can be coupled to the rear plate 110.

The fan duct 108 can be inserted into the extension space 1381 to discharge the air toward the flow space 135. The air discharge direction of the fan duct 108 can be parallel to the flow recessed surface 132, and can be parallel to the radial or tangential direction of the air flow portion 130.

In some implementations, the fan duct 108 can be inserted into the extension space 1381 to discharge the air into the flow space 135, so that the air discharge direction can be parallel to the flow space 135 and the rear plate 110, thereby minimizing the turbulent flow of air.

In addition, the air discharge portion 1082 can be disposed at an end of the fan duct 108 facing toward the flow space 135. For example, the air discharge portion 1082 can correspond to the end of the fan duct 108. The air discharge portion 1082 can be inserted into the extension space 1381 to discharge the air, and the air discharge direction can be parallel to the flow space 135 or the rear plate 110.

The air discharge portion 1082 can be constructed to divide the flow space 135 and the extension space 1381 from each other. For example, the air discharge portion 1082 can discharge the air to the flow space 135 while shielding or covering at least a portion of an interface between the flow space 135 and the extension space 1381.

FIG. 28 shows a state in which the air discharge portion 1082 shields or covers an entirety of the boundary region of the flow space 135 and the extension space 1381. That is, the air discharge portion 1082 can be in contact with the flow recessed surface 132 or the extended recessed surface 1383, and can have both ends thereof that can be respectively in contact with the extended circumferential surface 1385 and the flow outer circumferential surface 134 respectively facing thereto along the circumferential direction of the flow space 135.

The air discharge portion 1082 can be formed in a shape of an arc extending along the circumferential direction of the flow space 135. That is, the air discharge portion 1082 can have a curvature corresponding to the flow outer circumferential surface 134 and can surround an entirety of the outer circumference of the flow space 135 together with the flow outer circumferential surface 134.

The air discharge portion 1082 can have an air outlet through which the air is discharged that is defined in one surface thereof facing toward the flow space 135. The air outlet can discharge the air in a direction parallel to the flow recessed surface 132.

In some implementations, the air discharge portion 1082 of the fan duct 108 can be inserted into the extension space 1381 to divide the flow space 135 and the extension space 1381 from each other, thereby effectively blocking unnecessary air inflow into the extension space 1381.

In addition, as the air discharge portion 1082 is inserted into the extension space 1381 to discharge the air in the direction parallel to the flow recessed surface 132, it is possible to reduce the turbulent flow of air provided to the flow space 135 and improve a degree of freedom of the shape extending from the fan duct 108 except for the air discharge portion 1082.

In some implementations, as described above, the laundry treating apparatus 10 can further include the outer sealer 320 formed in an annular shape to surround the outer circumference of the air flow portion 130 and to suppress or block the air leakage.

In addition, in some implementations, the rear plate 110 can include a first seating portion 1494 of the outer sealer 320 extending along the outer circumference of the air flow portion 130 to seat the outer sealer 320 therein from the front.

In addition, the air discharge portion 1082 can include a second seating portion 1496 of the outer sealer 320 that surrounds the outer circumference of the flow space 135 together with the first seating portion 1494 of the outer sealer 320 and seats the outer sealer 320 therein from the front.

Specifically, the first seating portion 1494 of the outer sealer 320 can support the outer sealer 320 on the outer circumference of the air flow portion 130. The first seating portion 1494 of the outer sealer 320 can be disposed on the rearwardly protruding surface 149 or on the rear reference surface 111.

FIG. 27 shows that the first seating portion 1494 of the outer sealer 320 is formed on the rearwardly protruding surface 149 connected to the flow outer circumferential surface 134 and seats the outer sealer 320 therein.

The first seating portion 1494 of the outer sealer 320 can be in parallel with the rearwardly protruding surface 149 or recessed rearwardly from the rearwardly protruding surface 149. The outer sealer 320 can be coupled to and fixed to the first seating portion 1494 of the outer sealer 320.

The second seating portion 1496 of the outer sealer 320 can be disposed on the air discharge portion 1082. As described above, the air discharge portion 1082 can surround the outer circumference of the flow space 135 together with the flow outer circumferential surface, and thus, the second seating portion 1496 of the outer sealer 320 on which the outer sealer 320 is seated can be formed at a front portion of the air discharge portion 1082.

FIG. 28 shows the second seating portion 1496 of the outer sealer 320 disposed on a front surface of the air discharge portion 1082. The second seating portion 1496 of the outer sealer 320 can be recessed rearwards from an outer surface of the air discharge portion 1082, and can form a single circular shape together with the first seating portion 1494 of the outer sealer 320.

In some implementations, the circular shape may include not only a circular shape having a constant radius along a circumferential direction, but also an elliptical shape having a varying radius. That is, in some implementations, the circular shape may collectively refer to a closed curve in which a curvature varies along a circumference.

The first seating portion 1494 of the outer sealer 320 and the second seating portion 1496 of the outer sealer 320 can be continuously connected to each other, and together form one annular shape corresponding to the shape of the outer sealer 320. Accordingly, the outer sealer 320 can be seated on both of the first seating portion 1494 of the outer sealer 320 and the second seating portion 1496 of the outer sealer 320.

In some implementations, as the first seating portion 1494 of the outer sealer 320 is disposed on the flow outer circumferential surface 134, and at the same time, the second seating portion 1496 of the outer sealer 320 is disposed on the air discharge portion 1082, while ensuring airtightness of the flow space 135, it is possible to effectively block the air flowing out from the air flow portion 130 from leaking to the inlet extension 138.

In some implementations, the fan duct 108 can further include a fan duct extension 1084. The fan duct extension 1084 can extend from the air discharge portion 1082 outwardly of the extension space 1381 and can be coupled to the rear plate 110.

In addition, the rear plate 110 can include a fan duct coupling portion 1491, and the fan duct coupling portion 1491 can be recessed rearwards outwardly of the inlet extension 138, so that the fan duct extension 1084 can be seated in the fan duct coupling portion 1491 from the front.

Referring to FIG. 28, the fan duct extension 1084 can extend from the air discharge portion 1082 outwardly of the air flow portion 130 and the inlet extension 138. Accordingly, it is possible to prevent a situation in which a coupling portion for coupling with the air discharge portion 1082 is generated in the flow space 135 or the extension space 1381 to obstruct the flow of air or to allow the air leakage to occur.

The fan duct extension 1084 can extend from the air discharge portion 1082 along the circumferential direction of the air flow portion 130. That is, the fan duct extension 1084 can extend along the outer circumference of the flow space 135. Accordingly, the air discharge portion 1082 can form a single arc shape including the fan duct extension 1084.

The fan duct extension 1084 can be seated on the rearwardly protruding surface 149. That is, the fan duct coupling portion 1491 can be disposed on the rearwardly protruding surface 149. FIG. 29 shows the fan duct coupling portion 1491 on which the fan duct extension 1084 is seated.

The fan duct coupling portion 1491 can be recessed rearwards from the rearwardly protruding surface 149, so that the fan duct extension 1084 can be seated in the fan duct coupling portion 1491 from the front. The fan duct extension 1084 can extend from a front portion of both ends of the air discharge portion 1082 along the circumferential direction of the air flow portion 130 to be seated on the rearwardly protruding surface 149.

Because the fan duct extension 1084 extends from the air discharge portion 1082 inserted into the extension space 1381, the fan duct coupling portion 1491 can be formed in a shape of a groove open toward the extension space 1381 to prevent a gap from occurring when the fan duct extension 1084 is coupled thereto.

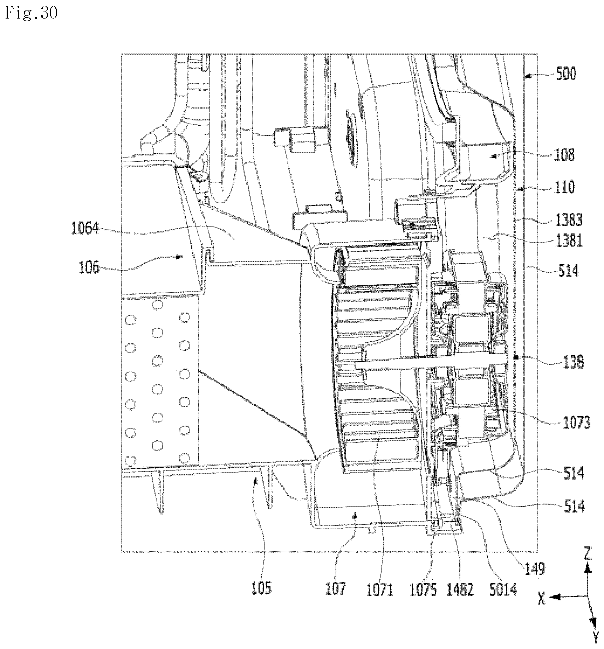

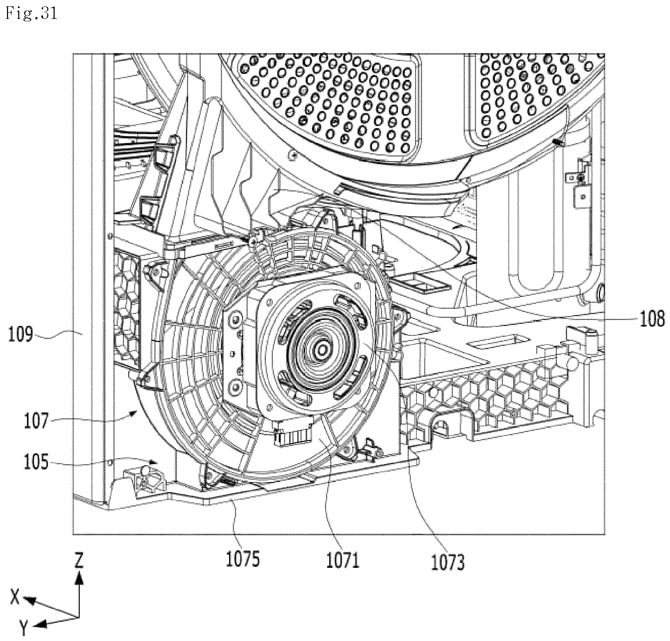

FIG. 30 is a diagram illustrating the blower 107 inserted into the extension space 1381 from the front of the inlet extension 138, and FIG. 31 is a diagram illustrating the blower motor 1073 coupled to the blower fan housing from the rear.

Referring to FIGS. 30 and 31, in some implementations, the blower 107 can include the blower fan 1071 and the blower motor 1073, and can be at least partially inserted into the extension space 1381 and blow the air into the fan duct.

As described above, the blower 107 can be located at the rear of the air supply 106, and can rearwardly face the inlet extension 138. In the blower 107, the blower fan housing and the blower motor 1073 are at least partially inserted into the extension space 1381, so that a length in the front and rear direction of an entirety of the air supply 106 can be sufficiently secured.

In some implementations, the blower fan 1071 of the blower 107 can be located inside the rear protrusion 140, and the blower motor 1073 can be disposed at the rear of the blower fan 1071 and inserted into the extension space 1381.

In some implementations, the rear plate 110 can define the space therein as the rear protrusion 140 and the inlet extension 138 protrude rearwards in a stepped manner. In the blower 107, the blower motor 1073 can be disposed at the rear of the blower fan 1071 or the blower fan housing.

Accordingly, in the blower 107, the blower fan 1071 or the blower motor 1073 located at the rear of the blower fan housing can be inserted into the extension space 1381, and the blower fan 1071 or the blower fan housing positioned in front of the blower motor 1073 can be at least partially located in the space inside the rear protrusion 140.

The blower motor 1073 can be inserted into the extension space 1381, and the blower motor 1073 can be coupled with the extended recessed surface 1383. Thus, in some implementations, a plurality of power generators corresponding to a motor and the like can be disposed on the rear plate 110. That is, in some implementations, the rear plate 110 can form a coupling relationship with the blower motor 1073 and the driver 400.

FIG. 31 is a diagram illustrating the blower fan support 1075 protruding rearwards from the base 105 or the bottom plate 103 to support the blower fan housing.

Referring to FIG. 31, in some implementations, the air supply 106 can include the blower fan support 1075, and the blower fan support 1075 can support the blower fan 1071 from below.

In addition, in the rear protrusion 140, the rear outer circumferential surface 148 can include a support insertion portion 1482 into which the blower fan support 1075 is inserted from the front. As described above, the blower fan 1071 is inserted into the rear protrusion 140, so that the blower fan support 1075 located beneath the blower fan 1071 can also be inserted into the rear protrusion 140.

Accordingly, the rear protrusion 140 can have the support insertion portion 1482 into which the blower fan support 1075 is inserted from the front, and the support insertion portion 1482 can form a coupling relationship with the blower fan support 1075.

A shape of the support insertion portion 1482 can vary. For example, the support insertion portion 1482 can be defined in the rearwardly protruding surface 149 such that the blower fan support 1075 is inserted thereinto from the front, or can be defined in the rear outer circumferential surface 148 such that the support insertion portion 1482 can be inserted thereinto.

The support insertion portion 1482 can be open frontwards and can include a space defined therein into which the blower fan support 1075 is inserted. The space can correspond to a portion of the space defined inside the rear protrusion 140 or can be defined separately.

In some implementations, as the blower fan support 1075 that supports the blower fan 1071 is disposed on the base 105 or the bottom plate 103, the blower fan 1071 or the blower fan housing can be stably fixed and supported. As a center of rotation of the blower fan 1071 is aligned with a center of the air flow channel of the air supply 106, the fluidity of the air can be improved.

Furthermore, in some implementations, as the support insertion portion 1482 into which the blower fan support 1075 is inserted is defined in the rear plate 110, that is, the rear protrusion 140, at least a portion of the blower fan 1071 and the blower fan housing including the blower fan support 1075 can be effectively accommodated inside the rear protrusion 140.

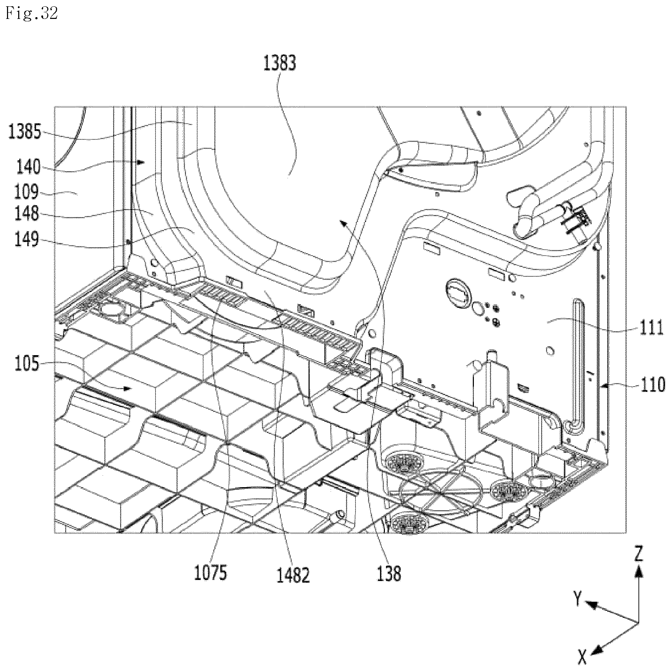

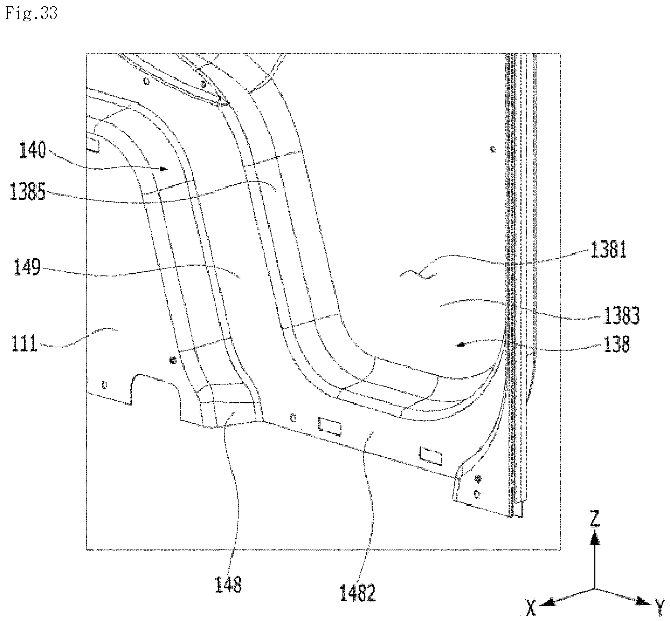

FIG. 32 is a diagram illustrating the support insertion portion 1482 into which the blower fan support 1075 is inserted, and FIG. 33 is a diagram illustrating the support insertion portion 1482 viewed from the front.

Referring to FIGS. 32 and 33, in some implementations, the support insertion portion 1482 can be defined as the rear outer circumferential surface 148 is recessed rearwards, and can be positioned at a lower end of the rear plate 110 to be opened downwards.

Specifically, in some implementations, the support insertion portion 1482 can be defined in the rear outer circumferential surface 148 of the rear protrusion 140. A portion of the rear outer circumferential surface 148 facing the blower fan support 1075 can be recessed rearwards to define the support insertion portion 1482.

In addition, the support insertion portion 1482 can be located at the lower end of the rear plate 110. That is, a lower end of the rear outer circumferential surface 148 can coincide with the lower end of the rear plate 110, and the support insertion portion 1482 can be defined at the lower end of the rear outer circumferential surface 148.

The rear reference surface 111 may not exist outwardly of the rear outer circumferential surface 148 in which the support insertion portion 1482 is defined. That is, the support insertion portion 1482 defined in the rear outer circumferential surface 148 may not have the rear reference surface 111 downwardly and may correspond to a portion of the lower portion of the rear plate 110.

In some implementations, the support insertion portion 1482 can be positioned at the lower end of the rear plate 110, can be opened in the vertical direction, and can be formed in a shape of a groove recessed rearwards. That is, the blower fan support 1075 inserted into the support insertion portion 1482 can be exposed downwardly to the outside.

As described above, the blower fan support 1075 can support the blower fan housing from below. Thus, the blower fan support 1075 can form a portion of the bottom surface of the cabinet 100 as a portion of the base 105 or the bottom plate 103.

Accordingly, the rear protrusion 140 has the support insertion portion 1482 at a lower end of the rear outer circumferential surface 148 such that the blower fan support 1075 can be inserted thereinto, and the support insertion portion 1482 positioned below the blower fan 1071 can be inserted thereinto.

A portion of the blower fan support 1075 can protrude downwardly of the support insertion portion 1482 and extend rearwardly of the support insertion portion 1482 to support the rear protrusion 140 including the support insertion portion 1482 and the rear plate 110 from below.

FIG. 32 shows that a lower portion of the blower fan support 1075 extends rearwards from the lower portion of the support insertion portion 1482 to support the rear plate 110 from below.

In some implementations, a depth at which the support insertion portion 1482 is recessed rearwards from the rear outer circumferential surface 148 can be the same as a length at which the rear outer circumferential surface 148 extends from the rear reference surface 111. That is, the support insertion portion 1482 can be formed in a shape in which the entire rear outer circumferential surface 148 is opened downwards.

In the inlet extension 138, a portion of the extended circumferential surface 1385 can extend rearwards from the support insertion portion 1482. That is, the extended recessed surface can be located at the rear of the support insertion portion 1482, the extension space 1381 can be shielded or covered downwardly by the extended circumferential surface 1385, and the space inside the rear protrusion 140 can be opened downwardly from the support insertion portion 1482.

In some implementations, as the support insertion portion 1482 is defined in the rear outer circumferential surface 148 of the rear protrusion 140 located at the lower end of the rear plate 110, a length of the blower fan support 1075 located below the blower fan housing can be effectively secured.

In some implementations, in the rear outer circumferential surface 148, the support insertion portion 1482 can be located at the lower end of the rear plate 110, and the remaining portion except for the support insertion portion 1482 can be spaced upwardly from the lower end of the rear plate 110.

In some implementations, the inlet extension 138 can extend from the air flow portion 130 toward the lower end of the rear plate 110 to be connected with the air supply 106 located below the drum 200, and the rear protrusion 140 surrounding the air flow portion 130 and the inlet extension 138 can also extend from the vicinity of the inlet extension 138 to the lower end of the rear plate 110.

The rear outer circumferential surface 148 located below the inlet extension 138 can define the support insertion portion 1482 while forming a portion of the lower end of the rear plate 110. The remaining portion of the rear outer circumferential surface 148 except for the support insertion portion 1482 can be located above the lower end of the rear plate 110 to prevent unnecessary expansion of an area of the rear protrusion 140.

That is, in some implementations, the inlet extension 138 can protrude rearwards from the rear protrusion 140 as a portion of the rear protrusion 140 extends to the lower end of the rear plate 110, the support insertion portion 1482 can be defined at the lower end of the rear plate 110, and the remaining portion can be positioned above the lower end of the rear plate 110 to prevent an unnecessary increase in an external space rearwardly occupied by the cabinet 100.

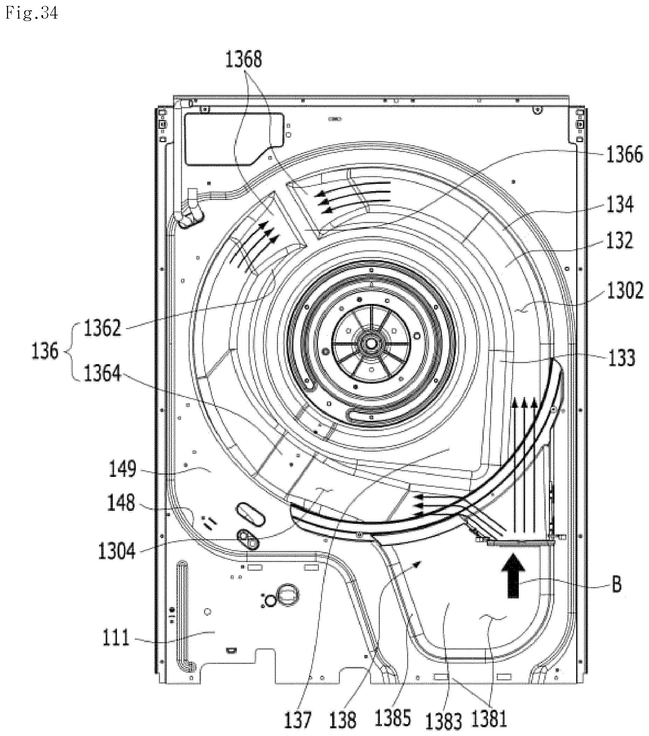

FIG. 34 is a diagram illustrating an air guide provided in the air flow portion 130.

Referring to FIG. 34, the air guide can guide the flow of air inside the air flow portion 130, and can include an outflow guide 136 and an inflow guide 137. The outflow guide 136 can protrude from the flow recessed surface 132 toward the air passage 230 to guide the flow of air toward the air passage 230.

The outflow guide 136 can include a first outflow guide 1362 and a second outflow guide 1364. The first outflow guide 1362 can be located on the opposite side of the air supply 106 with respect to the center of the air flow portion 130, and can have a maximum protrusion height in the flow recessed surface 132 equal to or greater than the depth of the flow space 135.

The second outflow guide 1364 can be positioned between the first outflow guide 1362 and the air supply 106 along the circumference of the flow space 135, and can have a maximum protrusion height in the flow recessed surface 132 less than the depth of the flow space 135.

The inflow guide 137 can be disposed on the flow inner circumferential surface 133, and protrude toward the air supply 106 to guide the flow of air supplied from the air supply 106.

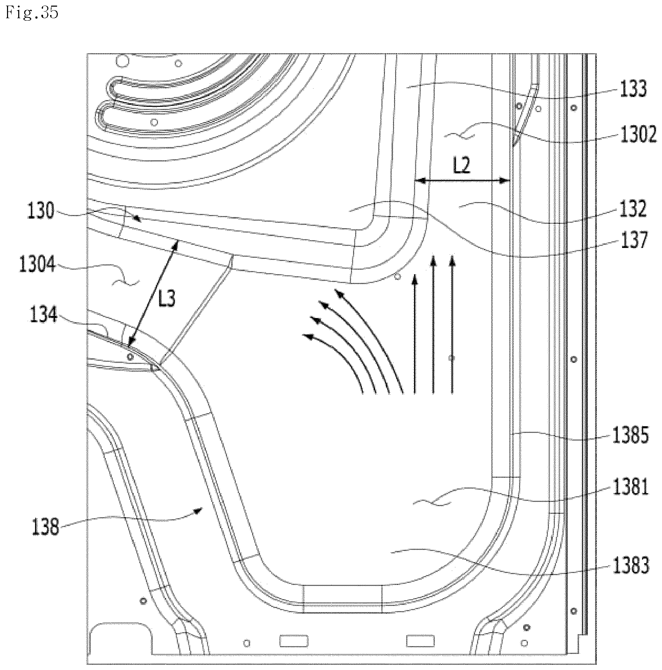

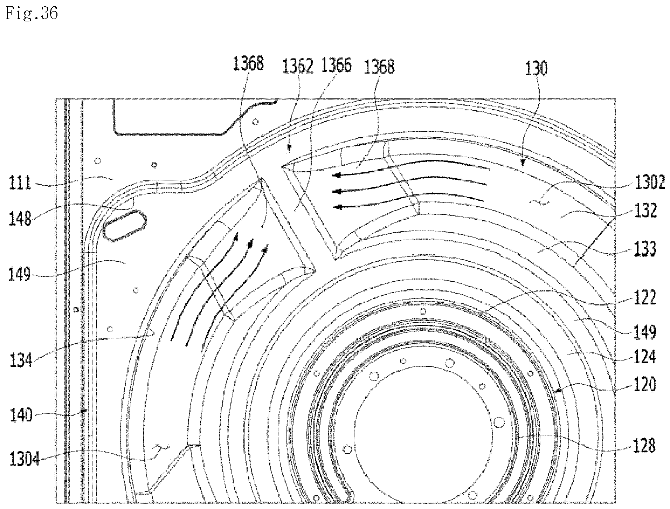

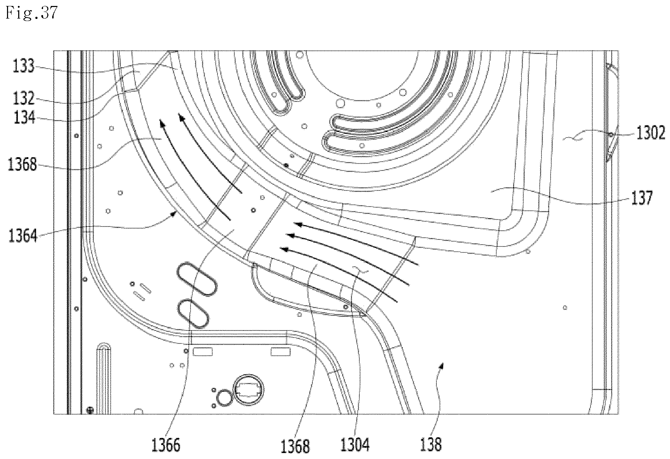

FIG. 35 is a diagram illustrating the inflow guide 137, FIG. 36 is a diagram illustrating the first outflow guide 1362, and FIG. 37 is a diagram illustrating the second outflow guide 1364.

Referring to FIGS. 34 to 37, the air guide will be described in detail as follows.

The air guide can protrude in the flow space 135 to guide the flow of air. The air guide can be formed in a shape protruding from the flow space 135 to guide the air flow.

The air supplied from the air supply 106 flows in the flow space 135, and the air guide guides the flow of air flowing in the flow space 135, thereby ameliorating a flow resistance, improving uniformity of the air flowing out to the drum rear surface 210, or reducing the turbulent flow to increase the air flow rate of the circulation flow channel and increase the drying efficiency of the drum 200.

The air guide can be formed in various shapes at various locations. For example, the air guide can be formed in a shape protruding into the flow space 135 from one of the flow outer circumferential surface 134, the flow inner circumferential surface 133, and the flow recessed surface 132.

The air guide can be manufactured separately and coupled to an inner surface of the air flow portion 130, that is, the flow outer circumferential surface 134, the flow inner circumferential surface 133, and the flow recessed surface 132 can be integrally molded with the inner surface.

The air guide can be positioned to face the air supply 106 to guide the flow of air introduced from the air supply 106, or can be positioned at any point in the flow space 135 that is spaced apart from the air supply 106 to guide the flow of air flowing through the flow space 135.

The air guide can protrude from the inner surface of the air flow portion 130 toward the drum rear surface 210 to guide the air in the flow space 135 to flow to the drum rear surface 210, or can protrude toward the air supply 106 to guide a flow direction of the air introduced into the flow space 135.

In some implementations, referring to FIGS. 34 and 35, the laundry treating apparatus 10 can include the air supply 106 and the inlet extension 138 described above, and the air flow portion 130 can include the inflow guide 137.

The inflow guide 137 can correspond to the air guide, and the inflow guide 137 can be positioned to face the inlet extension 138 to guide a direction in which the air discharged from the air supply 106 flows into the air flow portion 130.

As described above, the air flow portion 130 can be defined in an approximately annular shape to surround the driver mounting portion 120, the inlet extension 138 extends from one side of the air flow portion 130, and the air supply 106 discharges the air from the inlet extension 138, thus, the air flowing into the air flow portion 130 from the air supply 106 can be introduced by being branched into one direction and the other direction based on the circumferential directions of the air flow portion 130.

In FIGS. 34 and 35, a state in which the air flowing into the flow space 135 from the air supply 106 flows by being branched into one direction and the other direction is conceptually represented by an arrow.

In some implementations, the air flow portion 130 can include a first extended flow channel 1302 extending along one direction of the circumferential directions of the air flow portion 130 based on the air supply 106, and a second extended flow channel 1304 extending in a direction opposite to said one direction.

That is, in the air flow portion 130, the first extended flow channel 1302 and the second extended flow channel 1304 can define the air flow portion 130 together to form one annular shape. The first extended flow channel 1302 and the second extended flow channel 1304 can be conceptually distinguished and defined based on the extending directions on the basis of the air supply 106.

That is, a portion of the air flow portion 130 extending in one direction with respect to the air supply 106 can be defined as the first extended flow channel 1302, and the remainder extending in the other direction can be defined as the second extended flow channel 1304.

The first extended flow channel 1302 and the second extended flow channel 1304 can be defined in a shape connected to each other to form the annular shape together. The first extended flow channel 1302 and the second extended flow channel 1304 can be connected to each other on the opposite side of the air supply 106 with respect to the air supply 106 and the center of the air flow portion 130.

FIGS. 34 and 35 show the first extended flow channel 1302 extending in one direction and the second extended flow channel 1304 extending in the other direction with respect to the air supply 106.

In some implementations, said one direction may be a counterclockwise direction when viewing the air flow portion 130 from the front, and the other direction may be a clockwise direction. However, when necessary, said one direction may correspond to the clockwise direction and the other direction may correspond to the counterclockwise direction.

When the first extended flow channel 1302 and the second extended flow channel 1304 are defined in the air flow portion 130, in some implementations, the air introduced into the flow space 135 from the air supply 106 can be branched and introduced into the first extended flow channel 1302 and the second extended flow channel 1304.

Accordingly, the laundry treating apparatus 10 can guide the inflow direction and the inflow amount of the air introduced from the air supply 106 by disposing the inflow guide 137 at a position facing the air supply 106.

The inflow guide 137 can protrude frontwards from the inlet recessed surface, protrude from the flow inner circumferential surface 133 toward the air supply 106, or protrude from the flow outer circumferential surface 134.

The inflow guide 137 can be at least partially positioned on the air discharge direction B of the air supply 106, and can be located approximately between the center of the air flow portion 130 and the air supply 106. That is, the inflow guide 137 can be positioned between the driver mounting portion 120 and the air supply 106.

The inflow guide 137 can guide the flow of air discharged from the air supply 106 to adjust a ratio of flow rates of the air introduced into the first extended flow channel 1302 and the second extended flow channel 1304 or appropriately adjust the flow direction of the air introduced into each of the first extended flow channel 1302 and the second extended flow channel 1304, thereby improving the fluidity.

That is, the laundry treating apparatus 10 can supply the air from the drum rear surface 210 by forming the effective flow of air by improving the air uniformity of the entire air flow portion 130 through the inflow guide 137, or, when necessary, increasing the flow rate of one of the first extended flow channel 1302 and the second extended flow channel 1304.

In some implementations, the inflow guide 137 can be disposed on the flow inner circumferential surface 133 and protrude from the air supply 106. FIGS. 34 and 35 show the inflow guide 137 disposed on the flow inner circumferential surface 133.

When the inflow guide 137 protrudes from the flow recessed surface 132 or the like, a portion of the air whose flow direction is guided when being in contact with the inflow guide 137 can flow along the circumference of the inflow guide 137. Accordingly, the air may not effectively follow the intended flow direction through the inflow guide 137 or may form the turbulent flow.

Therefore, in some implementations, as the inflow guide 137 is disposed on the flow inner circumferential surface 133, the inflow guide 137 can easily protrude from the air supply 106 and can effectively guide the flow direction of air.

In some implementations, in the air flow portion 130, a portion of the flow inner circumferential surface 133 can extend to protrude toward the air supply 106 to form the inflow guide 137.

In some implementations, the inflow guide 137 can correspond to a portion of the flow inner circumferential surface 133. That is, a portion of the flow inner circumferential surface 133 facing the air supply 106 can protrude toward the flow space 135 to form the inflow guide 137.

Accordingly, the inflow guide 137 can have a shape protruding frontwards from the flow recessed surface 132 such that a space is defined rearwardly. FIG. 19 is a view of the inflow guide 137 integrally formed with the flow recessed surface 132 and the flow inner circumferential surface 133 of the air flow portion 130 viewed from the rear.

In some implementations, as the inflow guide 137 is formed as the portion of the flow inner circumferential surface 133, the inflow guide 137 is molded together in the process of molding the rear plate 110 including the air flow portion 130 or the like, which may be advantageous in manufacturing.

In some implementations, referring to FIG. 34, in the flow inner circumferential surface 133, a portion corresponding to the inflow guide 137 can extend in a straight line, and the remaining portion can extend in a curved line.

As described above, in some implementations, the air flow portion 130 can be formed in an annular shape. Therefore, the flow outer circumferential surface 134 and the flow inner circumferential surface 133 can also form approximately annular circumferences and surround the flow space 135.

However, in some implementations, the flow inner circumferential surface 133 can include the inflow guide 137 protruding towards the air supply 106. Accordingly, the flow inner circumferential surface 133 can have an annular shape in which a portion of the circumference protrudes outward in the radial direction.

For example, the flow inner circumferential surface 133 can have a streamlined shape. That is, the flow inner circumferential surface 133 can have the streamlined shape of extending in a curve corresponding to the circumferential shape of the circle in a portion except for the inflow guide 137, and extending straight from the inflow guide 137 towards the air supply 106.

The inflow guide 137 can be formed in a shape that becomes narrower in a direction toward the air supply 106 based on the circumferential direction of the air flow portion 130. That is, the inflow guide 137 can have a shape protruding sharply from the flow inner circumferential surface 133 toward the air supply 106.

Accordingly, in some implementations, the air discharged from the air supply 106 can be effectively separated and flowed through the inflow guide 137 extending with an outer portion in an approximately straight shape.

Furthermore, the air branched into the first extended flow channel 1302 and the second extended flow channel 1304 through the inflow guide 137 can be improved in the fluidity as the flow resistance and the turbulent flow are effectively ameliorated by the flow inner circumferential surface 133, which extends in a curve corresponding to the circumferential shape.

In some implementations, in the air supply 106, an amount of air flowing toward the first extended flow channel 1302 is greater than an amount of air flowing toward the second extended flow channel 1304.

In addition, the inflow guide 137 can guide the portion of the air flowing toward the first extended flow channel 1302 toward the second extended flow channel 1304.

In some implementations, the air supply 106 can be formed such that the air is discharged at a location closer to the first extended flow channel 1302 among the first extended flow channel 1302 and the second extended flow channel 1304. Accordingly, the amount of air supplied to the first extended flow channel 1302 can be greater than the amount of air supplied to the second extended flow channel.

That is, in some implementations, as the air flow rates of the first extended flow channel 1302 and the second extended flow channel 1304 are set differently, a region in which the air is intensively discharged of the open front surface 131 of the air flow portion 130 can be set, and the air can be efficiently supplied into the drum 200.

The flow rates of air supplied to the first extended flow channel 1302 and the second extended flow channel 1304 can be determined through flow analysis of the air introduced into and discharged from the drum 200, or can be determined from a strategic aspect in consideration of the drying efficiency.

For example, the laundry treating apparatus 10 can supply a large amount of air to the air passage 230 through the open front surface of the first extended flow channel 1302 as the air is concentrated to the first extended flow channel 1302, and can supply the air to the air passage 230 through the front surface of the second extended flow channel 1304 while relieving the flow resistance of the first extended flow channel 1302 by flowing a portion of air to the second extended flow channel 1304.

Referring to FIG. 34, as described above, the air supply 106 can be positioned to be biased to one side in the lateral direction below the drum 200. In this case, one of the first extended flow channel 1302 and the second extended flow channel 1304 can be located at a relatively lower portion of the air flow portion 130, and the other can be located at a relatively upper portion of the air flow portion 130.

Even when being partially lifted along the rotation direction of the drum 200 from the inner surface of drum 200 by the rotation of the drum 200 in the drying process, the laundry accommodated inside the drum 200 may be distributed generally at the lower portion inside the drum 200 by a self-weight.

In this case, supplying the air from the air passage 230 to a region corresponding to the lower portion inside the drum 200 may cause strong flow resistance by the laundry inside the drum 200, which may be disadvantageous in air circulation.

Therefore, the laundry treating apparatus 10 can relatively increase the flow rate of air supplied to the first extended flow channel 1302 located on one side in the lateral direction of the air flow portion 130 and above the air flow portion 130, and decrease the flow rate of air supplied to the second extended flow channel 1304 located on the other side in the lateral direction of the air flow portion 130 and below the air flow portion 130, thereby effectively reducing the flow resistance of air supplied to the air passage 230 and supplying the air into the drum 200.

In addition, flowing the air only into the first extended flow channel 1302 may be disadvantageous because only a limited flow channel is used in the entire air flow portion 130, and thus the flow resistance of the first extended flow channel 1302 is increased.

Therefore, in some implementations, while increasing the air flow rate of the first extended flow channel 1302, an amount of air equal to or greater than a certain amount is flowed into the second extended flow channel 1304, so that it is possible to ameliorate the flow resistance in the entire air flow portion 130 and to improve the uniformity of the outflowing air, thereby performing the effective drying process.

In the air supply 106, the air discharge direction B can be set in terms of design, such as a direction in which the air outlet through which the air is discharged from the fan duct 108 is directed. In one example, the blower fan 1071 that causes the air flow in the air supply 106 can discharge the air in a tangential direction thereof, and the tangential direction of the blower fan 1071, that is, the flow direction of air discharged from the blower fan 1071 can be directed toward the first extended flow channel 1302.

That is, in some implementations, the blower fan housing can be constructed such that a portion thereof in connection with the fan duct 108 faces toward the first extended flow channel 1302 as the tangential direction of the blower fan 1071, the fan duct 108 can also extend generally parallel to the tangential direction of the blower fan 1071, and a portion where the air outlet is opened, that is, where the air is discharged can be located closer to the first extended flow channel 1302 than to the second extended flow channel 1304, so that a relatively large amount of air can be supplied to the first extended flow channel 1302 while minimizing the turbulent flow of the air from the blower fan 1071 to the first extended flow channel 1302.

However, as described above, because it is necessary to provide the air flow rate equal to or greater than the certain amount to the second extended flow channel 1304, the air discharge direction B of the air supply 106 may not be completely directed toward the first extended flow channel 1302, or a portion of the air discharged from the air supply 106 may flow out of the first extended flow channel 1302.

In addition, the inflow guide 137 may separate a portion of the air flowing mainly to be introduced into the first extended flow channel 1302 by the air supply 106 to flow the separated air into the second extended flow channel 1304 instead of the first extended flow channel 1302.

That is, the inflow guide 137 can be disposed closer to the first extended flow channel 1302, and can branch the flow of the portion of air toward the first extended flow channel 1302 to be directed to the second extended flow channel 1304. For example, an end of the inflow guide 137 protruding from the flow inner circumferential surface 133 can be disposed closer to the first extended flow channel 1302 than to the second extended flow channel 1304.

In some implementations, the driver 400 can rotate the drum 200 such that the drum 200 rotates more in the other direction than in said one direction in the drying process of the laundry.

In addition, the air of the first extended flow channel 1302 flowing along said one direction can be introduced into the drum 200 while the drum 200 is rotated in the other direction.

Specifically, in the treating laundry treating apparatus 10, in the drying process of the laundry, the driver 400 can rotate the drum 200 and the air can be supplied into the drum 200 through the air flow portion 130.

The driver 400 can rotate the drum 200 such that, while the air is supplied from the air flow portion 130, the drum 200 rotates more in said other direction than in the one direction. The rotation direction and the rotation speed of the driver 400 can be adjusted by a controller.

As described above, in some implementations, the first extended flow channel 1302 can extend in one direction from the air supply 106, and the second extended flow channel 1304 can extend in the other direction.

Accordingly, the air flowing through the first extended flow channel 1302 can flow in said one direction, and the air flowing through the second extended flow channel 1304 can flow in the other direction.

In some implementations, as described above, the flow rate of air introduced into the first extended flow channel 1302 can be greater than the flow rate of air introduced into the second extended flow channel 1304. Therefore, it is important to improve the fluidity of the air supplied to the air passage 230 through the first extended flow channel 1302.

Accordingly, the controller can control the driver 400 in the drying process of the laundry to rotate the drum 200 such that the amount of rotation of the drum 200 in the other direction is greater than the amount of rotation in said one direction, so that a relative velocity of the air flowing in one direction along the first extended flow channel 1302 is increased with respect to that of the air in the air passage 230 rotating in the other direction, thereby effectively improving the amount of inflow into the drum 200 through the air passage 230.

In addition, as described above, when the drum 200 is rotated in the other direction, the laundry inside the drum 200 may be rotated in the other direction along the inner surface of the drum 200 at the lower portion of the inner drum 200 by friction with the drum circumferential surface 290, the laundry lifter 280, or the like.

In this connection, the laundry lifted upwards in the drum 200 may be dropped downwards from an uppermost end of the drum 200 or a point spaced apart in one direction from the uppermost end by the self-weight.

Therefore, inside the drum 200, a region spaced apart from the uppermost end of the drum 200 in the other direction has a low distribution of the laundry based on the inner surface of the drum 200, which may facilitate the air inflow, and has an increased contact area between the inflow air and the laundry, which may be advantageous in terms of the drying efficiency, so that the region spaced apart from the uppermost end of the drum 200 in the other direction may correspond to a region into which the air for drying the laundry is introduced in a concentrated manner.

Accordingly, in some implementations, a main rotation direction of the drum 200 is set to the other direction, and a large amount of air flows into the first extended flow channel 1302 extending in one direction from the air supply 106 or the inlet extension 138, so that the air can be effectively introduced into the drum 200 through the air flow portion 130, and the flow resistance of air can be effectively ameliorated to improve the drying efficiency of the laundry.

The drum 200 can be rotated only in the other direction in the entire drying process of the laundry, or can be rotated in one direction and the other direction, but have the rotation amount in the other direction greater than the rotation amount in one direction.

In one example, in addition to the case in which the main rotation direction of the drum 200 is determined based on the air flow rates of the first extended flow channel 1302 and the second extended flow channel 1304, the main rotation direction of the drum 200 can be determined first, and the air flow rates of the first extended flow channel 1302 and the second extended flow channel 1304 by the air supply 106 and the inflow guide 137 can be determined depending on the main rotation direction of the drum 200.

In some implementations, referring to FIGS. 34 and 35, the first extended flow channel 1302 and the second extended flow channel 1304 can be defined between the flow inner circumferential surface 133 and the flow outer circumferential surface 134, and the inflow guide 137 can be constructed such that a separation distance L2 from the flow outer circumferential surface 134 of the first extended flow channel 1302 is smaller than a separation distance L3 from the flow outer circumferential surface 134 of the second extended flow channel 1304.

As described above, in some implementations, the inflow guide 137 can be formed as a portion of the flow inner circumferential surface 133 protrudes toward the air supply 106. In one example, a protruding direction of the inflow guide 137 can be designed closer to the first extended flow channel 1302 than to the second extended flow channel 1304.

In the first extended flow channel 1302 and the second extended flow channel 1304, an air inflow region facing toward the air supply 106 can be defined between the inflow guide 137 and the flow outer circumferential surface 134. In the inflow guide 137, the separation distance L2 from the flow outer circumferential surface 134 of the first extended flow channel 1302 can be smaller than the separation distance L3 from the flow outer circumferential surface 134 of the second extended flow channel 1304.

For example, in some implementations, the inflow guide 137 can protrude along the radial direction of the air flow portion 130, and can protrude closer to the first extended flow channel 1302 than to the second extended flow channel 1304.

That is, the first extended flow channel 1302 can have a width defined by the inflow guide 137 and the flow outer circumferential surface 134 smaller than a width of the second extended flow channel 1304. A portion of the air flowing toward the first extended flow channel 1302 can be blocked from flowing into the first extended flow channel 1302 and can be directed toward the second extended flow channel 1304.

In one example, FIGS. 36 and 37 show the outflow guide 136. In some implementations, the air guide can include the outflow guide 136.

Referring to FIGS. 36 and 37, the outflow guide 136 can protrude from the flow recessed surface 132 that shields the flow space 135 from the rear in the air flow portion 130 toward the air passage 230 to guide the air in the flow space 135 to flow toward the air passage 230.

In some implementations, the air can flow along the circumferential direction of the air flow portion 130 in the flow space 135, and can be discharged frontwards through the open front surface 131 of the air flow portion 130. However, because the main flow direction of the air in the flow space 135 is not a forward direction, the laundry treating apparatus 10 can guide the air in the flow space 135 to flow frontwards through the outflow guide 136.

The outflow guide 136 can protrude from the flow recessed surface 132 frontwards, that is, toward the air passage surface 239. The air passing through an outflow portion can flow frontwards by protrusion of the outflow portion.

Accordingly, in some implementations, the air can be effectively discharged through the open front surface 131 from the air flow portion 130, and the air from the air flow portion 130 can be supplied into the drum 200 through the air passage 230.

A shape or the number of outflow guides 136 can vary. FIGS. 36 and 37 show a state in which the flow recessed surface 132 is formed to protrude frontwards to form the outflow guide 136.

In some implementations, the outflow guide 136 can be connected to the flow outer circumferential surface 134 and the flow inner circumferential surface 133. That is, the outflow guide 136 can be connected to the flow recessed surface 132, the flow outer circumferential surface 134, and the flow inner circumferential surface 133 to flow the air frontwards.

When there is a gap between the outflow guide 136 and the flow inner circumferential surface 133 or the flow outer circumferential surface 134, the air may flow to the space between the outflow portion and the flow inner circumferential surface 133 or the flow outer circumferential surface 134, so that the flow may not be guided frontwards by the outflow guide 136.

Accordingly, in some implementations, the outflow guide 136 can be connected to the flow outer circumferential surface 134 and the flow inner circumferential surface 133 to guide the flow of an entirety of air passing through the outflow guide 136 frontwards.

In some implementations, the outflow guide 136 can be formed as the flow recessed surface 132 is bent or curved toward the air passage 230. That is, the outflow guide 136 can be formed as a portion of the flow recessed surface 132.

For example, the outflow guide 136 can be molded on the rear plate 110 together in the process in which the air flow portion 130 is molded through the pressing method or the like. FIG. 19 shows the outflow guide 136 viewed from the rear.

The outflow guide 136 can be connected to the flow outer circumferential surface 134 and the flow inner circumferential surface 133. Therefore, a space in which the flow recessed surface 132 is recessed frontwards together with the flow outer circumferential surface 134 and the flow inner circumferential surface 133 can be defined at the rear of the outflow guide 136.

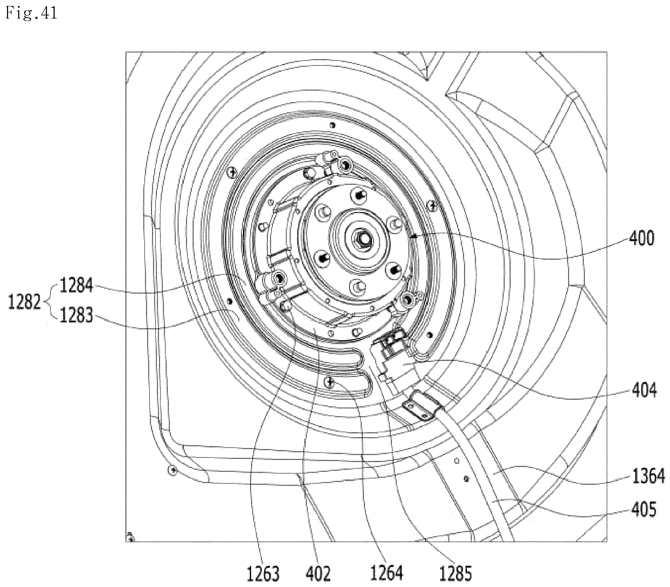

In some implementations, the laundry treating apparatus 10 can include a power line 405 (see FIG. 41). The power line 405 can be withdrawn from the driver mounting portion 120 at the rear of the rear plate 110 and can supply power to the driver 400.

The power line 405 can extend rearwardly from the driver mounting portion 120 along the mounting side surface 124 and/or the mounting front surface 122 to be withdrawn outwardly from the driver mounting portion 120 at the rear of the rear plate 110. The power line 405 can be connected to a power port 404 disposed on the mounting front surface 122 or the mounting side surface 124 of the driver mounting portion 120.

FIG. 41 shows the power port 404 and the power line 405. The driver 400 disposed at the rear of the driver mounting portion 120 can be driven by being supplied with the power from the power port 404 by being coupled to the power port 404.

In some implementations, the air flow portion 130 can have a space in which the power line 405 extends defined as a rear portion of the outflow guide 136 is recessed frontwards. As described above, in some implementations, a portion of the flow recessed surface 132 can be raised to protrude frontwards to form the outflow guide 136.

The outflow guide 136 can be connected to the flow outer circumferential surface 134 and the flow inner circumferential surface 133. Accordingly, a space that is opened along the radial direction of the air flow portion 130 and is recessed frontwards can be defined at the rear of the outflow guide 136.

The power line 405 extending from the driver mounting portion 120 can extend along the rear surface of the outflow guide 136 to extend outwardly of the air flow portion 130 while crossing the outflow guide 136. The power line 405 can be recessed into the cabinet 100 through an extended protruding region of the rear protrusion 140.

In some implementations, when the air flow portion 130 surrounding the driver mounting portion 120 can protrude rearwards from the rear plate 110, and the power line 405 extending outwardly of the driver mounting portion 120 at the rear of the rear plate 110 extends outwardly of the air flow portion 130 while crossing the air flow portion 130, an extended length of the power line 405 can be increased by the air flow portion 130 protruding rearwards.

In addition, in some implementations, the rear cover 500 can be coupled to the rear plate 110 from the rear, and the power line 405 extending across the flow recessed surface 132 or the like of the air flow portion 130 can cause structural interference between the rear cover 500 and the rear plate 110, such as separating the flow cover rear surface 514 of the rear cover 500 and the flow recessed surface 132 from each other, separating the flow cover outer circumferential surface 512 and the flow outer circumferential surface 134 from each other, or the like.

Therefore, in some implementations, at the same time as the outflow guide 136 is formed to flow the air in the flow space 135 frontwards, the outflow guide 136 is formed as a portion of the flow recessed surface 132 to define a space that is opened in the radial direction of the air flow portion 130 and that is recessed frontwards at the rear portion of the outflow guide 136, so that influence of the power line 405 withdrawn from the driver mounting portion 120 on the coupling of the rear cover 500 can be minimized and the power line 405 can extend while being stably fixed.

Referring back to FIGS. 36 and 37, in some implementations, the outflow guide 136 can include a guide central portion 1366 and a guide inclined portion 1368. The guide central portion 1366 can protrude from the flow recessed surface 132 toward the air passage 230.

The guide inclined portion 1368 can extend along the circumferential direction of the air flow portion 130 from the guide central portion 1366, and can have a height of protrusion from the flow recessed surface 132 decreasing as a distance from the guide central portion increases.

The outflow guide 136 including the guide central portion 1366 and the guide inclined portion 1368 can be formed in a shape of a hill in the flow space 135. The guide central portion 1366 can include a region of maximum protrusion from the flow recessed surface 132 in the outflow guide 136, and the guide inclined portions 1368 can extend in one direction and the other direction, respectively.

The guide inclined portion 1368 can extend in one direction or the other direction from the guide central portion 1366, and can have the height of protrusion from the flow recessed surface 132 gradually decreasing as the distance from the guide central portion 1366 increases.

The guide central portion 1366 and the guide inclined portion 1368 can be integrally formed with the flow recessed surface 132, the flow outer circumferential surface 134, and the flow inner circumferential surface 133, and can be formed in a curved or flat surface shape.

In some implementations, as the guide inclined portion is disposed on one side and/or the other side of the guide central portion protruding from the flow recessed surface 132 toward the air passage 230, the outflow guide 136 can minimize an occurrence of the turbulent flow of air passing through the outflow guide 136.

In one example, FIG. 34 shows the first outflow guide 1362 disposed in the air flow portion 130, and FIG. 36 is an enlarged view of the first outflow guide 1362.

In some implementations, the outflow guide 136 can include the first outflow guide 1362. The first outflow guide 1362 can be located on an opposite side of the inlet extension 138 with respect to the center of the air flow portion 130 formed in the annular shape.

As described above, the air flow portion 130 can include the first extended flow channel 1302 and the second extended flow channel 1304, and the first extended flow channel 1302 and the second extended flow channel 1304 can be connected to each other on the opposite side of the air supply 106 with respect to the center of the air flow portion 130, for example, the driver mounting portion 120.

That is, the air flowing in one direction along the first extended flow channel 1302 and the air flowing in the other direction along the second extended flow channel 1304 can meet on the opposite side of the air supply 106 in the air flow portion 130.

The air in the first extended flow channel 1302 and the air in the second extended flow channel 1304 meeting each other on the opposite side of the air supply 106 have flow directions opposite to each other. Accordingly, in the air flow portion 130, the air flows flowing opposite to each other may collide with each other on the opposite side of the air supply 106 to form the turbulent flow, generate noise and vibration, and cause a loss in the flow velocity and the hydraulic pressure.

Accordingly, in some implementations, as the first outflow guide 1362 is disposed on the opposite side of the air supply 106 in the air flow portion 130, that is, at a point where the first extended flow channel 1302 and the second extended flow channel 1304 are connected to each other, the air in the first extended flow channel 1302 and the air in the second extended flow channel 1304 can flow frontwards by the first outflow guide 1362 without colliding with each other and can be introduced into the drum 200 through the air passage 230.

Furthermore, as described above, it may be advantageous that the air is provided in a concentrated manner to the region inside the drum 200 and spaced apart from the uppermost end of the drum in one direction. It may be advantageous for the first extended flow channel 1302 facing the corresponding region, that the flow pressure is increased at the uppermost end of the drum and the region spaced apart from the uppermost end of the drum 200 in one direction to increase the flow rate of air flowing out frontwards.

Accordingly, in some implementations, the first outflow guide 1362 can be disposed at the connection point of the first extended flow channel 1302 and the second extended flow channel 1304. In the first extended flow channel 1302, the flow pressure can be increased on a portion upstream of the first outflow guide 1362 because of the increase in the flow resistance by the first outflow guide 1362.

That is, in the first extended flow channel 1302 extending along the upper portion of the air flow portion 130, a strong flow pressure of air may be formed by the first outflow guide 1362 at the upstream of the first outflow guide 1362, for example, at an uppermost end of the air flow portion 130 or a region spaced apart from the uppermost end of the air flow portion 130 in one direction. Accordingly, it is possible to effectively increase the flow rate of the air flowing out toward the air passage 230 at the uppermost end of the drum 200 or the region spaced apart from the uppermost end of the drum 200 in one direction.

In one example, referring to FIG. 36, in some implementations, the first outflow guide 1362 can have the maximum protrusion height equal to or greater than the depth of the flow space 135. For example, a protruding end of the first outflow guide, that is, the guide central portion 1366 can be positioned in parallel with the rearwardly protruding surface 149 or can protrude forwardly of the rearwardly protruding surface 149.

As described above, the first outflow guide 1362 can block the air in the first extended flow channel 1302 from colliding with the air in the second extended flow channel 1304 and increases the flow resistance of the first extended flow channel 1302 to form the maximum flow pressure at the upstream of the first outflow guide 1362.

That is, the first outflow guide 1362 can suppress the air from passing through the first outflow guide 1362 in one direction or the other direction. Accordingly, the height at which the first outflow guide 1362 protrudes from the flow recessed surface 132 can be equal to or greater than the depth of the air flow portion 130.

In one example, FIG. 34 shows the second outflow guide 1364 disposed in the air flow portion 130, and FIG. 37 is an enlarged view of the second outflow guide 1364.

Referring to FIGS. 34 and 37, in some implementations, the outflow guide 136 can include the second outflow guide 1364, and the second outflow guide 1364 can be disposed between the inlet extension 138 and the first outflow guide 1362 to guide the air flow in the flow space 135 toward the air passage 230.

The second outflow guide 1364 can be disposed between the first outflow guide 1362 and the inlet extension 138 or the air supply 106. That is, the second outflow guide 1364 can be positioned in the first extended flow channel 1302 or the second extended flow channel 1304 to guide the air passing through the second outflow guide 1364 to flow frontwards.

The air flowing along the flow space 135 can be discharged frontwards through the open front surface 131 of the air flow portion 130 as the flow pressure of the air is increased or the air is diffused. However, the air flow portion 130 may have different outflow amounts of air in a forward direction as different flow pressures are formed at locations.

In addition, in order to improve the drying efficiency of the laundry, it is possible to strategically increase the flow pressure of air in a specific region of the air flow portion 130 and increase the outflow amount of air.

Accordingly, in some implementations, the second outflow guide 1364 can be disposed in a region where the air flow pressure is too low for various reasons or in a region where the outflow amount of air needs to be increased from a strategic point of view to improve the drying efficiency or an energy efficiency.

By the second outflow guide 1364, the outflow amount of air supplied toward the air passage 230 can be increased in an entirety of the air flow portion 130, and the uniformity of the air discharged from the air flow portion 130 can be increased or an outflow amount of air at a specific location can be effectively improved.

In some implementations, the second outflow guide 1364 can be disposed on the second extended flow channel 1304.

As mentioned above, in some implementations, to improve the drying efficiency of the laundry and improve the fluidity of the air flowing into the drum 200, more air can flow from the second extended flow channel 1304 to the first extended flow channel 1302.

Therefore, the second extended flow channel 1304 may have a relatively small air flow rate in a relationship with the first extended flow channel 1302. Accordingly, the flow pressure of air in the second extended flow channel 1304 is relatively low, so that the outflow amount of air flowing frontwards may be small.

Accordingly, in some implementations, as the second outflow guide 1364 is disposed in the second extended flow channel 1304, the frontward flow of air can be formed while the air flowing through the second extended flow channel 1304 passes through the second outflow guide 1364, so that the outflow amount of air toward the air passage 230 can be effectively increased, and the uniformity of the air supplied to the air passage 230 can be improved in the entire air flow portion 130.

In one example, as described above, in some implementations, the air supply 106 can be constructed such that the space where the air is discharged from the inlet extension 138 to the flow space 135 is closer to the first extended flow channel 1302 than to the second extended flow channel 1304.

Accordingly, the air in the first extended flow channel 1302 can have a relatively high flow pressure of the air in the relationship with the second extended flow channel 1304, so that the outflow amount of air can be effectively secured. The second extended flow channel 1304 can ameliorate the flow pressure and the outflow amount of air through the second outflow guide 1364.

In some implementations, the second outflow guide 1364 can have the maximum protrusion height less than the depth of the flow space 135. In addition, the maximum protrusion height of the second outflow guide 1364 can be less than the maximum protrusion height of the first outflow guide 1362.

Unlike the first outflow guide 1362, the second outflow guide 1364 may be disposed on the first extended flow channel 1302 or the second extended flow channel 1304, so that the flow rate of the air flowing past the second outflow guide 1364 needs to be secured at a certain level.

That is, the second outflow guide 1364 may have the maximum protrusion height less than the depth of the flow space 135 to prevent the flow resistance of the air flowing through the air flow portion 130 from excessively increasing, and to allow the air to flow throughout the flow space 135 after passing through the second outflow guide 1364.

Therefore, in some implementations, the maximum protrusion height of the first outflow guide 1362 can be equal to or greater than the depth of the flow space 135, and the maximum protrusion height of the second outflow guide 1364 can be less than the depth of the flow space 135 and less than the maximum protrusion height of the first outflow guide 1362.

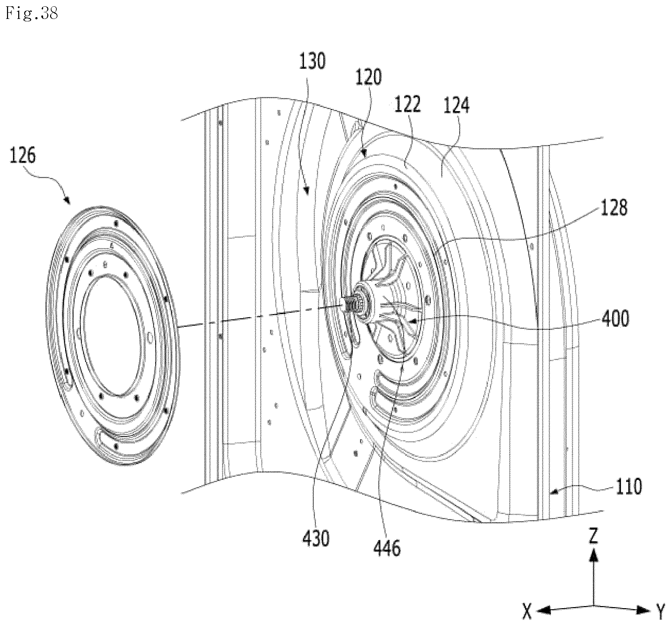

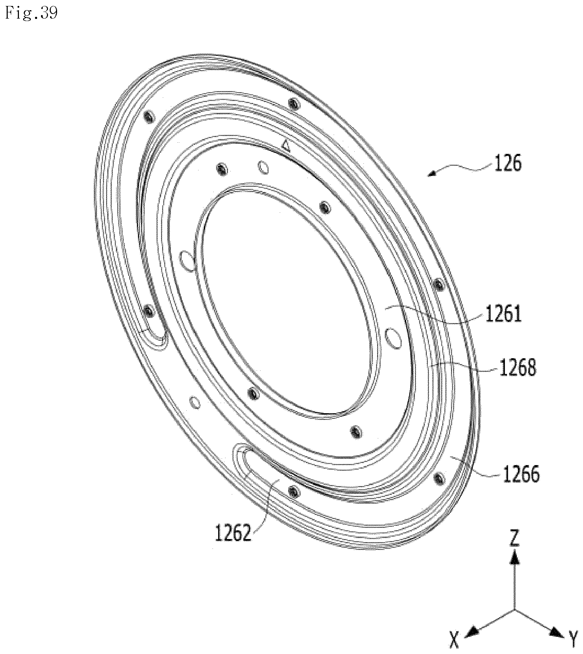

In one example, FIG. 38 shows the mounting bracket 126 coupled on the front surface of the driver mounting portion 120, and FIG. 39 shows a perspective view of the mounting bracket 126.

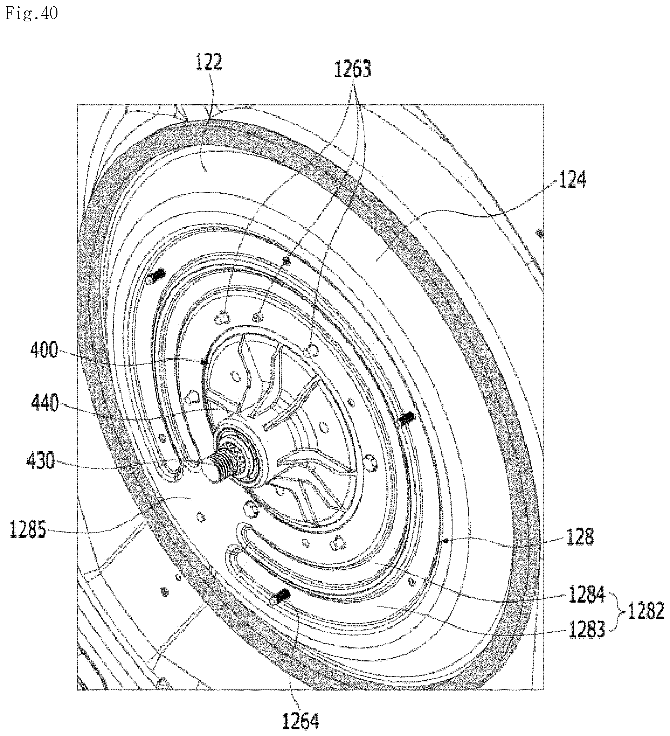

In addition, FIG. 40 shows a front view of the mounting front surface 122 including the bracket seating portion 128, and FIG. 41 is a rear view of the mounting front surface 122 in FIG. 40.

In some implementations, the driver 400 can be coupled to the driver mounting portion 120 from the rear, the mounting bracket 126 that covers at least a portion of the driver mounting portion 120 is coupled to the driver mounting portion 120 from the front, and the driver 400 can be fastened to the mounting bracket 126 through the driver mounting portion 120.

As described above, the driver 400 can be coupled to the driver mounting portion 120 from the rear. However, the driver mounting portion 120 can be defined as a portion of the rear plate 110. Therefore, in order to stably support the driver 400, which is a heavy vibrating body, and prevent deformation of the driver 400, the mounting bracket 126 can be coupled to the driver mounting portion from the front.

The mounting bracket 126 can be coupled to the mounting front surface 122 of the driver mounting portion 120. The bracket seating portion 128 to which the mounting bracket 126 is coupled can be defined in the mounting front surface 122, and the mounting bracket 126 can be seated in the bracket seating portion 128.

The mounting bracket 126 can be formed in an annular plate shape. That is, the mounting bracket 126 can be formed in a circular disk shape, and can have a center penetrated by the bearing extension 440 and the driving shaft 430 of the driver 400.

The shape of the mounting bracket 126 can correspond to the mounting front surface 122 of the driver mounting portion 120, and the mounting front surface 122 can be formed in a shape corresponding to the cross-sectional shape of the driver 400. For example, in some implementations, the driver 400 can have a circular cross-section, the mounting front surface 122 can be formed in a circular shape and be placed in front of the driver 400, and the mounting bracket 126 can be formed an annular shape to cover at least a portion of the mounting front surface 122 and can have the center penetrated by the driving shaft 430.

In some implementations, the driver 400 can be coupled directly to the mounting front surface 122, and the mounting bracket 126 can be coupled to the mounting front surface 122 and coupled to the driver 400 through the mounting front surface 122.

When the driver 400 is coupled to the mounting bracket 126 and the mounting bracket 126 is coupled to the mounting front surface 122 or the like, there is a limit in securing the rigidity of the driver mounting portion 120. As a coupling portion of the driver 400 and the mounting bracket 126 and a coupling portion of the mounting bracket 126 and the driver mounting portion 120 are separated from each other, a space required for the coupling structure can increase.

Accordingly, in some implementations, as the mounting bracket 126 and the driver 400 are independently and directly coupled to the mounting front surface 122 of the driver mounting portion 120, the rigidity of the driver mounting portion 120 can be effectively increased through the mounting bracket 126, and the fastening relationship between the mounting bracket 126 and the driver 400 can also be effectively formed, so that the driver 400 can be stably coupled.

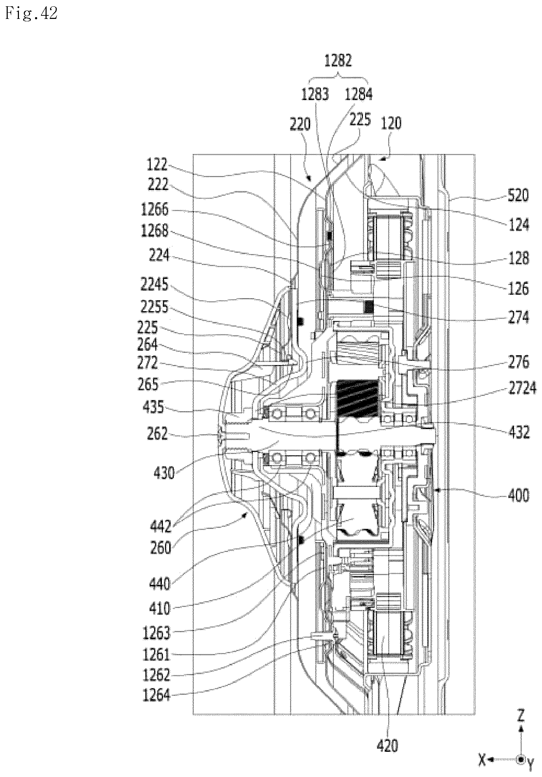

In one example, FIG. 42 is a diagram illustrating a cross-sectional view of the driver 400, the driver mounting portion 120, and the mounting bracket 126 coupled to each other. In some implementations, at least some of the driver 400, the driver mounting portion 120, and the mounting bracket 126 can be stacked on each other and fastened together.

That is, the mounting bracket 126 and the mounting front surface 122 can at least partially overlap each other along the front and rear direction, and the driver 400 and the mounting front surface 122 can at least partially overlap each other along the front and rear direction.

The mounting bracket 126, the mounting front surface 122, and the driver 400 can be stacked together in a region where they overlap each other, and can form the fastening relationship together in the stacked regions, so that the mounting bracket 126 can be used to reinforce the mounting front surface 122 while effectively coupling the driver 400.

Through the above structure, the mounting bracket 126 can be coupled with the driver 400 through the mounting front surface 122 without being directly in contact with the driver 400, thereby forming a compact coupling structure.

In some implementations, the mounting bracket 126 can include an integrated fastening portion 1261 and a mounting fastening portion 1262. The driver mounting portion 120 and the driver 400 can be fastened together to the integrated fastening portion 1261, and the mounting fastening portion 1262 can be fastened to the driver mounting portion 120 except for the driver 400.

Referring to FIGS. 38 and 39, in some implementations, the mounting bracket 126 can form a coupling relationship with the driver 400 through the integrated fastening portion 1261 without contacting the driver 400, and can reinforce the coupling force with the mounting front surface 122 through the mounting fastening portion 1262.

Specifically, the integrated fastening portion 1261 of the mounting bracket 126 can form the coupling relationship with the mounting front surface 122 and the driver 400 rearwardly. For example, the integrated fastening portion 1261 can pass through the mounting front surface 122 to form the coupling relationship with the driver 400.

Therefore, the mounting bracket 126 can be coupled to the mounting front surface 122 as well as to the driver 400 to effectively improve the coupling force of the driver 400.

In some implementations, the coupling between the mounting bracket 126 and the driver mounting portion 120 can be achieved as the mounting fastening portion 1262 of the mounting bracket 126 is spaced apart from the integrated fastening portion 1261. That is, the mounting bracket 126 can include, in addition to the integrated fastening portion 1261 coupled with the driver mounting portion 120 and the driver 400, the mounting fastening portion 1262 coupled with the driver mounting portion 120 except for the driver 400.

In some implementations, the mounting bracket 126 has the mounting fastening portion 1262 in addition to the integrated fastening portion 1261, so that it is possible to effectively improve the coupling force with the driver mounting portion 120 and effectively reinforce the rigidity of the driver mounting portion 120.

In some implementations, the laundry treating apparatus 10 can further include an integrated fastening member 1263 and a mounting fastening member 1264 as depicted in FIGS. 40 to 42. The integrated fastening member 1263 can pass through the integrated fastening portion 1261, the driver mounting portion 120, and the driver 400 together and can fasten them to each other. The mounting fastening member 1264 can be spaced apart from the driver 400 to pass through the mounting fastening portion 1262 and the driver mounting portion 120 and fasten them to each other.

The integrated fastening member 1263 can be formed integrally with the mounting bracket 126, the driver mounting portion 120, or the driver 400, or can be manufactured separately and pass through the mounting bracket 126, the driver mounting portion 120, and the driver 400 simultaneously.

The mounting fastening member 1264 can be formed integrally with the mounting bracket 126 or the driver mounting portion 120, or can be manufactured separately and pass through the mounting bracket 126 and the driver mounting portion 120 simultaneously. The integrated fastening member 1263 and the mounting fastening member 1264 can be formed in a shape of a bolt or the like.

In the mounting bracket 126, the integrated fastening portion 1261 can form coupling relationships with the mounting front surface 122 and the driver 400 simultaneously through the integrated fastening member 1263, and the mounting fastening portion 1262 can form a coupling relationship with the mounting front surface 122 through the mounting fastening member 1264.

In some implementations, the driver 400 can include a driver fastening portion 402 fastened to the driver mounting portion 120 by the integrated fastening member 1263, and the driver fastening portion 402, the driver mounting portion 120, and the integrated fastening portion 1261 can be stacked on each other and penetrated by the integrated fastening member 1263, as depicted in FIG. 41.

Specifically, the driver 400 can include the driver fastening portion 402 that can be coupled with the driver mounting portion 120 and the mounting bracket 126 by the integrated fastening member 1263. The driver fastening portion 402 can protrude outward from the outer circumferential surface of the driver 400.

The integrated fastening member 1263 can penetrate the mounting bracket 126 and the mounting front surface 122 rearwardly or forwardly, and the driver 400 can include the driver fastening portion 402 that can be penetrated by the integrated fastening member 1263.

In some implementations, as the driver fastening portion 402 protruding outward from the driver 400 is disposed, the integrated fastening member 1263 penetrated the mounting bracket 126 and the mounting front surface 122 is not inserted into the driver 400 and is exposed to the outside to facilitate the coupling.

In some implementations, the driver 400 can include the first driving part 410, the second driving part 420, and the driving shaft 430, as depicted in FIG. 42. The first driving part 410 can be accommodated inside the driver mounting portion 120 and fastened to the mounting front surface 122, the second driving part 420 can be coupled to the first driving part 410 from the rear of the first driving part 410, and can be spaced apart from the mounting front surface 122 and the mounting side surface 124, and the driving shaft 430 can extend forwardly from the first driving part 410 to pass through the mounting front surface 122 and be connected to the driver connection portion 220.

In some implementations, because the driving shaft 430 of the driver 400 is directly coupled to the drum 200, in order to rotate the drum 200 having a relatively high load, a transmission can be disposed to adjust the rotation speed of the driving shaft 430 and secure sufficient torque.

In the driver 400, the second driving part 420 can correspond to a power part that generates the rotational force of the drum 200, and the first driving part 410 can correspond to a shifting part that adjusts the rotation force transmitted from the second driving part 420 and provides the adjusted rotational force to the driving shaft 430 connected to the rear surface central portion 220.

That is, the first driving part 410 of the driver 400 can correspond to the transmission, for example, a reducer that reduces the rotation speed and increases the torque of the driving shaft 430, and the second driving part 420 can correspond to the power part such as the motor or the like that consumes power to generate the rotation force.

That is, the rotation force can be generated in the second driving part 420 corresponding to the power part, and a power shaft of the second driving part 420 can be connected to the first driving part 410 and the rotation force can be transmitted to the first driving part 410 corresponding to the reducer.

The first driving part 410 can rotate the driving shaft 430 by adjusting a rotation speed and a torque of the power shaft of the second driving part 420, and the driving shaft 430 can extend from the first driving part 410 and be connected to the rear surface central portion 220 to rotate the drum 200.

However, the first driving part 410 can correspond to the power part and the second driving part 420 can correspond to the reducer when necessary.

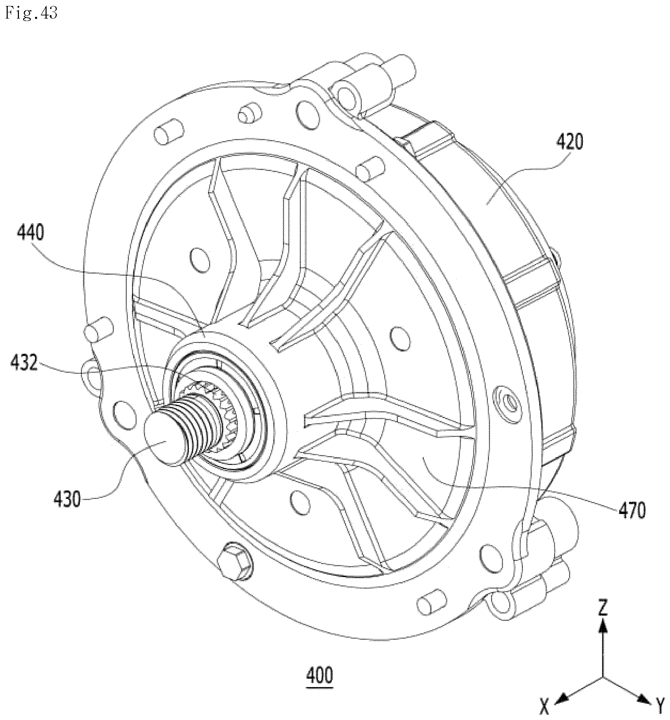

The driver 400 can have the first driving part 410 at the front portion thereof and have the second driving part 420 at the rear portion thereof. The first driving part 410 of the driver 400 can be coupled to the mounting front surface 122 while facing the mounting front surface 122 of the driver mounting portion 120, and the second driving part 420 can be fixed in position by being coupled to the first driving part 410. FIG. 43 shows the first driving part 410 coupled to the driver mounting portion 120.

As described above, the second driving part 420 can correspond to the power part, and the second driving part 420 can include a stator fixed to the first driving part 410 and a rotor rotatable with respect to the stator.

The stator can be coupled to the first driving part 410, and the rotor can be rotatably coupled to the stator while surrounding the stator. The power shaft of the second driving part 420 can be coupled to the stator and rotate together with the stator, and a rotational force of the stator, which consumes power to cause relative rotation with respect to the rotor, can be transmitted to the first driving part 410 corresponding to the shifting part through the power shaft.

The shifting part can include a gear set for the shifting therein. For example, the shifting part can have a built-in satellite gear set including a sun gear, a planetary gear, and a ring gear, and the power shaft can be decelerated by being connected to the satellite gear set.

The driving shaft 430 of the driver 400 can be rotated in connection with the satellite gear set of the first driving part 410, and can decrease in the rotation speed and increase in the torque in the relationship with the power shaft. The driving shaft 430 can extend from the first driving part 410 and be connected to the rear surface central portion 220 to rotate the drum 200.

In some implementations, the driver 400 in the form in which the second driving part 420 is coupled to the first driving part 410 from the rear is disposed. At least the portion of the first driving part 410 can be inserted into the driver mounting portion 120 that is recessed frontwards, so that the length of the driver 400 protruding rearwards from the rear plate 110 can be effectively reduced and the driver 400 can be stably fixed.

In addition, even when the second driving part 420 including the rotor and the stator has a larger cross-sectional area than the first driving part 410, because the first driving part 410 at the front portion of the driver 400 is coupled to the mounting front surface 122, an area of the coupling region coupled by the integrated fastening member 1263 on the mounting front surface 122 can be effectively reduced.

In some implementations, the mounting fastening portion 1262 can be located further away from the center of the driver mounting portion 120 than the integrated fastening portion 1261, as depicted in FIGS. 38 to 41.

The integrated fastening portion 1261 and the mounting fastening portion 1262 can correspond to regions penetrated by the integrated fastening member 1263 and the mounting fastening member 1264, respectively, and can include openings defined therein penetrated by the integrated fastening member 1263 and the mounting fastening member 1264, respectively.

In addition, as described above, in the integrated fastening portion 1261, the driver 400 forms the coupling relationship with the mounting bracket 126, whereas, in the mounting fastening portion 1262, the coupling between the mounting bracket 126 and the driver 400 is not made.

In some implementations, the integrated fastening portion 1261 where the coupling between the mounting bracket 126 and the driver 400 is made is positioned inwardly with respect to the radial direction of the mounting bracket 126 or the mounting front surface 122, and the mounting fastening portion 1262 where the mounting bracket 126 and the driver mounting portion 120 are coupled to each other except for the driver 400 is positioned outwardly, so that, even when a diameter of the driver 400 is small and an amount of the driver fastening portion 402 protruding from the driver 400 is small, the driver 400 can effectively form a fastening relationship with the mounting bracket 126 by the integrated fastening portion 1261.

In some implementations, the driver mounting portion 120 can protrude frontwards from the rear plate 110 and at least a portion of the driver 400 can be inserted into and coupled to the driver mounting portion 120 from the rear.

In addition, the driver connection portion 220 of the drum rear surface 210 can protrude frontwards from the drum rear surface 210, and at least a portion of the driver mounting portion 120 can be inserted into the driver connection portion 220 from the rear.

When the rear plate 110 is viewed from the rear, the driver mounting portion 120 is formed to be recessed frontwards, so that the driver 400 can be inserted into the driver mounting portion 120 to effectively reduce a rearwardly protruding length thereof.

In addition, as the driver connection portion 220 is formed to be recessed forwardly when the drum rear surface 210 is viewed from the rear, at least a portion of the driver mounting portion 120 and the driver 400 can be inserted into the driver connection portion 220, so that the separation distance between the drum rear surface 210 and the rear plate 110 can be effectively reduced, and the length in which the driver 400 protrudes rearwardly from the drum rear surface 210 can be effectively reduced.

In addition, the driver mounting portion 120 and the driver connection portion 220 can be disposed in front of the driver 400 to suppress or block the heat transfer from the drum rear surface 210 toward the driver 400, and the mounting bracket 126 can, together with the driver mounting portion 120, function as an insulating member between the drum rear surface 210 and the driver 400.

In some implementations, the driver mounting portion 120 can have a mounting reinforcement portion 1282 in the bracket seating portion 128, as depicted in FIGS. 39 and 40. The mounting reinforcement portion 1282 can protrude rearwards from the mounting front surface 122 and extend along a circumferential direction of the driver mounting portion 120.

The mounting reinforcement portion 1282 can be defined as a portion of the mounting front surface 122 or manufactured separately and coupled to the mounting front surface 122. The mounting reinforcement portion 1282 can be formed in a shape that protrudes rearwards when viewed from the rear of the mounting front surface 122.

The mounting reinforcement portion 1282 can be formed as a portion of the mounting front surface 122 is bent or curved rearwards. That is, the mounting reinforcement portion 1282 can include a space that is opened frontwards.

When the mounting front surface 122 is viewed from the rear, the mounting reinforcement portion 1282 can be in a form of a rib that protrudes rearwards and extends along a circumferential direction of the mounting front surface 122. When the mounting front surface 122 is viewed from the front, the mounting reinforcement portion 1282 can be in a form of a groove that is recessed rearwards and extends along the circumferential direction.

In some implementations, as mounting reinforcement portion 1282 is defined in the mounting front surface 122, bending of the mounting front surface 122 can be suppressed, which can effectively increase the rigidity of the mounting front surface 122.

In some implementations, the mounting bracket 126 can include a mounting guide 1266. The mounting guide 1266 can protrude toward the mounting reinforcement portion 1282, have a shape corresponding to the mounting reinforcement portion 1282, and be inserted into the mounting reinforcement portion 1282 from the front of the mounting reinforcement portion 1282.

The mounting guide 1266 can have a shape corresponding to the mounting reinforcement portion 1282. For example, the mounting guide 1266 can be formed in a shape of a rib that protrudes rearwards from the mounting bracket 126 and extends along the circumferential direction of the mounting bracket 126 or the mounting front surface 122. The mounting guide 1266 can be formed as a portion of the mounting bracket 126 is bent or curved to protrude rearwards.

The mounting guide 1266 can be positioned in front of the mounting reinforcement portion 1282. That is, in the process of coupling the mounting bracket 126 to the mounting front surface 122, the mounting guide 1266 can be inserted into the mounting reinforcement portion 1282 from the front of the mounting reinforcement portion 1282.

In some implementations, the rigidity of the mounting bracket 126 can be increased as the mounting guide 1266 is defined in the mounting bracket 126. Before the integrated fastening portion 1261 and the mounting fastening portion 1262 are coupled to the bracket seating portion 128 defined in the front surface of the mounting front surface 122, coupling positions thereof can be effectively guided through the insertion process between the mounting guide 1266 and the mounting reinforcement portion 1282.

In some implementations, the mounting reinforcement portion 1282 and the mounting guide 1266 can extend in an arc shape with one end and the other end spaced apart from each other. That is, the mounting reinforcement portion 1282 and the mounting guide 1266 can be formed in a circumferential shape with one side open.

As the mounting reinforcement portion 1282 and the mounting guide 1266 are formed in the arc shape, the mounting bracket 126 can be guided in a coupling regular position through the insertion relationship between the mounting reinforcement portion 1282 and the mounting guide 1266, and at the same time, can be effectively guided in a coupling rotation position thereof with respect to the circumferential direction.

Accordingly, in the mounting bracket 126, at the same time the integrated fastening portion 1261 and the mounting fastening portion 1262 are placed at correct positions for the coupling on the mounting front surface 122, rotation positions thereof can also be determined such that the holes penetrated by the integrated fastening member 1263 and the mounting fastening member 1264 can be in place.

In some implementations, in the driver mounting portion 120, the power port 404 connected to the driver 400 can be disposed in a spaced region 1285 between one end and the other end of the mounting reinforcement portion 1282, as depicted in FIG. 41.

The power port 404 can be connected to the driver 400, and the aforementioned power line 405 can be connected to the power port 404. The power port 404 can supply the driver 400 with the power transmitted through the power line 405. The power port 404 can be located at the rear portion of the driver mounting portion 120. That is, the power port 404 can be coupled onto the rear surface of the mounting front surface 122 inside the driver mounting portion 120.

The power line 405 withdrawn from the power port 404 can extend across the air flow portion 130 past a driver side surface as described above. A bracket of the power line 405 for fixing the power line 405 can be disposed on the driver side surface.

In some implementations, at the same time the mounting reinforcement portion 1282 is defined in the mounting front surface 122 to effectively increase the rigidity of the mounting front surface 122, the mounting reinforcement portion 1282 is formed in the circumferential shape with the one side open to define the spaced region 1285 between one end and the other end thereof, so that the power port 404 can be efficiently placed and fixed in the spaced region 1285 in the rear surface of the mounting front surface 122.

In some implementations, the mounting bracket 126 can further include a bracket reinforcement portion 1268. The bracket reinforcement portion 1268 can protrude forwardly from the mounting bracket 126 and extend along the circumferential direction of the mounting bracket 126.

The bracket reinforcement portion 1268 can be molded integrally with the mounting bracket 126, or manufactured separately and coupled to the mounting bracket 126. The bracket reinforcement portion 1268 can have a rib shape that protrudes frontwards and extends along the circumferential direction of the mounting bracket 126 when the mounting bracket 126 is viewed from the front.

In addition, when the mounting bracket 126 is viewed from the rear, the bracket reinforcement portion 1268 can be in a shape of a groove that is recessed frontwards and opened rearwards.

That is, on the front surface of the mounting bracket 126, the bracket reinforcement portion 1268 can be formed in the shape of the rib that protrudes frontwards, and the mounting guide 1266 is formed in the shape of the groove that is recessed rearwards. On the rear surface of the mounting bracket 126, the bracket reinforcement portion 1268 can be formed in the shape of the groove that is recessed frontwards, and the mounting guide 1266 can be formed in the shape of the rib that protrudes rearwards.

The mounting bracket 126 can be effectively increased in the rigidity as the bracket reinforcement portion 1268 disposed together with the mounting guide 1266. Protruding directions of the mounting guide 1266 and the bracket reinforcement portion 1268 can be opposite to each other, thereby effectively increasing the rigidity.

In some implementations, the mounting reinforcement portion 1282 can include a first mounting reinforcement portion 1283 and a second mounting reinforcement portion 1284 having different diameters and spaced apart from each other along the radial direction of the driver mounting portion 120.

The mounting guide 1266 can be disposed to face the first mounting reinforcement portion 1283 and inserted into the first mounting reinforcement portion 1283, and the bracket reinforcement portion 1268 can be disposed to face the second mounting reinforcement portion 1284 to define a space between the bracket reinforcement portion 1268 and the second mounting reinforcement portion 1284.

The mounting reinforcement portion 1282 can include a first mounting reinforcement portion 1283 and a second mounting reinforcement portion 1284. The first mounting reinforcement portion 1283 and the second mounting reinforcement portion 1284 can have different diameters and be spaced apart from each other along the radial direction of the mounting front surface 122.

For example, based on the radial direction of the mounting front surface 122, the first mounting reinforcement portion 1283 can be positioned further from the center of the mounting front surface 122 than the second mounting reinforcement portion 1284. However, when necessary, the first mounting reinforcement portion 1283 can be disposed closer to the center of the mounting front surface 122.

The mounting guide 1266 of the mounting bracket 126 can be positioned in front of the first mounting reinforcement portion 1283, and the bracket reinforcement portion 1268 can be positioned in front of the second mounting reinforcement portion 1284. Accordingly, when the mounting bracket 126 is seated on the bracket seating portion 128 of the mounting front surface 122, the mounting guide 1266 can be inserted into the first mounting reinforcement portion 1283 and the bracket reinforcement portion 1268 can define a closed space together with the second mounting reinforcement portion 1284.

The closed space can function as a vibration absorption space that attenuates the vibration generated by the driver 400, and can function as an insulating space that suppresses or blocks the heat transfer between the driver 400 and the interior of the drum 200.

In some implementations, the integrated fastening portion 1261 can be located inwardly of the bracket reinforcement portion 1268 with respect to the radial direction of the mounting bracket 126.

In some implementations, the integrated fastening portion 1261 can be defined as an annular region extending along the circumferential direction of the mounting bracket 126. A plurality of openings through which the aforementioned integrated fastening member 1263 passes can be defined in the integrated fastening portion 1261.

The integrated fastening portion 1261 can be located inwardly of the bracket reinforcement portion 1268. That is, a hole defined at the center of the mounting bracket 126 can be surrounded by the integrated fastening portion 1261, and the integrated fastening portion 1261 can be disposed at an inner circumference of the mounting bracket 126.

In some implementations, as the integrated fastening portion 1261 is positioned inwardly of the bracket reinforcement portion 1268, a minimum distance to the driver 400 can be achieved based on the radial direction of the mounting bracket 126, which is advantageous for the fastening of the driver 400 and the mounting front surface 122.

In some implementations, the mounting fastening portion 1262 can be positioned outwardly of the bracket reinforcement portion 1268 with respect to the radial direction of the mounting bracket 126.

In some implementations, the mounting fastening portion 1262 can be defined as an annular region extending along the circumferential direction of the mounting bracket 126. The mounting fastening portion 1262 can have a plurality of openings through which the aforementioned mounting fastening member 1264 passes. The mounting fastening portion 1262 can be located outwardly of the bracket reinforcement portion 1268. That is, the mounting fastening portion 1262 can be disposed at the outer circumference of the mounting bracket 126.

Because the bracket reinforcement portion 1268 protrudes forwardly of the mounting bracket 126 and defines the closed space together with the second mounting reinforcement portion 1284 of the mounting front surface 122, the disposition of the integrated fastening portion 1261 and the mounting fastening portion 1262 on the bracket reinforcement portion 1268 may be disadvantageous in forming the fastening relationship.

Therefore, in some implementations, the mounting fastening portion 1262 can be disposed outwardly of the bracket reinforcement portion 1268, for example, at the outer circumference of the mounting bracket 126 to be in close contact with the mounting front surface 122 to form the coupling relationship, and be spaced apart from the integrated fastening portion 1261 to improve an assembly property.

In some implementations, the mounting guide 1266 can be disposed outwardly of the bracket reinforcement portion 1268, and the mounting fastening portion 1262 can be positioned within the mounting guide 1266.

As described above, the bracket reinforcement portion 1268 is spaced apart in the relationship with the mounting front surface 122, so that it may be disadvantageous in forming the coupling relationship when the integrated fastening portion 1261 or the mounting fastening portion 1262 is disposed on the bracket reinforcement portion 1268.

In some implementations, the mounting guide 1266 is positioned outwardly of the bracket reinforcement portion 1268 with respect to the radial direction of the mounting bracket 126, and is inserted into the first mounting reinforcement portion 1283 and is in contact with the first mounting reinforcement portion 1283, which is advantageous in forming the fastening relationship through the fastening member.

Accordingly, in some implementations, as the mounting fastening portion 1262 is defined within the mounting guide 1266, the diameter of the mounting bracket 126 can be minimized and the mounting guide 1266 and the mounting fastening portion 1262 can be effectively disposed.

The mounting guide 1266 can have a plurality of openings through which the mounting fastening member 1264 passes, and the mounting guide 1266 itself can correspond to the mounting fastening portion 1262.

In some implementations, the driver 400 can include the driving shaft 430 and the bearing extension 440 described above, and the bearing extension 440 can pass through the driver mounting portion 120 and the mounting bracket 126 together, as depicted in FIG. 43. That is, the center of the mounting bracket 126 can be penetrated by the driving shaft 430 and the bearing extension 440.

FIG. 43 shows the driver 400 from which the second driving part 420 is removed, shows the driving shaft 430 and the bearing extension 440 extending forwardly from the first driving part 410, and shows a front end of the driving shaft 430 to which the shaft fixing member 435 is coupled and the meshing portion 432.

In some implementations, the driver 400 is coupled to the driver mounting portion 120 from the rear, the mounting bracket 126 for covering at least a portion of the driver mounting portion 120 is coupled to the driver mounting portion 120 from the front, and the mounting bracket 126, the driver mounting portion 120, and the driver 400 can be penetrated together by the integrated fastening member 1263 to be fastened to each other.

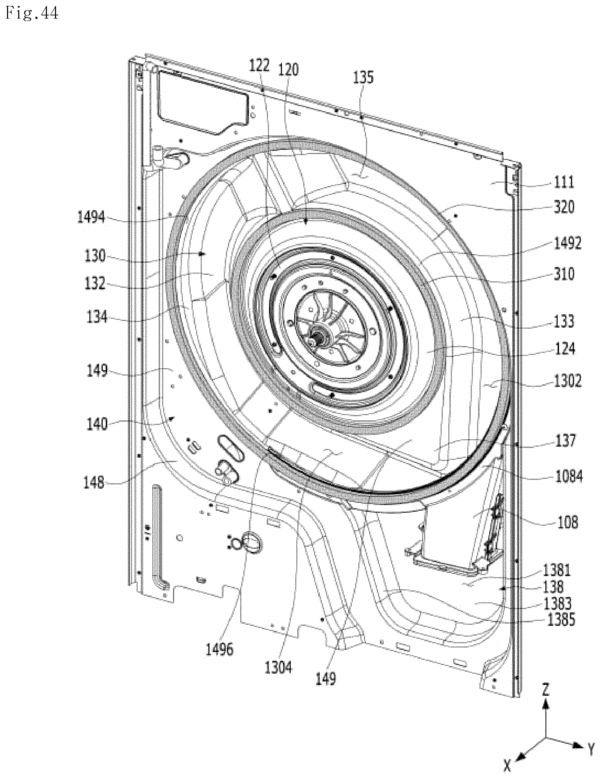

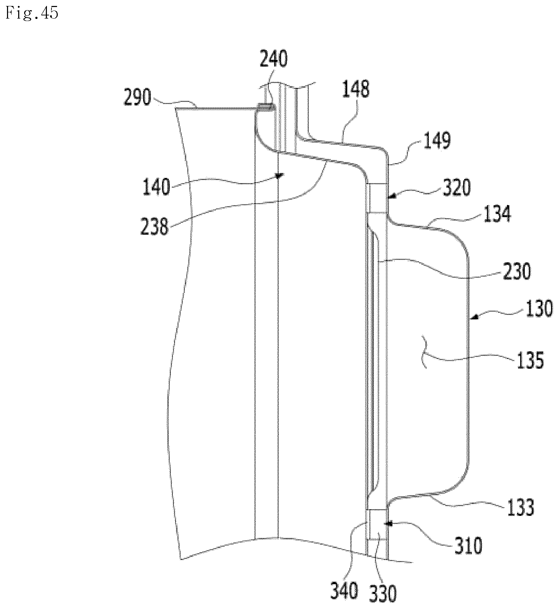

In one example, FIG. 44 shows the rear sealer 300 disposed on the rear plate 110, and FIG. 45 shows a cross-section of the rear sealer 300.

Referring to FIGS. 44 and 45, the laundry treating apparatus 10 can include the rear sealer 300. The rear sealer 300 can be positioned between the rear plate 110 and the drum rear surface 210, can extend along the circumferential direction of the air flow portion 130, and can suppress or block the air of the air flow portion 130 from leaking out of the air passage 230.

The rear sealer 300 can be formed in an annular shape to surround the circumference of the air flow portion 130. The air flow portion 130 can be formed in an annular shape surrounding the driver mounting portion 120, and the rear sealer 300 can include a plurality of rear sealers surrounding the inner circumference and the outer circumference of the air flow portion 130, respectively.

As described above, in some implementations, the front surface 131 of the air flow portion 130 can be directly opened to allow the air to flow out, and the air passage 230 of the drum rear surface 210 can directly shield or cover the front surface 131 of the air flow portion 130.

In some implementations, the laundry treating apparatus 10 can have the rear sealer 300 that blocks the air leakage between the rear plate 110 and the drum rear surface 210, so that the air of the air flow portion 130 can completely flow into the air passage 230, and the closed space can be defined between the flow space 135 and the air passage surface 239.

In some implementations, the rear sealer 300 can include the outer sealer 320 and the inner sealer 310. The outer sealer 320 can be formed in an annular shape to surround the outer circumference of the air flow portion 130, and the inner sealer 310 can be formed in an annular shape to surround the inner circumference of the air flow portion 130.

The outer sealer 320 can be formed with a larger diameter than the inner sealer 310 to block or suppress the air leakage from the outer circumference of the air flow portion 130 to the outside of the air passage 230. The inner sealer 310 can block or suppress the air leakage from the inner circumference of the air flow portion 130 to the outside of the air passage 230.

The air leakage to the outside of the air flow portion 130 may lead to a loss of the flow rate of air supplied into the drum 200, which may reduce the drying efficiency of the laundry. The leakage of air into the air flow portion 130 is disadvantageous because it may increase the temperature of the driver 400 side along with the loss of the flow rate of air.

Accordingly, in some implementations, the outer sealer 320 and the inner sealer 310 can be respectively disposed on the inner circumference and the outer circumference of the air flow portion 130 with the open front surface 131, thereby effectively securing a sealing property of the air flow portion 130.

In some implementations, as described above, the drum 200 can include the drum circumferential surface 290 surrounding the interior of the drum 200 from the front of the drum rear surface 210, and the drum rear surface 210 can have the circumference connecting portion 240 connected to the drum circumferential surface 290 on a rim thereof.

The air passage 230 can include the passage outer circumferential surface 238 extending rearwardly from the circumference connecting portion 240 and inserted into the rear protrusion 140 and extending along the circumference of the air passage 230, and the air passage surface 239 located at the rear of the circumference connecting portion 240 and connected to the passage outer circumferential surface 238, and facing the open front surface 131 of the air flow portion 130.

In some implementations, the air passage 230 can include the aforementioned ventilation portion 232, and the rear sealer 300 can be spaced apart from the ventilation portion 232 and be in contact with the air passage surface 239.

In some implementations, the ventilation portion 232 of the air passage 230 can include the plurality of ventilation holes 234, and an area of the ventilation portion 232 in the air passage 230 can correspond to a flow area of air.

When the rear sealer 300 is positioned in front of the ventilation portion 232, it may be disadvantageous because the flow area of air in the air passage 230 is reduced, and edges or the like of the ventilation holes 234 of the ventilation portion 232 may damage the rear sealer 300.

Furthermore, as described above, the ventilation portion 232 may be formed to protrude from the interior of the open front surface 131 of the air flow portion 130 toward the flow space 135. Accordingly, when the rear sealer 300 comes into contact with the ventilation portion 232 to seal the air flow portion 130, it is disadvantageous because it is necessary to implement a sealing structure corresponding to a protruding shape of the ventilation portion 232.

Furthermore, by the rotation of the drum rear surface 210, the ventilation portion 232 also rotates on the front surface 131 of the air flow portion 130. Therefore, when the rear sealer 300 comes into contact with the ventilation portion 232, not only the rotation of the ventilation portion 232 may be hindered, but also the damage to the rear sealer 300 may be caused.

Accordingly, in some implementations, the rear sealer 300 can seal a space between the air flow portion 130 and the air passage 230 in a state of being spaced apart from the ventilation portion 232. Specifically, the rear sealer 300 can be disposed on the rearwardly protruding surface 149 of the rear protrusion 140 and come into contact with the air passage surface 239 of the air passage 230, thereby stably sealing the space between the air flow portion 130 and the air passage 230 without inhibiting the rotation of the air passage 230.

In some implementations, the rear sealer 300 can be disposed inside the rear protrusion 140 to prevent the air flowing out from the air flow portion 130 from leaking out of the air passage 230.

When the rear sealer 300 is disposed inwardly of the air flow portion 130, for example, on the flow outer circumferential surface 134 or the flow inner circumferential surface 133, the area of the front surface 131 of the air flow portion 130 through which the air may flow out can be reduced. Thus, in some implementations, the rear sealer 300 can be positioned on the rearwardly protruding surface 149 adjacent to the air flow portion 130 to effectively seal the air flow portion 130 without reducing the air flow area of the air flow portion 130.

In one example, the rear sealer 300 can be seated on the rearwardly protruding surface 149 from the front of the rearwardly protruding surface 149. The aforementioned seating portion 1492 of the inner sealer 310 and the first seating portion 1494 of the outer sealer 320 can be defined in the rearwardly protruding surface 149 to fix the inner sealer 310 and the outer sealer 320, respectively.

The seating portion 1492 of the inner sealer 310 can be defined in the rearwardly protruding surface 149, and extend along the circumference of the driver mounting portion 120, so that the inner sealer 310 can be seated in the seating portion 1492 from the front.

Specifically, the driver mounting portion 120 can include the aforementioned mounting side surface 124, the air flow portion 130 can include the aforementioned flow inner circumferential surface 133, and the rear protrusion 140 can have the seating portion 1492 of the inner sealer 310 as the mounting side surface 124 and the flow inner circumferential surface 133 are spaced apart from each other.

Referring to FIG. 44, the mounting side surface 124 and the flow inner circumferential surface 133 can be spaced apart from each other along the radial direction of the air flow portion 130. That is, the flow inner circumferential surface 133 has a greater diameter than the mounting side surface 124 and can be disposed outwardly of the mounting side surface 124.

A portion of the rearwardly protruding surface 149 can be positioned between the flow inner circumferential surface 133 and the mounting side surface 124. That is, the rearwardly protruding surface 149 can be formed in a stepped shape between the flow inner circumferential surface 133 and the mounting side surface 124.

The seating portion 1492 of the inner sealer 310 can be positioned in the rearwardly protruding surface 149 between the flow inner circumferential surface 133 and the mounting side surface 124. Between the flow inner circumferential surface 133 and the mounting side surface 124, a plane parallel to the rear reference surface 111 can be formed as a portion of the rearwardly protruding surface 149, and the seating portion 1492 of the inner sealer 310 can be defined, so that the inner sealer 310 can be stably fixed.

In some implementations, the flow inner circumferential surface 133 can include the inflow guide 137 described above, and the inner sealer 310 and the seating portion 1492 of the inner sealer 310 can extend between the driver mounting portion 120 and the inflow guide 137.

As described above, the inflow guide 137 can be formed in a shape protruding from the flow inner circumferential surface 133 of the air flow portion 130, and the front surface of the inflow guide 137 can correspond to a portion of the rearwardly protruding surface 149.

The seating portion 1492 of the inner sealer 310 can be defined in the rearwardly protruding surface 149, and can extend between the driver mounting portion 120 and the inflow guide 137 because of the structural relationship. The inner sealer 310 can be formed in a shape corresponding to a cross-sectional shape of the driver mounting portion 120 to surround the driver mounting portion 120.

In some implementations, the first seating portion 1494 of the outer sealer 320 described above can be defined in the rearwardly protruding surface 149, and extends along the outer circumference of the air flow portion 130, so that the outer sealer 320 can be seated in the first seating portion 1494 from the front.

In addition, the fan duct 108 of the air supply 106 can include the second seating portion 1496 of the outer sealer 320 described above. The second seating portion 1496 of the outer sealer 320 can surround the outer circumference of the flow space 135 together with the first seating portion 1494 of the outer sealer 320, and the outer sealer 320 can be seated into the second seating portion 1496 from the front.

In some implementations, the rear sealer 300 can include a sealer body 330 and a drum contact portion 340, as depicted in FIG. 45. The sealer body 330 can be seated on the rear plate 110 from the front of the rear plate 110, and the drum contact portion 340 can be disposed on the sealer body 330 to be in contact with the drum rear surface 210.

The sealer body 330 can form a body of the rear sealer 300 and can be coupled to the seating portion 1492 of the inner sealer 310, the first seating portion 1494 of the outer sealer 320, or the second seating portion 1496 of the outer sealer 320 described above. A coupling scheme of the sealer body 330 can vary.

The drum contact portion 340 can be disposed on the sealer body 330 to be in contact with the drum rear surface 210. That is, the drum contact portion 340 can be disposed on one surface of the sealer body 330 facing the air passage 230, and can be in contact with the air passage surface 239 of the air passage 230.

The rear sealer 300 can be constructed such that the sealer body 330 is seated on the rearwardly protruding surface 149 and the drum contact portion 340 is in contact with the air passage surface 239 to block the air leakage between the rearwardly protruding surface 149 and the air passage surface 239.

In some implementations, the sealer body 330 can have elasticity and can be pressed toward the rear plate 110 by the drum rear surface 210. The drum contact portion 340 can be made of a material having a friction coefficient lower than that of the sealer body 330 with respect to the drum rear surface 210.

For example, the sealer body 330 can be made of a rubber material and can be pressed rearwards by the drum rear surface 210, and the drum contact portion 340 can be made of a felt material and can be in contact with the drum rear surface 210.

Specifically, the sealer body 330 can be made of an elastic material such as rubber or the like. The sealer body 330 can be in a compressed state between the air passage surface 239 and the rearwardly protruding surface 149 when necessary, and a sealing effect can be improved by a restoring force of the sealer body 330.

Because the drum contact portion 340 is in contact with the rotating air passage surface 239, the drum contact portion 340 can be made of a material having a low coefficient of friction, such as the felt material or the like. Accordingly, the drum contact portion 340 can maximally suppress or block the air leakage while allowing the rotation of the air passage surface 239.

In some implementations, the shape of the rear sealer 300 can vary based on needs. FIG. 45 shows that the sealer body 330 protrudes frontwards from the rear plate 110, and the drum contact portion 340 is disposed on the front surface facing the drum rear surface 210.

Referring to FIG. 45, the sealer body 330 can be formed in a ring shape having a rectangular cross-section, and the drum contact portion 340 can be disposed on the front surface of the sealer body 330. The drum contact portion 340 can be coupled to the sealer body 330 through adhesive means such as an adhesive or a tape, or can be integrally formed with the sealer body 330 through a process technique such as extrusion molding.

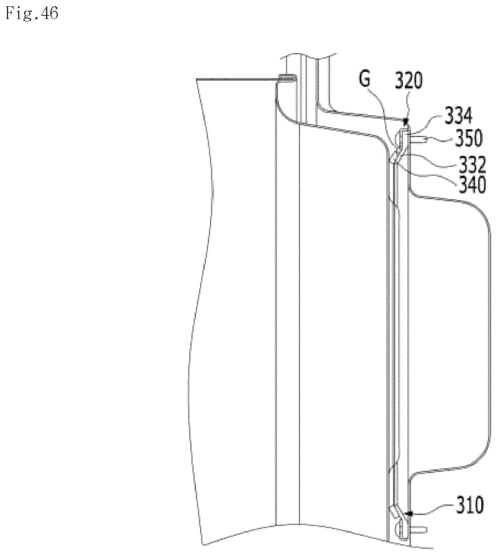

FIGS. 46 to 48 show the rear sealer 300 including an inclined body 332. In some implementations, the sealer body 330 can include a fixed body 334 and the inclined body 332.

The fixed body 334 can be fixed to the rear plate 110, and the inclined body 332 can extend in an inclined manner from the rear plate 110 toward the drum rear surface 210, and can be pressed rearwards by the drum rear surface 210. The drum contact portion 340 can be disposed on one surface of the inclined body 332 facing toward the drum rear surface 210.

The fixed body 334 can be formed in an annular flat plate shape and can be fixed on the rearwardly protruding surface 149. The inclined body 332 can extend in an inclined manner from the fixed body 334. The inclined body 332 can be pressed rearwards by the drum rear surface 210, for example, the air passage surface 239.

In some implementations, when the sealer body 330 includes the inclined body 332, it is advantageous because deformation by pressurization by the air passage surface 239 may become easy and friction against the air passage 230 may be reduced.

In some implementations, a position of the inclined body 332 with respect to the fixed body 334 and an inclined shape of the inclined body 332 can vary. Referring to FIG. 46, in some implementations, the inclined body 332 can extend to be inclined in a direction toward the air flow portion 130.

That is, the inclined body 332 of the outer sealer 320 can extend in an inwardly inclined manner toward the air flow portion 130 as a distance from the fixed body 334 increases. The inclined body 332 of the inner sealer 310 can extend in an outwardly inclined manner toward the air flow portion 130 as a distance from the fixed body 334 increases.

FIG. 46 shows that the inclined body 332 extends in an inclined manner to become closer to the air flow portion 130, the outer sealer 320 has the inclined body 332 on the inner circumference of the fixed body 334, and the inner sealer 310 has the inclined body 332 on the outer circumference of the fixed body 334.

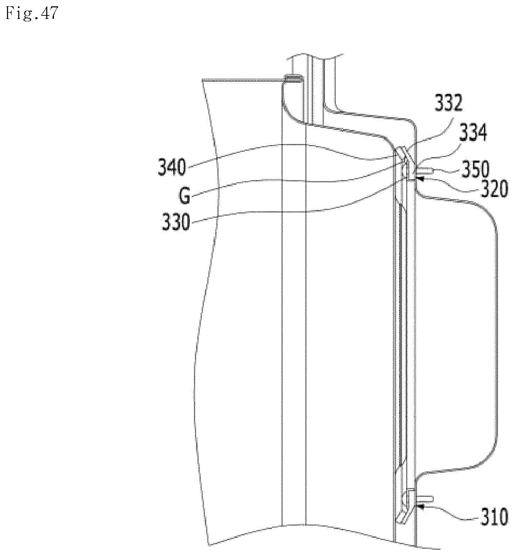

FIG. 47 is a diagram illustrating the inclined body 332 extending to be inclined in a direction away from the air flow portion 130.

Referring to FIG. 47, in some implementations, the inclined body 332 of the outer sealer 320 can be extended from the outer circumference of the fixed body 334, and the inclined body 332 of the inner sealer 310 can extend from the inner circumference of the fixed body 334. That is, the inclined body 332 can extend on a circumference of the fixed body 334 away from the air flow portion 130.

The inclined body 332 can extend to be inclined in a direction away from the air flow portion 130. That is, the inclined body 332 of the outer sealer 320 can extend to be inclined outwardly of the air flow portion 130 as the distance from the fixed body 334 increases, and the inclined body 332 of the inner sealer 310 can extend to be inclined toward the driver mounting portion 120 as the distance from the fixed body 334 increases.

That is, the inclined body 332 of the outer sealer 320 can extend to be inclined outwardly in the radial direction of the air flow portion 130, and the inclined body 332 of the inner sealer 310 can extend to be inclined inwardly in the radial direction of the air flow portion 130.

In some implementations, referring to FIGS. 46 and 47, the inclined body 332 can extend from the fixed body 334 to form an obtuse angle. In some implementations, an angle formed by one surface of the fixed body 334 facing the air passage surface 239 and the inclined body 332 can be defined as an extension angle G of the inclined body 332.

FIGS. 46 and 47 show that the extension angle G of the inclined body 332 corresponds to the obtuse angle. When the extension angle G of the inclined body 332 corresponds to the obtuse angle, the sealer body 330 may be deformed effectively between the air passage surface 239 and the rearwardly protruding surface 149 even with a small pressing force, thereby effectively reducing a frictional force with the air passage surface 239.

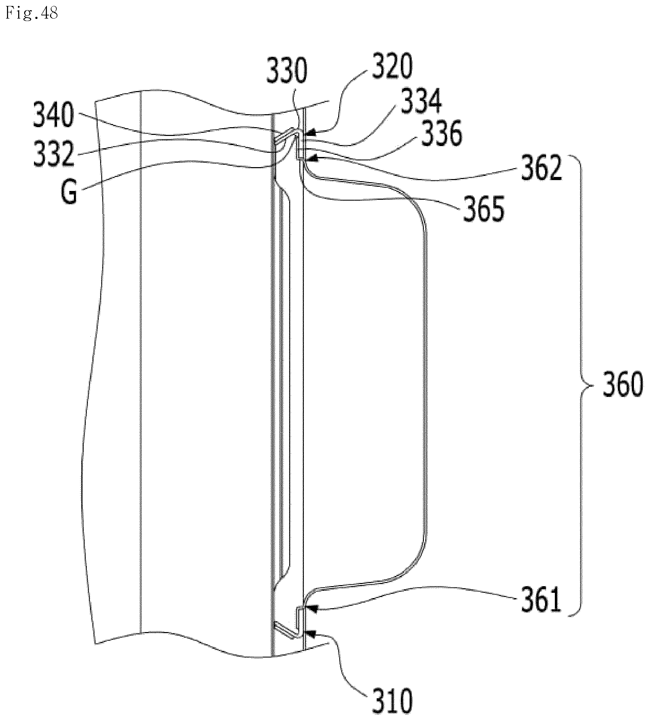

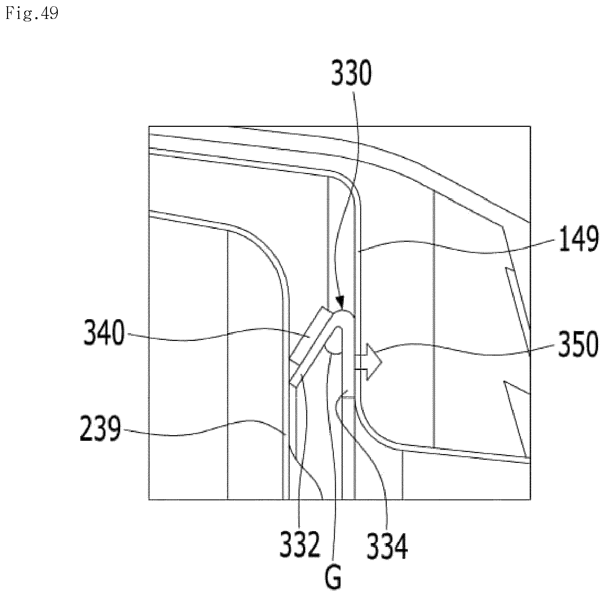

In some implementations, the inclined body 332 can extend to be inclined in a direction toward the air flow portion 130, and the inclined body 332 can extend from the fixed body 334 at an acute angle, as depicted in FIGS. 48 and 49.

The inclined body 332 can extend from a circumference of the fixed body 334 on an opposite side of the air flow portion 130. That is, the inclined body 332 of the outer sealer 320 can extend from the outer circumference of the fixed body 334, and the inclined body 332 of the inner sealer 310 can extend from the inner circumference of the fixed body 334.

The inclined body 332 can extend to be inclined in a direction toward the air flow portion 130. That is, the outer sealer 320 can extend to be inclined toward the air flow portion 130 as the inclined body 332 moves away from the fixed body, and the inner sealer 310 can extend toward the air guide as the inclined body 332 moves away from the fixed body 334.

For example, the inclined body 332 of the outer sealer 320 can extend to be inclined inwardly in the radial direction of the air flow portion 130, and the inclined body 332 of the inner sealer 310 can extend to be inclined outwardly in the radial direction of the air flow portion 130.

That is, the inclined body 332 can extend to be closer to the ventilation portion 232 in a forward direction from the fixed body 334. Accordingly, as the flow pressure of the air in the flow space 135 increases, a pressing force transmitted by the inclined body 332 toward the air passage surface 239 increases, thereby improving airtightness.

That is, when the inclined body 332 extends to be inclined toward the air flow portion 130 as shown in FIGS. 48 to 49, as the air flow pressure of the air flow portion 130 increases, the pressing force between the inclined body 332 and the drum contact portion 340 and the air passage surface 239 increases, thereby improving the airtightness.

In addition, the extension angle G of the inclined body 332 can be the acute angle. When the extension angle G of the inclined body 332 is the acute angle, compared with the obtuse case, a restoring force of the inclined body 332 compressed between the rearwardly protruding surface 149 and the air passage surface 239 may be relatively strong, so that the airtightness can be improved.

In some implementations, referring to FIG. 49, the rear sealer 300 can include a sealer penetrating portion 350, and the sealer penetrating portion 350 can protrude toward the rear plate 110 and penetrate the rear plate 110.

The rear sealer 300 can be seated on the rear plate 110 from the front of the rear plate 110, and the sealer penetrating portion 350 can penetrate the rear plate 110 and be coupled to the rear plate 110.

The sealer penetrating portion 350 can be disposed on one surface of the fixed body 334 facing the rearwardly protruding surface 149 or a sealer seating portion. The sealer penetrating portion 350 can have a shape protruding from the fixed body 334 toward the rearwardly protruding surface 149.

The sealer penetrating portion 350 can be separately manufactured and coupled to the fixed body 334 or integrally formed with the fixed body 334. Each of the seating portion 1492 of the inner sealer 310, the first seating portion 1494 of the outer sealer 320, and the second seating portion 1496 of the outer sealer 320 can have an opening penetrated by the sealer penetrating portion 350. The sealer penetrating portion 350 has a hook formed at an end thereof to be stably fixed and supported on the rearwardly protruding surface 149.

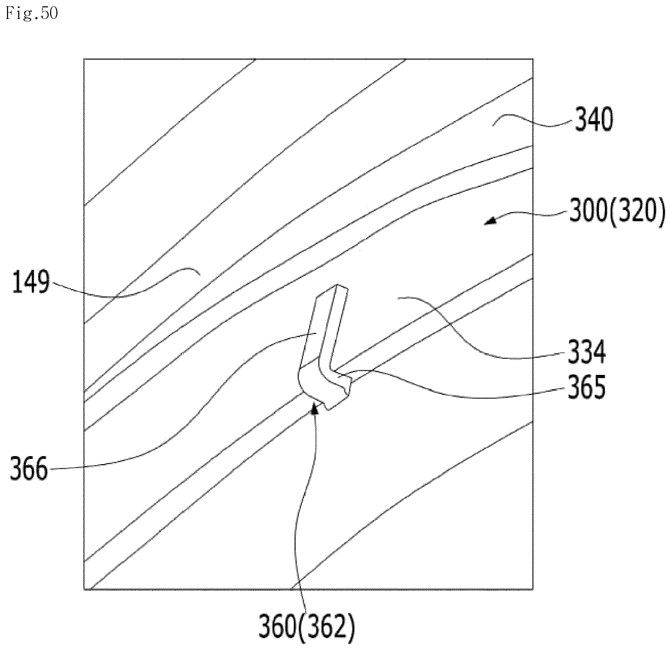

In one example, FIG. 48 shows a sealer fixing portion 360, and FIG. 50 shows an outer sealer fixing portion 362 to which the outer sealer 320 is fixed.

Referring to FIGS. 48 and 50, the laundry treating apparatus 10 can include the sealer fixing portion 360 protruding from the rear plate 110 toward the drum rear surface 210 and with which the rear sealer 300 is inserted and fixed in the radial direction of the air flow portion 130.

The sealer fixing portion 360 can be disposed on the front surface of the rear plate 110. The sealer fixing portion 360 can protrude from the rear plate 110, for example, the rearwardly protruding surface 149 toward the drum rear surface 210. The rear sealer 300 can be fixedly coupled to the sealer fixing portion 360.

The rear sealer 300 can be inserted into and fixed to the sealer fixing portion 360 along the radial direction of the air flow portion 130. That is, the sealer fixing portion 360 can include a groove that is opened in the radial direction of the air flow portion 130, and the rear sealer 300 can be inserted into the groove.

In some implementations, the sealer fixing portion 360 can include a protruding extension 365 and a fixed extension 366. The protruding extension 365 can extend frontwards from the rear plate 110.

The fixed extension 366 can extend along the radial direction of the air flow portion 130 from the protruding extension 365, and the rear sealer 300 can be inserted and fixed between the fixed extension 366 and the rear plate 110.

The protruding extension 365 can extend so as to protrude frontwards from the front surface of the rear plate 110. For example, the protruding extension 365 can extend from the rearwardly protruding surface 149 toward the air passage surface 239.

The fixed extension 366 can extend from the protruding extension 365 and can extend in the radial direction of the air flow portion 130. The fixed extension 366 extends from the protruding extension 365. Thus, a separation space can be defined between the fixed extension 366 and the rearwardly protruding surface 149, and the fixed body 334 of the rear sealer 300 can be inserted into the separation space.

The sealer body 330 can face the protruding extension 365 as one of the inner circumference and the outer circumference thereof with respect to the center of the air flow portion 130 is inserted into the sealer fixing portion 360, and the inclined body 332 can extend from the other.

That is, when the inner circumference of the fixed body 334 faces the protruding extension 365, the inclined body 332 can extend from the outer circumference. When the outer circumference of the fixed body 334 faces the protruding extension 365, the inclined body 332 can extend from the inner circumference.

Accordingly, the rear sealer 300 can be stably fixed on the rear plate 110 through the sealer fixing portion 360 of the rear plate 110 even when a separate coupling member is not disposed, and at the same time, structural interference between the inclined body 332 and the sealer fixing portion 360 can be prevented.

The sealer fixing portion 360 can include a plurality of sealer fixing portions respectively disposed on the seating portion 1492 of the inner sealer 310, the first seating portion 1494 of the outer sealer 320, and the second seating portion 1496 of the outer sealer 320, and can be formed in an annular shape and disposed on the seating portion 1492 of the inner sealer 310, the first seating portion 1494 of the outer sealer 320, and the second seating portion 1496 of the outer sealer 320.

FIG. 50 shows the sealer fixing portion 360 including the plurality of sealer fixing portions spaced apart from each other along the seating portion of the outer sealer 320.

In some implementations, the sealer fixing portion 360 can be inserted in a direction in which the rear sealer 300 approaches the air flow portion 130 along the radial direction of the air flow portion 130. That is, the fixed extension 366 of the sealer fixing portion 360 can extend from the protruding extension 365 in a direction away from the air flow portion 130.

For example, in some implementations, the sealer fixing portion 360 can include the outer sealer fixing portion 362 and an inner sealer fixing portion 361. The outer sealer fixing portion 362 can be disposed on the outer circumference of the air flow portion 130 to fix the outer sealer 320, and the inner sealer fixing portion 361 can be disposed on the inner circumference of the air flow portion 130 to fix the inner sealer 310.

The outer sealer fixing portion 362 can be disposed on the first seating portion 1494 of the outer sealer 320 and/or the second seating portion 1496 of the outer sealer 320, and the inner sealer fixing portion 361 can be disposed on the seating portion 1492 of the inner sealer 310.

The fixed extension 366 of the outer sealer fixing portion 362 can extend outwardly in the radial direction of the air flow portion 130 from the protruding extension 365, and the fixed extension 366 of the inner sealer fixing portion 361 can extend inwardly in the radial direction of the air flow portion 130 from the protruding extension 365.

Therefore, based on the center of the air flow portion 130, the outer sealer 320 can be inserted into the outer sealer fixing portion 362 toward the interior of the air flow portion 130 outwardly of the outer sealer fixing portion 362. The inner circumference of the outer sealer 320 can be supported by the protruding extension 365, and the inclined body 332 can extend from the outer circumference of the outer sealer 320.

The inner sealer 310 can be inserted into the inner sealer fixing portion 361 toward the exterior of the air flow portion 130 inwardly of the inner sealer fixing portion 361. The outer circumference of the inner sealer 310 can be supported by the protruding extension 365, and the inclined body 332 can extend from the inner circumference of the inner sealer 310 facing toward the driver mounting portion 120.

As the fixed extension 366 of the outer sealer fixing portion 362 extends outwardly from the protruding extension 365 and the fixed extension 366 of the inner sealer fixing portion 361 extends inwardly from the protruding extension 365, in some implementations, the sealer body 330 extending to be inclined toward the air flow portion 130 while the extension angle G of the inclined body 332 is the acute angle can be implemented.

In some implementations, as described above, the laundry treating apparatus 10 can include an inner sealer 310 seated on the rear plate 110 from the front of the rear plate 110, and extending along the circumference of the driver mounting portion 120 to suppress or block the air of the air flow portion 130 from leaking toward the driver mounting portion 120.

In addition, as described above, an outer sealer 320seated on the rear plate 110 from the front of the rear plate 110, and extends along the outer circumference of the flow space 135 to block the air of the air flow portion 130 from leaking to the outside of the air passage 230 can be further included.

## Claims

1. A laundry treating apparatus comprising:
a cabinet (100) including a rear plate (110) at a rear surface;
a drum (200) rotatably disposed inside the cabinet (100) and configured to receive laundry, the drum (200) including a drum rear surface (210) facing the rear plate (110); and
a driver (400) coupled to the rear plate (110) and connected to the drum (200),
wherein the rear plate (110) comprises a driver mounting portion (120) coupled to the driver (400),
wherein the driver mounting portion (120) is coupled to (i) the driver (400) from a rear side of the driver mounting portion (120) and (ii) a mounting bracket (126) to cover at least a portion of the driver mounting portion (120) from a front side of the driver mounting portion, and
wherein the driver (400), the driver mounting portion (120), and the mounting bracket (126) are at least partially stacked to be coupled to each other.

2. The laundry treating apparatus of claim 1, wherein the mounting bracket (126) comprises:
an integrated fastening portion (1261) coupled to the driver mounting portion (120) and the driver (400), and
a mounting fastening portion (1262) coupled to the driver mounting portion (120) without being coupled to the driver (400),
wherein the laundry treating apparatus further comprising:
an integrated fastening member (1263) passing through the integrated fastening portion (1261), the driver mounting portion (120), and the driver (400) to couple the integrated fastening portion, the driver mounting portion, and the driver to each other; and
a mounting fastening member (1264) spaced apart from the driver and passing through the mounting fastening portion (1262) and the driver mounting portion (120) to couple the mounting fastening portion and the driver mounting portion to each other.

3. The laundry treating apparatus of claim 2, wherein a distance between the mounting fastening portion (1262) and a center of the driver mounting portion (120) is greater than a distance between the mounting fastening portion (1262) and the integrated fastening portion (1261).

4. The laundry treating apparatus according to any one of claims 1 to 3, wherein the driver mounting portion (120) protrudes frontward from the rear plate (110) to define a space, and wherein at least a portion of the driver (400) is inserted into the driver mounting portion (120) from a rear side to couple to the driver mounting portion.

5. The laundry treating apparatus according to any one of claims 1 to 4, wherein the drum rear surface (210) comprises a driver connection portion (220) facing the driver mounting portion (120) and connected to the driver,
wherein the driver connection portion (220) protrudes frontward from the drum rear surface (210) such that a space is defined therein, and
wherein at least a portion of the driver mounting portion (120) is inserted into the driver connection portion (220) from a rear side of the driver connection portion.

6. The laundry treating apparatus according to any one of claims 1 to 5, wherein the driver mounting portion (120) comprises:
a mounting side surface (124) extending frontward from the rear plate and extending along a circumference of the driver mounting portion, and
a mounting front surface (122) connected to the mounting side surface from the front side of the driver mounting portion and coupled to the mounting bracket from the front side of the driver mounting portion and coupled to the driver from the rear side of the driver mounting portion.

7. The laundry treating apparatus according to any one of claims 1 to 6, wherein the rear plate (110) comprises a rear protrusion (140) protruding rearward to define a space and configured to receive at least a portion of the drum rear surface (210) inserted from a front side, and
wherein the driver mounting portion (120) protrudes frontward from the rear protrusion (140).

8. The laundry treating apparatus of claim 7, wherein the rear protrusion (140) comprises:
a rear outer circumferential surface (148) extending rearward from the rear plate and extending along a circumference of the rear protrusion, and
a rearwardly protruding surface (149) connected to the rear outer circumferential surface (148) from a rear side of the rear protrusion,
wherein the mounting side surface (124) extends frontward from the rearwardly protruding surface (149), and
wherein the mounting front surface (122) is positioned in front of the rearwardly protruding surface (149).

9. The laundry treating apparatus according to any one of claims 1 to 8, wherein the driver mounting portion (120) further comprises a mounting reinforcement portion (1282) protruding rearward from the driver mounting portion to define a space and extending along a circumferential direction of the driver mounting portion, and
wherein the mounting bracket (126) further comprises a mounting guide (1266) protruding toward the mounting reinforcement portion (1282), having a shape corresponding to the mounting reinforcement portion, and inserted into the mounting reinforcement portion from a front side of the mounting reinforcement portion.

10. The laundry treating apparatus of claim 9, wherein each of the mounting reinforcement portion (1282) and the mounting guide (1266) extends in a shape of an arc with a first end and a second end spaced apart from each other.

11. The laundry treating apparatus of claim 9 or 10, wherein the driver mounting portion (120) includes a power port (404) connected to the driver in a spaced region (1285) between the first end and the second end of the mounting reinforcement portion (1282).

12. The laundry treating apparatus according to any one of claims 9 to 11, wherein the mounting bracket (126) further comprises a bracket reinforcement portion (1268) protruding frontward from the mounting bracket and extending along a circumferential direction of the mounting bracket.

13. The laundry treating apparatus of claim 12, wherein the mounting reinforcement portion (1282) comprises a first mounting reinforcement portion (1283) and a second mounting reinforcement portion (1284) having different diameters and spaced apart from each other along a radial direction of the driver mounting portion (120),
wherein the mounting guide (1266) faces the first mounting reinforcement portion (1283) and is inserted into the first mounting reinforcement portion, and
wherein the bracket reinforcement portion (1268) faces the second mounting reinforcement portion (1284) to define a space between the bracket reinforcement portion and the second mounting reinforcement portion.

14. The laundry treating apparatus of claim 12 or 13, wherein the mounting bracket comprises an integrated fastening portion (1261) coupled to the driver mounting portion (120) and the driver (400),
wherein the integrated fastening portion (1261) is positioned inwardly of the bracket reinforcement portion (1268) with respect to a radial direction of the mounting bracket,
wherein the mounting bracket (1266) comprises a mounting fastening portion (1262) coupled to the driver mounting portion without being coupled to the driver, and
wherein the mounting fastening portion (1262) is positioned outwardly of the bracket reinforcement portion (1268) with respect to the radial direction of the mounting bracket.

15. The laundry treating apparatus of claim 14, wherein the mounting guide (1266) is disposed outwardly of the bracket reinforcement portion (1268), and
wherein the mounting fastening portion (1262) is positioned inwardly of the mounting guide (1266).
